(19) Europäisches Patentamt
European Patent Office
Office européen des brevets

(11) EP 4 601 380 A1

(12) # EUROPEAN PATENT APPLICATION
published in accordance with Art. 153(4) EPC

(43) Date of publication:
**13.08.2025 Bulletin 2025/33**

(21) Application number: **23874671.3**

(22) Date of filing: **22.09.2023**

(51) International Patent Classification (IPC):
***H04W 72/0457*** *(2023.01)* ***H04W 8/24*** *(2009.01)*
***H04W 16/28*** *(2009.01)* ***H04W 72/0446*** *(2023.01)*

(52) Cooperative Patent Classification (CPC):
**H04W 8/24; H04W 16/28; H04W 72/0446; H04W 72/0457**

(86) International application number:
**PCT/JP2023/034392**

(87) International publication number:
**WO 2024/075542 (11.04.2024 Gazette 2024/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.10.2022 JP 2022159581**

(71) Applicant: **Sony Group Corporation**
**Tokyo 108-0075 (JP)**

(72) Inventors:
- **NAKAYAMA, Takashi**
  **Tokyo 108-0075 (JP)**
- **OTSUKI, Hiroto**
  **Tokyo 108-0075 (JP)**

(74) Representative: **D Young & Co LLP**
**3 Noble Street**
**London EC2V 7BQ (GB)**

(54) **TERMINAL DEVICE, BASE STATION DEVICE, AND COMMUNICATION METHOD**

(57) A terminal device of the present disclosure includes a wireless transceiver and a processor that transmits and receives a signal via the wireless transceiver. The processor transmits UE capability information including a capability indicating a period of a switching gap of dynamic uplink (UL) transmission switching across three or more bands. The processor receives setting information regarding the dynamic UL transmission switching. The processor performs the dynamic UL transmission switching on the basis of the setting information. The capability is set for each of band groups including three or more bands. When the processor performs the dynamic UL transmission switching, the processor does not perform UL transmission on any carrier in the period indicated by the capability.

FIG.11

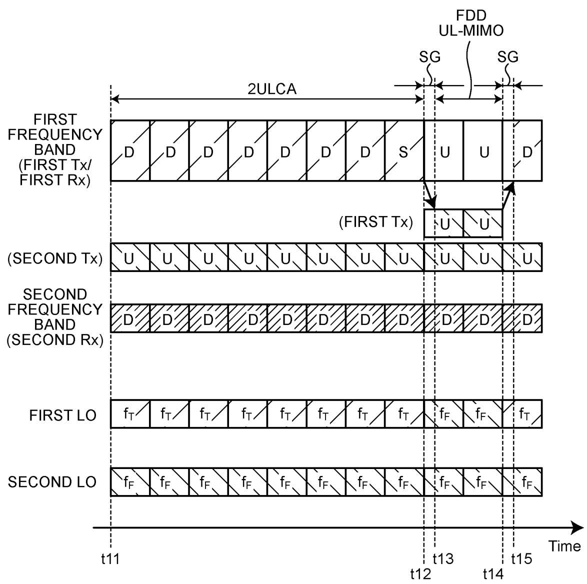


EP 4 601 380 A1

## Description

Field

The present disclosure relates to a terminal device, a base station device, and a communication method.

Background

In the 3rd Generation Partnership Project (3GPP (registered trademark)) Rels. 16 and 17, uplink (UL) Tx switching has newly been introduced. The UL Tx switching is a function of switching between inter-band carrier aggregation (CA) and UL multiple-input and multiple-output (MIMO) in a terminal device capable of transmission through two ports. Here, inter-band CA is carrier aggregation using a time division duplex (TDD) band and a frequency division duplex (FDD) band. In addition, UL MIMO is performed in one band.

In 3GPP Rel. 18, a discussion has been started to extend two (band pair) set bands in which the UL Tx switching specified in Rels. 16 and 17 described above is assumed to three or four bands (multi-band). By extending to the multi-band, it is possible to increase opportunities of performing UL transmission in the real field environment more than ever, and thus, it is expected to further improve the UL throughput.

Citation List

Non-Patent Literature

Non Patent Literature 1: "Draft Report of 3GPP TSG RAN WG1 #110 v0.2.0," Toulouse, France, 22nd to 26th August, 2022, [Online], [searched on September 28, 2022], Internet <https://www.3gpp.org/ftp/tsg_ran/WG1_RL1/TSGR1_110/Report/ Draft_Minutes_report_RAN1%23110_v020.zip>

Summary

Technical Problem

How UL Tx switching across three or more bands is performed is not clear at present. Therefore, a mechanism for performing the UL Tx switching across three or more bands is required.

Therefore, the present disclosure provides a mechanism capable of performing UL Tx switching across three or more bands.

Note that the above problem or object is merely one of a plurality of problems or objects that can be solved or achieved by a plurality of embodiments disclosed in the present specification.

Solution to Problem

A terminal device of the present disclosure includes a wireless transceiver and a processor that transmits and receives a signal via the wireless transceiver. The processor transmits UE capability information including a capability indicating a period of a switching gap of dynamic UL transmission switching across three or more bands. The processor receives setting information regarding the dynamic UL transmission switching. The processor performs the dynamic UL transmission switching on the basis of the setting information. The capability is set for each of band groups including three or more bands. When the processor performs the dynamic UL transmission switching, the processor does not perform UL transmission on any carrier in the period indicated by the capability.

Brief Description of Drawings

FIG. 1 is a diagram for explaining an outline of 2Tx ULCA operation.
FIG. 2 is a diagram for explaining an outline of UL-MIMO operation.
FIG. 3 is a diagram for explaining an outline of Tx switching.
FIG. 4 is a diagram illustrating an example of switching modes of inter-band CA.
FIG. 5 is a diagram illustrating an example of Option 1 of inter-band CA.
FIG. 6 is a diagram illustrating an example of Option 2 of inter-band CA.
FIG. 7 is a diagram illustrating an example of an overall configuration of a communication system according to an embodiment of the present disclosure.

FIG. 8 is a diagram illustrating an example of a configuration of a base station device according to the embodiment of the present disclosure.

FIG. 9 is a diagram illustrating an example of a configuration of a terminal device according to the embodiment of the present disclosure.

FIG. 10 is a diagram illustrating an example of a configuration of a wireless unit according to the embodiment of the present disclosure.

FIG. 11 is a diagram illustrating an example of UL Tx switching according to the embodiment of the present disclosure.

FIG. 12 is a diagram illustrating an example of UL Tx switching according to the embodiment of the present disclosure.

FIG. 13 is a diagram illustrating an example of the configuration of the wireless unit according to the embodiment of the present disclosure.

FIG. 14 is a diagram illustrating another example of UL Tx switching according to the embodiment of the present disclosure.

FIG. 15 is a diagram illustrating another example of UL Tx switching according to the embodiment of the present disclosure.

FIG. 16 is a diagram illustrating another example of the configuration of the wireless unit according to the embodiment of the present disclosure.

FIG. 17 is a sequence diagram illustrating an example of a procedure of setting processing according to the embodiment of the present disclosure.

FIG. 18 is a diagram illustrating an example of a VCO.

FIG. 19 is a diagram illustrating an example of a PLL circuit.

FIG. 20 is a diagram illustrating an example of a low pass filter.

FIG. 21 is a graph illustrating a relationship between a damping factor and a ringing frequency.

FIG. 22 is a graph illustrating a KVCO characteristic of a VCO using a varactor diode.

FIG. 23 is a diagram illustrating an example of a VCO circuit according to the present embodiment.

FIG. 24 is a diagram for explaining a method of reducing power consumption of an amplifier.

FIG. 25 is a diagram illustrating an example of a configuration of an on-chip VCO according to the embodiment of the present disclosure.

FIG. 26 is a graph illustrating relationships between an oscillation frequency of the on-chip VCO and a control voltage of a varactor diode according to the embodiment of the present disclosure.

FIG. 27 is a diagram illustrating an example of a theoretical value of an FcDAC.

FIG. 28 is a table illustrating examples of an "FcDAC" selected by an auto-tune circuit according to the present embodiment.

FIG. 29 is a diagram illustrating an example of band groups in MB-OFDM.

FIG. 30 is a diagram illustrating an example of a band group in MB-OFDM.

FIG. 31 is a block diagram illustrating an example of a local oscillator mounted on an RF chip for MB-OFDM according to the present embodiment.

FIG. 32 is a diagram illustrating an example of a phase jump that occurs in the local oscillator according to the present embodiment.

FIG. 33 is a diagram for explaining an example of a frequency set in a VCO circuit according to the embodiment of the present disclosure.

FIG. 34 is a diagram illustrating an example of inductors according to the embodiment of the present disclosure.

Description of Embodiments

Hereinafter, preferred embodiments of the present disclosure will be described in detail with reference to the accompanying drawings. Note that, in the present specification and the drawings, components having substantially the same functional configurations are denoted by the same reference signs, and redundant description is omitted.

Furthermore, in the present specification and the drawings, similar components in the embodiments may be distinguished by adding different alphabets or numbers after the same reference signs. However, in a case where it is not necessary to particularly distinguish each of similar components, only the same reference sign is given.

One or more embodiments (including examples, modifications, and application examples) described below can each be implemented independently. On the other hand, at least some of the plurality of embodiments described below may be appropriately combined with at least some of the other embodiments. The plurality of embodiments may include novel features different from each other. Therefore, the plurality of embodiments can contribute to solving different objects or problems, and can exhibit different effects.

<<1. Introduction>>

<1.1.2 UL Tx Switching in Bands>

First, an outline of UL Tx switching introduced in 3GPP Rel. 16 and Rel. 17 will be described. A terminal device (user equipment (UE)) that performs UL Tx switching includes two transmission units (2Tx), and transmits a signal from each transmission unit. The terminal device performs the UL Tx switching by switching between 2Tx ULCA operation and UL-MIMO operation.

FIG. 1 is a diagram for explaining an outline of 2Tx ULCA operation. In FIG. 1, one of the transmission units of the terminal device performs transmission in an FDD band, and the other transmission unit performs transmission in a TDD band.

In the FDD band, transmission and reception are performed by frequency division. Therefore, signals having different frequencies can be simultaneously transmitted and received in the same period (for example, the same slot).

In the TDD band, transmission and reception are performed by time division. Therefore, downlink (DL) reception is performed in a predetermined slot (or symbol), and uplink (UL) transmission is performed in a slot (or symbol) in which downlink reception is not performed. As described above, in the TDD band, signals can be transmitted and received at the same frequency in different slots (or symbols). Hereinafter, a "slot" may be read as a "symbol".

FIG. 2 is a diagram for explaining an outline of UL-MIMO operation. In FIG. 2, both transmission units of the terminal device perform 2*2 UL-MIMO operation in the TDD band. That is, both transmission units of the terminal device simultaneously transmit signals on the same carrier.

In the example of FIG. 2, the terminal device does not perform UL transmission in the FDD band, and performs UL transmission using MIMO in the TDD band.

The terminal device switches between 2Tx ULCA operation in FIG. 1 and UL-MIMO operation in FIG. 2 according to an instruction from a base station device.

In a case where the terminal device supports 2Tx ULCA operation and UL-MIMO operation, the terminal device can implement UL Tx switching without adding new hardware.

Furthermore, in the above-described example, the terminal device switches between 2Tx ULCA operation and UL-MIMO operation for each slot, for example, but the terminal device may switch between 2Tx ULCA operation and UL-MIMO operation in a slot.

FIG. 3 is a diagram for explaining an outline of UL Tx switching.

In the example of FIG. 3, the transmission unit that has performed UL transmission in the FDD band starts UL transmission in the TDD band at the timing when the UL transmission is performed in the TDD band. In addition, this transmission unit returns to the UL transmission in the FDD band at the timing when the UL transmission is ended and DL transmission is started in the TDD band.

As described above, the terminal device may perform UL-MIMO operation at the time of UL transmission in the TDD band and perform carrier aggregation (inter-band CA) at the time of DL reception. As described above, the transmission units of the terminal device switch (switch) between UL transmission in the two bands, which are the FDD band and the TDD band, so that the throughput of the UL transmission can be improved.

As described above, the UL Tx switching is a mechanism for maximizing the efficiency of using the UL resources in relation to UE capability.

However, since the terminal device includes the plurality of transmission units, in other words, a plurality of antennas, antenna design is complex. In addition, the transmission power of the terminal device is set low. Due to these two limitations and the like, the number of transmission units is limited to two in terms of radio frequency (RF) architecture in many terminal devices compliant with 5G New Radio (5G NR).

Therefore, in the dynamic allocation of the UL resources using the multi-band group by the network side, more specifically, in the conventional allocation system in which the pair of bands (two Tx bands) is allocated as UL channels, the total efficiency of using the UL resources decreases.

Here, in the case of intra-band CA in 5G NR, the UL throughput is proportional to the total UL bandwidth in the same band according to Shannon's law. In 3GPP Rel. 16 and Rel. 17, two switching modes of inter-band CA are specified.

FIG. 4 is a diagram illustrating an example of switching modes of inter-band CA.

As illustrated in the left diagram in FIG. 4, in 3GPP Rel. 16 and Rel. 17, the UL Tx switching from the 3.5 GHz band which is an NR TDD band to the 2.1 GHz band which is an FDD band is specified as mode 1. Therefore, in mode 1, UL transmission is performed in the 3.5 GHz band in which the first Tx is in the TDD band, and the UL transmission is performed in the 2.1 GHz band in which the second Tx is in the FDD band.

As illustrated in the right diagram in FIG. 4, in 3GPP Rel. 16 and Rel. 17, the UL Tx switching from the 2.1 GHz band which is the NR FDD band to the 3.5 GHz band which is the TDD band is defined as mode 2. Thus, in mode 2, UL transmission is performed in the 3.5 GHz band in which both the first and second Txs are in the TDD band.

A terminal device having two Txs performs UL Tx switching by switching between mode 1 and mode 2.

Note that, in 2TxULCA in inter-band CA in 5G NR, dual stream transmission in a component carrier (CC) of each band cannot be performed in the UL (UL-MIMO). Therefore, in 2TxULCA in inter-band CA in 5G NR, the UL data rate capacity may degrade.

Here, in 3GPP Rel. 16 and Rel. 17, it is defined that the UL Tx switching is enabled in a case where the terminal device can switch a local frequency of an RF circuit between "mode 1" and "mode 2" described above.

In 3GPP Rel. 16 and Rel. 17, the value of the "UE capability" described above is defined as two option candidates ("Option 1" and "Option 2"). This is because the operation differs for each RF architecture of the terminal device.

FIG. 5 is a diagram illustrating an example of Option 1 of inter-band CA. In Option 1, the first transmission unit performs UL transmission in the 3.5 GHz band which is the NR TDD band (TDD-NR). The second transmission unit performs UL transmission in the 2.1 GHz band, which is the NR FDD band (FDD-NR), and also performs UL transmission in the TDD-NR.

As described above, in Option 1, 1Tx (one transmission) is performed by the second transmission unit in the FDD-NR. In addition, 2Tx (two transmissions) are performed by the first and second transmission units in the TDD-NR. In other words, dual stream transmission (UL-MIMO) in the UL is performed in the TDD-NR.

In Option 1, UL Tx switching from the FDD-NR to the TDD-NR is performed at the time of UL transmission in the TDD-NR. Option 1 of inter-band CA is also referred to as "Switched UL".

FIG. 6 is a diagram illustrating an example of Option 2 of inter-band CA. In Option 2, the first transmission unit performs UL transmission in the 3.5 GHz band which is the NR TDD band (TDD-NR). The second transmission unit performs UL transmission in the 2.1 GHz band which is the NR FDD band (FDD-NR).

As described above, in Option 2, 1Tx (one transmission) is performed in each of the TDD-NR and the FDD-NR. As described above, in Option 2, dual stream transmission (UL-MIMO) in the UL is not performed in the TDD-NR.

In Option 2, UL transmission is simultaneously performed in each of the TDD-NR and the FDD-NR. Option 2 of inter-band CA is also referred to as "Dual UL".

As described above, in Option 2, dual stream (UL-MIMO) operation in the UL is not performed. Therefore, the operation in Option 2 may adversely affect the UL data rate capacity.

For example, the peak data rate at the time of UL of one user in Option 2 may decrease to about 80% as compared with the case of performing UL-MIMO.

Here, the peak data rate in Option 1 is a peak data rate in the UL of one user when the UL data rates in the 2.1 GHz band (bandwidth 20 MHz) and the 3.5 GHz band (bandwidth 100 MHz) are summed in the ULCA of both bands. The data rate of UL-MIMO is a data rate when UL dual stream transmission (UL-MIMO) is performed in the 3.5 GHz band during standalone (SA).

In such a case, the terminal device can improve the UL throughput by selecting Option 1.

On the other hand, in communication on the real field, it is not better to perform UL-MIMO in all cases.

For example, when the terminal device performs Dual UL on the first carrier and the second carrier, the characteristics may be improved by about 8% when the peak throughput in the UL is compared with the data rate of UL-MIMO.

Here, it is assumed that the first carrier is an NR carrier of the TDD band, that is, the first carrier is a carrier having a bandwidth of 50 MHz and a UL slot of 2.5 ms in a TDD frame period. It is assumed that the second carrier is an NR carrier in the FDD band, that is, the second carrier is a carrier having a bandwidth of 20 MHz. The data rate of UL-MIMO is a data rate when UL dual stream transmission (UL-MIMO) is performed in the 3.5 GHz band during standalone (SA).

In such a case, the terminal device can improve the UL throughput by selecting Option 2.

In NR in the FDD band, a "mid-band" or a "low-band" is usually adopted as a frequency to be used such that UL coverage superior to NR in the TDD band can be provided. Therefore, it is very beneficial to provide a 5G NR service using NR in the FDD band in terms of 5G NR coverage.

In order to improve end user experience, it is desirable that the network side allocates an optimal and dynamic UL resource so that an ideal service is provided even in a case where an NR coverage area in TDD is exceeded.

<1.2. Issues>

As one of the topics of Rel. 18 following 3GPP Rel. 16 and Rel. 17, a discussion for "improvement of UL throughput" in FR1 of 5G NR was started.

As described above, "Switched UL" introduced in 3GPP Rel. 16 and Rel. 17 is a new function of 5G NR that combines "2Tx ULCA" of FDD and TDD agreed for FR1 and "2UL-MIMO". In "Switched UL", MIMO transmission is performed in a TDD band having a wide channel bandwidth (CWB) and an L-band having a wide coverage but a narrow bandwidth, so that the UL throughput in FR1 is greatly improved.

Furthermore, it is considered to extend a function of "Switched UL" to further increase the number of band groups available to the terminal device in an actual field environment. By increasing the number of band groups in this manner, it is expected to increase opportunities of performing UL transmission by the terminal device and improve the UL throughput in FR1 of 5G NR.

In this study, a mechanism in which the terminal device enables optimal UL Tx switching in four bands is being studied. In the conventional UL Tx switching, basically, the terminal device can switch between the 2Tx in the 2.6 GHz band and the 2.3 GHz band. On the other hand, in a new study, a discussion is made so that switching between 2Tx can be performed even in four bands including the 4.9 GHz band and the 700 MHz band in addition to the 2.6 GHz band and the 2.3 GHz band.

A base station device defined in 3GPP Rel. 18 has a scheduling function of first allocating a UL resource from a band with a wide band, and dynamically allocating a UL resource to a band with a progressively narrower band when a system capacity is tight. In addition, in the same band, the base station device first allocates a UL resource from a band with a low frequency, and dynamically allocates a UL resource to a band with a progressively higher frequency band when the system capacity is tight.

That is, in 3GPP Rel. 18, the UL resource allocation is a mechanism of dynamically allocating an optimal UL resource at the present time to the terminal device for the available band group in the actual field environment.

Here, in "Switched UL" introduced in 3GPP Rel. 16 and Rel. 17, a switching period in which Txs are switched at the time of switching between inter-band CA and UL-MIMO is specified. The switching period is an interruption period (hereinafter, also referred to as a switching gap (SG)) in which UL transmission is interrupted according to Tx switching. In 3GPP Rel. 16 and Rel. 17, interruption periods of 35 us, 140 us, and 210 us can be set as the UE capability.

On the other hand, for UL Tx switching across three or more bands, which has started to be studied in 3GPP Rel. 18, a specific mechanism of how the UE capability and the type of band switching are associated with each other has not yet been determined.

Therefore, a specific mechanism for performing the UL Tx switching across three or more bands is required.

In addition, it is known that, when optimal dynamic UL Tx switching is performed in three or more bands, an actual throughput gain of the terminal device differs from optimal dynamic allocation of UL resources by the base station device, and depends on a switching period on the terminal device side.

Table 1 is a table comparing simulation evaluation results when UL 2-Tx switching is performed between 2-CC and 4-CC. Here, results of comparing a case where 2Tx UL switching is performed on two CCs with cases where 2Tx UL switching in which switching periods are different is performed on four CCs are indicated.

(Table 1) Simulation results of 2-CC/4-CC UL 2-TX switching

| | Baseline: 2-CC UL 2-TX switching; switching period =35us | Enh1: 4-CC UL 2-TX switching; switching period =140us | Enh2: 4-CC UL 2-TX switching; switching period =210us |
|---|---|---|---|
| Average user T-put(Mbps) | 52.93 | 62.29 | 56.34 |
| T-put gain(%) | - | 17.68% | 6.45% |

As indicated in Tbale 1, when switching is performed on 2-CC using two Txs, the average user throughput is 52.93 Mbps. Note that the switching period at this time is 35 us.

When switching is performed on 4-CC using two Txs in a switching period of 140 us, the average user throughput is 62.29 Mbps. The throughput gain at this time is 17.68 percent. That is, when the switching period is 140 us, the UL Tx switching is performed on 4-CC, so that the average user throughput is improved by 17.68 percent.

When switching is performed on 4-CC using two Txs in a switching period of 210 us, the average user throughput is 56.34 Mbps. The throughput gain at this time is 6.45 percent. That is, when the switching period is 210 us, the UL Tx switching is performed on 4-CC, so that the average user throughput is improved by 6.45 percent.

As described above, even if the number of bands for performing switching is increased, improvement in throughput may become small as the switching period becomes longer.

Therefore, when the UL Tx switching is performed across three or more bands, it is desirable to further shorten the switching period.

<1.3. Outline of Proposed Technology>

As described above, a mechanism for specifically performing dynamic (dynamic) UL Tx switching across three or more bands is required.

Therefore, in the present proposed technology, the UE capability is associated with each group of three or more bands. When the dynamic UL Tx switching is performed in this band group, a period indicated by the associated UE capability is used as the switched gap.

Specifically, a terminal device according to the present proposed technology includes a wireless transceiver and a processor that transmits and receives a signal via the wireless transceiver.

The processor transmits UE capability information including a capability indicating a period (length) of a switched gap (an example of a switching gap) of dynamic UL transmission (Tx) switching across three or more bands. The processor receives setting information regarding dynamic UL Tx switching from, for example, a base station device. The processor performs the dynamic UL Tx switching on the basis of the setting information.

The capability is set for each of band groups including three or more bands. When the dynamic UL Tx switching is performed, the processor does not perform UL transmission on any carrier in the period indicated by the capability.

Accordingly, the terminal device can implement the dynamic UL Tx switching across three or more bands.

<<2. Example of Configuration>>

<2.1. Example of Configuration of Communication System>

FIG. 7 is a diagram illustrating an example of an overall configuration of a communication system 1 according to an embodiment of the present disclosure. As illustrated in FIG. 7, the communication system 1 includes a plurality of base station devices 20 (20A and 20B), a plurality of terminal devices 40 (40A and 40B), a core network 120, and a packet data network (PDN) 130. Note that the number of devices is not limited thereto, and for example, the number of base station devices 20 and the number of terminal devices 40 may be one.

The base station device 20 is a communication device that operates a cell 110 and provides a wireless communication service to one or more terminal devices 40 located inside coverage of the cell 110. The cell 110 is operated according to an arbitrary wireless communication system such as long term evolution (LTE) or NR. The base station device 20 is connected to the core network 120. The core network 120 is connected to the packet data network (PDN) 130 via a gateway device (not illustrated). Furthermore, the base station device 20 operates a beam identifiable by a synchronization signal/PBCH block (SSB), and transmits and receives data to and from one or more terminal devices 40 via one or more beams.

Note that the base station device 20 may include a set of a plurality of physical or logical devices. For example, in the embodiment of the present disclosure, the base station device 20 may be distinguished into a plurality of devices of a baseband unit (BBU) and a radio unit (RU), and may be interpreted as an assembly of the plurality of devices. Furthermore or alternatively, in the embodiment of the present disclosure, the base station device 20 may be either or both of the BBU and the RU. The BBU and the RU may be connected to each other by a predetermined interface (for example, eCPRI). Additionally or alternatively, the RU may be referred to as a remote radio unit (RRU) or Radio DoT (RD). Furthermore or alternatively, the RU may correspond to a gNB-DU described later. Furthermore or alternatively, the BBU may correspond to a gNB-CU described later. Alternatively, the RU may be connected to a gNB-DU described later. Furthermore, the BBU may correspond to a combination of a gNB-CU and a gNB-DU described later. Additionally or alternatively, the RU may be a device integrally formed with an antenna. An antenna (for example, an antenna integrally formed with the RU) included in the base station device 20 may adopt an advanced antenna system and support MIMO (for example, FD-MIMO) or beamforming. In the advanced antenna system, the antenna (for example, an antenna integrally formed with the RU) included in the base station device 20 may include, for example, 64 transmission antenna ports and 64 reception antenna ports.

Furthermore, the plurality of base station devices 20 may be connected to each other. One or more base station devices 20 may be included in a radio access network (RAN). That is, each of the one or more base station devices 20 may be simply referred to as a RAN, a RAN node, an access network (AN), or an AN node. A RAN for LTE is referred to as an enhanced universal terrestrial RAN (EUTRAN). A RAN for NR is referred to as an NGRAN. A RAN for W-CDMA (UMTS) is referred to as a UTRAN. The base station device 20 for LTE is referred to as an evolved node B (eNodeB) or an eNB. That is, the EUTRAN includes one or more eNodeBs (eNBs). Furthermore, the base station device 20 for NR is referred to as a gNodeB or a gNB. That is, the NGRAN includes one or more gNBs. Furthermore, the EUTRAN may include a gNB (en-gNB) connected to a core network (EPC) in an LTE communication system (EPS). Similarly, the NGRAN may include an ng-eNB connected to a core network 5GC in a 5G communications system (5GS). Furthermore or alternatively, when the base station device 20 is an eNB, a gNB, or the like, it may be referred to as 3GPP access. Furthermore or alternatively, when the base station device 20 is a wireless access point (for example, a WiFi (registered trademark) access point), the base station device 20 may be referred to as non-3GPP access. Furthermore or alternatively, the base station device 20 may be an optical extension device called a remote radio head (RRH). Furthermore or alternatively, when the base station device 20 is a gNB, the base station device 20 may be referred to as a combination of the above-described gNB central unit (CU) and gNB distributed unit (DU) or any one of them. The gNB CU hosts a plurality of upper layers (for example, RRC, SDAP, and PDCP) of the access stratum for communication with the UE. On the other hand, the gNB-DU hosts a plurality of lower layers (for example, RLC, MAC, and PHY) of the access stratum. That is, among message information described later, RRC signalling (for example, various SIBs including a MIB and a SIB1, an RRCSetup message, and an RRCReconfiguration message) may be generated by the gNB CU, while downlink control information (DCI) and various physical channels (for example, PDCCH and PBCH) may be generated by the gNB-DU. Alternatively, in the RRC signalling, for example, some of configurations (setting information) such as IE:cellGroupConfig may be generated by the gNB-DU, and the other configurations may be generated by the gNB-CU. These configurations (setting information) may be transmitted and received by an F1 interface described later. The base station device 20 may be configured to be able to communicate with another base station device 20. For example, when the plurality of base station devices 20 are eNBs or a combination of an eNB and an en-gNB, the base station devices 20 may be connected to each other by an X2 interface. Furthermore or alternatively, when the plurality of base station devices 20 are gNBs or a combination of a gn-eNB and a gNB, the devices may be connected to each other by an Xn interface. Furthermore or alternatively, when the plurality of base station devices 20 are a combination of the gNB CU and the gNB DU, the devices may be connected to each other by the above-described F1 interface. A message/information (RRC signalling or the DCI information, the physical channels) described later may be communicated (for example, via X2, Xn, F1 interface) between the plurality of base station devices 20.

Furthermore, as described above, the base station device 20 may be configured to manage a plurality of cells. A cell provided by the base station device 20 is referred to as a serving cell. The serving cell includes a primary cell (PCell) and a secondary cell (SCell). When dual connectivity (for example, EUTRA-EUTRA Dual Connectivity, EUTRA-NR Dual Connectivity (ENDC), EUTRA-NR Dual Connectivity with 5GC, NR-EUTRA Dual Connectivity (NEDC), and NR-NR Dual Connectivity) is provided to UE(for example, the terminal devices 40), a PCell and zero or one or more SCell(s) provided by a master node (MN) are referred to as a master cell group. Furthermore, the serving cell may include a PSCell (primacy secondary cell or primary SCG cell). That is, when the dual connectivity is provided to the UE, a PSCell and zero or one or more SCells provided by a secondary node (SN) are referred to as a secondary cell group (SCG). Unless specially configured (for example, PUCCH on SCell), the physical uplink control channel (PUCCH) is transmitted in the PCell and the PSCell, but is not transmitted in the SCell. In addition, a radio link failure is also detected in the PCell and the PSCell, but is not detected (may not be detected) in the SCell. As described above, since the PCell and the PSCell have a special role in the serving cell(s), they are also referred to as special cells (SpCells). One downlink component carrier and one uplink component carrier may be associated with one cell. In addition, a system bandwidth corresponding to one cell may be divided into a plurality of bandwidth parts. In this case, one or more bandwidth parts (BWPs) may be set in the UE, and one bandwidth part may be used by the UE as an active BWP. Furthermore, wireless resources (for example, a frequency band, a numerology (subcarrier spacing), and a slot configuration (slot configuration)) that can be used by the terminal devices 40 may be different for each cell, each component carrier, or each BWP.

When the core network 120 is an NR core network (5G Core (5GC)), the core network 120 may include an access and mobility management function (AMF), a session management function (SMF), a user plane function (UPF), a policy control function (PCF), and a unified data management (UDM).

Each of the terminal devices 40 is a communication device that wirelessly communicates with the base station device 20 under control by the base station device 20. For example, the terminal device 40 measures a downlink signal from the base station device 20 and reports measurement information indicating the measurement result to the base station device 20. The base station device 20 controls wireless communication with the terminal device 40 on the basis of the reported measurement information. On the other hand, the terminal device 40 can transmit an uplink signal for measurement to the base station device 20. In that case, the base station device 20 measures the uplink signal from the terminal device 40 and controls the wireless communication with the terminal device 40 on the basis of the measurement information.

As described above, the base station devices 20 can transmit and receive information to and from each other using an inter-base station interface. When the core network is a 5GC, the inter-base station interface may be an Xn interface. When the core network is an EPC, the inter-base station interface may be an X2 interface. For example, the base station device 20 transmits, to another adjacent base station device 20, measurement information (for example, a measurement result of a cell managed by the source base station device and a measurement result of a neighboring cell) regarding the terminal device 40 predicted to be handed over. As a result, a stable handover is implemented, and the stability of the wireless communication of the terminal device 40 is secured.

Note that, although not illustrated in FIG. 7, a communication device that provides a wireless communication service operated by another RAT such as Wi-Fi (registered trademark) or MulteFire (registered trademark) other than cellular communication may be present around the communication system 1. The communication device is typically connected to the PDN 130.

<2.2. Example of Configuration of Base Station Device>

FIG. 8 is a diagram illustrating an example of a configuration of the base station device 20 according to the embodiment of the present disclosure. The base station device 20 is a communication device (wireless system) that wirelessly communicates with the terminal device 40. The base station device 20 is a type of information processing device.

The base station device 20 includes a signal processing unit 21, a storage unit 22, a network communication unit 23, and a control unit 24. Note that the configuration illustrated in the drawing is a functional configuration, and a hardware configuration may be different from the functional configuration. Furthermore, the functions of the base station device 20 may be implemented in a distributed manner in a plurality of physically separated devices.

The signal processing unit 21 is a wireless communication interface that wirelessly communicates with other communication devices (for example, the terminal device 40 and another base station device 20). The signal processing unit 21 operates under control by the control unit 24. The signal processing unit 21 may support a plurality of wireless access systems. For example, the signal processing unit 21 may support both NR and LTE. The signal processing unit 21 may support other cellular communication systems such as W-CDMA and cdma2000. Furthermore, the signal processing unit 21 may support a wireless LAN communication system in addition to the cellular communication systems. Of course, the signal processing unit 21 may support only one wireless access system.

The signal processing unit 21 includes a reception processing unit 211, a transmission processing unit 212, and an antenna 413. The signal processing unit 21 may include a plurality of reception processing units 211, a plurality of transmission processing units 212, and a plurality of antennas 413. Note that, when the signal processing unit 21 supports a plurality of wireless access systems, each unit of the signal processing unit 21 can be configured individually for each wireless access system. For example, when the base station device 20 supports NR and LTE, the reception processing unit 211 and the transmission processing unit 212 may be configured individually for NR and LTE.

The reception processing unit 211 processes the uplink signal received via the antenna 413. The reception processing unit 211 includes a wireless reception unit 211a, a demultiplexing unit 211b, a demodulation unit 211c, and a decoding unit 211d.

The wireless reception unit 211a performs downconversion, removal of an unnecessary frequency component, control of an amplification level, quadrature demodulation, conversion to a digital signal, removal of a guard interval, extraction of a frequency domain signal by fast Fourier transform, and the like on the uplink signal. For example, it is assumed that the wireless access system of the base station device 20 is a cellular communication system such as LTE. In this case, the demultiplexing unit 211b separates an uplink channel such as a physical uplink shared channel (PUSCH) or a physical uplink control channel (PUCCH) and an uplink reference signal from a signal output from the wireless reception unit 211a. The demodulation unit 211c demodulates a received signal using a modulation system such as binary phase shift keying (BPSK) or quadrature phase shift keying (QPSK) with respect to a modulation symbol of the uplink channel. The modulation system used by the demodulation unit 211c may be multilevel QAM such as 16 quadrature amplitude modulation (QAM), 64QAM, or 256QAM. The decoding unit 211d performs decoding processing on an encoded bit of the demodulated uplink channel. The decoded uplink data and uplink control information are output to the control unit 24.

The transmission processing unit 212 performs transmission processing on downlink control information and downlink data. The transmission processing unit 212 includes an encoding unit 212a, a modulation unit 212b, a multiplexing unit 212c, and a wireless transmission unit 212d.

The encoding unit 212a encodes downlink control information and downlink data input from the control unit 24 using an encoding system such as block encoding, convolutional encoding, or turbo encoding. Here, the encoding may be performed with a polar code or a low density parity check code (LDPC code). The modulation unit 212b modulates an encoded bit output from the encoding unit 212a by a predetermined modulation system such as BPSK, QPSK, 16QAM, 64QAM, or 256QAM. The multiplexing unit 212c multiplexes a modulation symbol of each channel and a downlink reference signal, and locates the multiplexed result in a predetermined resource element. The wireless transmission unit 212d performs various types of signal processing on a signal from the multiplexing unit 212c. For example, the wireless transmission unit 212d performs processing such as conversion into a time domain by fast Fourier transform, addition of a guard interval, generation of a baseband digital signal, conversion to an analog signal, quadrature modulation, up-conversion, removal of an extra frequency component, and power amplification. A signal generated by the transmission processing unit 212 is transmitted from the antenna 413.

The storage unit 22 is a storage device capable of reading and writing data, such as a DRAM, an SRAM, a flash memory, or a hard disk. The storage unit 22 functions as a storage means of the base station device 20.

The network communication unit 23 is a communication interface for communicating with other devices (for example, another base station device 20). For example, the network communication unit 23 is a local area network (LAN) interface such as a network interface card (NIC). The network communication unit 23 may be a universal serial bus (USB) interface including a USB host controller, a USB port, and the like. Furthermore, the network communication unit 23 may be a wired interface or a wireless interface. The network communication unit 23 functions as a network communication means of the base station device 20. The network communication unit 23 communicates with other devices under control by the control unit 24.

The control unit 24 is a controller that controls each unit of the base station device 20. The control unit 24 is implemented by, for example, a processor such as a central processing unit (CPU) or a micro processing unit (MPU). For example, the control unit 24 is implemented by a processor executing various programs stored in a storage device inside the base station device 20 using a random access memory (RAM) or the like as a work area. Note that the control unit 24 may be implemented by an integrated circuit such as an application specific integrated circuit (ASIC) or a field programmable gate array (FPGA). The CPU, the MPU, the ASIC, and the FPGA can all be regarded as controllers.

<2.3. Example of Configuration of Terminal Device>

FIG. 9 is a diagram illustrating an example of a configuration of the terminal device 40 according to the embodiment of the present disclosure. The terminal device 40 is a communication device (wireless system) that wirelessly communicates with the base station device 20. The terminal device 40 is a type of information processing device.

The terminal device 40 includes a signal processing unit 410, a storage unit 420, an input/output unit 440, and a control unit 450. Note that the configuration illustrated in the drawing is a functional configuration, and a hardware configuration may be different from the functional configuration. Furthermore, the functions of the terminal device 40 may be implemented in a distributed manner in a plurality of physically separated configurations.

The signal processing unit 410 is a wireless communication interface that wirelessly communicates with other communication devices (for example, the base station device 20 and another terminal device 40). The signal processing unit 410 operates under control by the control unit 450. The signal processing unit 410 may support one or more wireless access systems. For example, the signal processing unit 410 supports both NR and LTE. The signal processing unit 410 may support other wireless access systems such as W-CDMA (registered trademark) and cdma2000 (registered trademark).

The signal processing unit 410 includes a reception processing unit 411, a first transmission processing unit 412-1 (corresponding to a first transmission unit), a second transmission processing unit 412-2 (corresponding to a second transmission unit), and an antenna 313. The signal processing unit 410 may include a plurality of reception processing units 411, a plurality of first transmission processing units 412-1, a plurality of second transmission processing units 412-2, and a plurality of antennas 313. Note that, when the signal processing unit 410 supports a plurality of wireless access systems, each unit of the signal processing unit 410 can be configured individually for each wireless access system. For example, the reception processing unit 411 and a transmission processing unit 412 may be configured individually for LTE and NR. The configurations of the reception processing unit 411, the first transmission processing unit 412-1, and the second transmission processing unit 412-2 are similar to those of the reception processing unit 211 and the transmission processing unit 212 of the base station device 20.

Here, the terminal device 40 according to the embodiment of the present disclosure includes the two transmission units (first transmission processing unit 412-1 and second transmission processing unit 412-2) as described above, and performs UL transmission on the same carrier or different carriers.

A case where the terminal device 40 includes all the two processing units (an encoding unit 412a to a wireless transmission unit 412d) that perform the transmission processing is described, but the terminal device 40 may perform a part of the transmission processing by one processing unit.

For example, the signal processing unit 410 of the terminal device 40 may have a configuration including two RF circuits (for example, a part of the wireless transmission unit 412d) for each UL transmission and one processing unit (the other part of the wireless transmission unit 412d, and the encoding unit 412a to a multiplexing unit 412c) other than the two RF circuits.

The terminal device 40 may perform two UL transmissions (2Tx), and the configuration of the signal processing unit 410 is not limited to the example illustrated in FIG. 9. Note that, in the present embodiment, in the transmission processing unit 412 of the signal processing unit 410, when processing units having configurations different for each UL transmission are distinguished, the processing units are also referred to as a first transmission unit and a second transmission unit.

The storage unit 420 is a storage device capable of reading and writing data, such as a DRAM, an SRAM, a flash memory, or a hard disk. The storage unit 420 functions as a storage means of the terminal device 40.

The input/output unit 440 is a user interface for exchanging information with a user. For example, the input/output unit 440 is an operation device for a user to perform various operations, such as a keyboard, a mouse, an operation key, and a touch panel. Alternatively, the input/output unit 440 is a display device such as a liquid crystal display or an organic electroluminescence display (organic EL display). The input/output unit 440 may be an acoustic device such as a speaker or a buzzer. The input/output unit 440 may be a lighting device such as a light emitting diode (LED) lamp. The input/output unit 440 functions as an input/output means (an input means, an output means, an operation means, or a notification means) of the terminal device 40.

The control unit 450 is a controller that controls each unit of the terminal device 40. The control unit 450 is implemented by, for example, a processor such as a CPU or an MPU. For example, the control unit 450 is implemented by a processor executing various programs stored in the storage device inside the terminal device 40 using a RAM or the like as a work area. Note that the control unit 450 may be implemented by an integrated circuit such as an ASIC or an FPGA. The CPU, the MPU, the ASIC, and the FPGA can all be regarded as controllers.

<<3. Dynamic UL Tx switching>>

As described above, in the communication system 1 according to the present embodiment, dynamic UL Tx switching is performed.

<3.1. Example of Configuration of Transmission Unit>

Here, an example of a configuration of a wireless unit that can perform the dynamic UL Tx switching will be described.

FIG. 10 is a diagram illustrating an example of the configuration of the wireless unit according to the embodiment of the present disclosure. The wireless unit according to the present embodiment includes a first wireless unit and a second wireless unit. The first wireless unit includes a first transmission unit 41T, a first reception unit 41R, and a switch 45-1. The second wireless unit includes a second transmission unit 42T, a second reception unit 42R, and a duplexer (DUP) 45-2. The first and second reception units 41R and 42R are, for example, a part of a wireless reception unit 411a of the reception processing unit 411.

The first transmission unit 41T includes a digital to analog converter (DAC) 41-T1, a local oscillator 42-1, a mixer 43-T1, and an amplifier 44-T1. The first reception unit 41R includes an amplifier 41-R1, a mixer 43-R1, and an analog to digital converter (ADC) 44-R1.

The DAC 41-T1 converts a digital first input signal into an analog first input signal. The local oscillator 42-1 generates one of a plurality of local signals having different frequencies f.

The mixer 43-T1 mixes the analog first input signal and the local signal to generate a first transmission signal. The amplifier 44-T1 amplifies the first transmission signal and transmits the amplified first transmission signal from an antenna 413-1.

The amplifier 41-R1 amplifies a first reception signal received by the antenna 413-1. The mixer 43-R1 mixes the first reception signal and the local signal and transmits an analog first output signal. The ADC 44-R1 converts the analog first output signal into a digital first output signal.

The switch 45-1 connects the antenna 413-1 and the first transmission unit 41T at the time of transmission, and connects the antenna 413-1 and the first reception unit 41R at the time of reception. The switch 45-1 is a selection circuit that switches transmission and reception in TDD, that is, selects one of transmission and reception.

As described above, the first transmission unit 41T performs first transmission in which the frequency of the local signal generated by the local oscillator 42-1 is a carrier frequency, and the first reception unit 41R performs first reception in which the frequency of the local signal generated by the local oscillator 42-1 is the carrier frequency. As described above, in TDD, since the transmission and the reception are performed at the same carrier frequency, the first transmission unit 41T and the first reception unit 41R share the local oscillator 42-1.

The second transmission unit 42T includes a DAC circuit 41-T2, a local oscillator 42-T2, a mixer circuit 43-T2, and an amplifier 44-T2. The second reception unit 42R includes an amplifier 41-R2, a local oscillator 42-R2, a mixer 43-R2, and an ADC 44-R2.

The DAC 41-T2 converts a digital second input signal into an analog second input signal. The local oscillator 42-T2 generates one of a plurality of local signals having different frequencies f.

The mixer 43-T2 mixes the analog second input signal and the local signal to generate a second transmission signal. The amplifier 44-T2 amplifies the second transmission signal and transmits the amplified second transmission signal from an antenna 413-2.

The amplifier 41-R2 amplifies a second reception signal received by the antenna 413-2. The local oscillator 42-R2 generates a local signal having a predetermined frequency. The mixer 43-R2 mixes the second reception signal and the local signal and transmits an analog second output signal. The ADC 44-R2 converts the analog second output signal into a digital second output signal.

The duplexer (DUP) 45-2 separates the second transmission signal and the second reception signal. The second transmission signal amplified by the amplifier 44-T2 is transmitted from the antenna 413-2 via the duplexer 45-2. The second reception signal received by the antenna 413-2 is input to the second reception unit 42R via the duplexer 45-2.

As described above, the second transmission unit 42T performs second transmission in which the frequency of the local signal generated by the local oscillator 42-T2 is a carrier frequency, and the second reception unit 42R performs second reception using the local signal generated by the local oscillator 42-R2. The local oscillators 42-T2 and 42-R2 generate local signals having different frequencies. As described above, in FDD, since transmission and reception are performed at different carrier frequencies, the second transmission unit 42T and the second reception unit 42R include the local oscillators 42-T2 and 42-R2, respectively.

For example, in the terminal device 40, the carrier (carrier frequency) used for the first transmission and the carrier used for the second transmission may be the same. That is, in the terminal device 40, the first and second transmissions may be performed on one UL carrier on one band (UL-MIMO).

Alternatively, in the terminal device 40, the carrier used for the first transmission and the carrier used for the second transmission may be different. In this case, the bands of the respective carriers may be the same or different. That is, in the terminal device 40, the first transmission and the second transmission (UL carrier aggregation) using a plurality of carriers can be performed on one or a plurality of bands.

The terminal device 40 may perform UL Tx switching to switch between UL-MIMO and ULCA. The UL Tx switching performed by the terminal device 40 will be described with reference to Examples 1 to 4.

<3.2. First Example>

Here, a case where one transmission unit (for example, the first transmission unit 41T) performs UL Tx switching by switching a frequency between two bands will be described.

FIG. 11 is a diagram illustrating an example of the UL Tx switching according to the embodiment of the present disclosure.

Here, it is assumed that the terminal device 40 performs dynamic UL Tx switching in two bands (a first frequency band and a second frequency band). In addition, it is assumed that the first frequency band is a TDD band and that the second frequency band is an FDD band.

The terminal device 40 performs first transmission (first Tx) or first reception (first Rx) on a first carrier of the first frequency band. The terminal device 40 performs the first transmission using, for example, the first transmission unit 41T.

In the example illustrated in FIG. 11, the first to seventh and eleventh symbols are allocated to DL reception. In addition, the ninth and tenth symbols are allocated to UL transmission.

The terminal device 40 performs second transmission (second Tx) on a second carrier of the second frequency band and performs second reception on a third carrier of the second frequency band. The terminal device 40 performs the second transmission using, for example, the second transmission unit 42T.

The local oscillator 42-T1 (first local oscillator (LO)) generates one of a first local signal having a frequency $f_T$ of the first carrier and a second local signal having a second carrier frequency $f_F$. The local oscillator 42-T2 (second LO) generates a second local signal having the second carrier frequency $f_F$. That is, the terminal device 40 performs the first transmission by switching the frequency to $f_T$ or $f_F$ (2-band 1Tx switching).

In the example illustrated in FIG. 11, the terminal device 40 performs DL reception on the first carrier of the first frequency band from time t11 to time t12. In this period, the first LO generates a local signal having the frequency $f_T$.

In addition, the terminal device 40 performs UL transmission on the second carrier of the second frequency band and DL reception on the third carrier from the time t11 to the time t12. In this period, the second LO generates a local signal having the frequency $f_F$.

The terminal device 40 performs 2ULCA for a period from the time t11 to the time t12.

Here, at the time t12, the terminal device 40 switches the carrier frequency of the first transmission from the frequency $f_T$ to the frequency $f_F$. The terminal device 40 continues the second transmission in the second frequency band and performs the first transmission on the second carrier of the second frequency band at and after time t13 after a switching gap (SG) elapses from the time t12.

At this time, local signals having the frequency $f_F$ are generated in both the first LO and the second LO.

In this way, at and after the time t13, the terminal device 40 performs FDD UL-MIMO.

Next, at time t14, the terminal device 40 switches the carrier frequency of the first transmission from the frequency $f_F$ to the frequency $f_T$. The terminal device 40 continues the second transmission in the second frequency band and performs the first transmission on the first carrier of the first frequency band at and after time t15 after a switching gap (SG) elapses from the time t14.

At this time, the first LO generates a local signal having the frequency $f_T$, and the second LO generates a local signal having the frequency $f_F$.

As described above, the terminal device 40 performs the UL Tx switching between the 2ULCA and the FDD UL-MIMO by switching the frequency used for the first transmission in the two bands.

Note that, in the present embodiment, it does not matter whether or not the terminal device 40 actually transmits a signal in the first and second transmissions. That is, the terminal device 40 only needs to be in a state of being able to transmit a signal of a predetermined carrier in the first and second transmissions, and may or may not actually transmit the signal.

Furthermore, in the present embodiment, it does not matter whether or not the terminal device 40 actually receives a signal in the first and second receptions. That is, the terminal device 40 only needs to be in a state of being able to receive a signal of a predetermined carrier in the first and second receptions, and may or may not actually receive the signal.

<3.3. Second Example>

Next, an example of a case where two transmission units perform UL Tx switching by switching a frequency between four bands will be described.

FIG. 12 is a diagram illustrating an example of UL Tx switching according to the embodiment of the present disclosure.

Here, it is assumed that the terminal device 40 performs dynamic UL Tx switching in four bands (first and third to sixth frequency bands). In addition, it is assumed that all the first and third to sixth frequency bands are TDD bands.

Here, an example of the configuration of the wireless unit in a case where the terminal device 40 performs UL Tx switching in the TDD bands will be described with reference to FIG. 13.

FIG. 13 is a diagram illustrating an example of the configuration of the wireless unit according to the embodiment of the present disclosure. The wireless unit according to the present embodiment includes a first wireless unit and a third wireless unit. The first wireless unit includes a first transmission unit 41T, a first reception unit 41R, and a switch 45-1. The third wireless unit includes a third transmission unit 43T, a third reception unit 43R, and a switch 45-3. The configuration of the first wireless unit is the same as that illustrated in FIG. 10. The third reception unit 43R is, for example, a part of the wireless reception unit 411a of the reception processing unit 411.

The third transmission unit 43T includes a DAC 41-T3, a local oscillator 42-1, a mixer 43-T1, and an amplifier 44-T3. The third reception unit 43R includes an amplifier 41-R3, a mixer 43-R3, and an ADC 44-R3.

The DAC 41-T3 converts a digital third input signal into an analog third input signal. The local oscillator 42-3 generates one of a plurality of local signals having different frequencies f.

The mixer 43-T3 mixes the analog third input signal and the local signal to generate a third transmission signal. The amplifier 44-T3 amplifies the third transmission signal and transmits the amplified third transmission signal from an antenna 413-3.

The amplifier 41-R3 amplifies a third reception signal received by the antenna 413-3. The mixer 43-R3 mixes the third reception signal and the local signal and transmits an analog third output signal. The ADC 44-R3 converts the analog third output signal into a digital third output signal.

The switch 45-3 connects the antenna 413-3 and the third transmission unit 43T at the time of transmission, and connects the antenna 413-3 and the third reception unit 43R at the time of reception. The switch 45-3 is a selection circuit that switches transmission and reception in TDD, that is, selects one of transmission and reception.

As described above, the third transmission unit 43T performs the second transmission in which the frequency of the local signal generated by the local oscillator 42-3 is a carrier frequency, and the third reception unit 43R performs the second reception in which the frequency of the local signal generated by the local oscillator 42-3 is the carrier frequency. As described above, in TDD, since the transmission and the reception are performed at the same carrier frequency, the third transmission unit 43T and the third reception unit 43R share the local oscillator 42-3.

Returning to FIG. 12, the terminal device 40 performs the first and second transmissions in the TDD bands. For example, the terminal device 40 performs the first transmission using the first transmission unit 41T and performs the second transmission using the third transmission unit 43T. Furthermore, the terminal device 40 performs, for example, the first reception using the first reception unit 41R and performs the second reception using the third reception unit 43R.

In the example illustrated in FIG. 12, the first to seventh symbols of the first frequency band are allocated to DL reception, and the ninth and tenth symbols are allocated to UL transmission. The first to fourth, ninth, and tenth symbols of the third frequency band are allocated to DL reception, and the sixth and seventh symbols are allocated to UL transmission. The fourth to seventh symbols of the fourth frequency band are allocated to DL reception, and the first to fourth, ninth, and tenth symbols are allocated to UL transmission. The first, second, and seventh to tenth symbols of the fifth frequency band are allocated to DL reception, and the fourth to sixth symbols are allocated to UL transmission.

Each of the local oscillator 42-T1 (first LO) and the local oscillator 42-T3 generates any one of first and third to fifth local signals having carrier frequencies $f_{T1}$ and $f_{T3}$ to $f_{T5}$ of the first and third to fifth frequency bands. That is, the terminal device 40 performs the first transmission and the second transmission by switching the carrier frequency to one of $f_{T1}$ and $f_{T3}$ to $f_{T5}$ (4-band 2Tx switching).

In the example illustrated in FIG. 12, the terminal device 40 performs the DL reception/UL transmission (first reception/first reception) in the fourth frequency band and performs the DL reception/UL transmission (second reception/second reception) in the fifth frequency band from time t21 to time t22. In this period, the first LO generates a local signal having the frequency $f_{T4}$, and the second LO generates a local signal having the frequency $f_{T5}$.

In this manner, the terminal device 40 performs 2ULCA in the fourth and fifth frequency bands from the time t21 to the time t22.

Here, at the time t22, the terminal device 40 performs the first transmission by switching from the fourth frequency band to the first frequency band. In addition, the terminal device 40 performs the second transmission by switching from the fifth frequency band to the third frequency band.

The terminal device 40 performs the DL reception/UL transmission (first reception/first transmission) in the first frequency band at and after time t23 after a switching gap (SG) elapses from the time t22. In addition, the terminal device 40 performs the DL reception/UL transmission (second reception/second transmission) in the third frequency band at and after the time t23. In this case, the first LO generates a local signal having the frequency $f_{T1}$, and the second LO generates a local signal having the frequency $f_{T3}$.

In this manner, at and after the time t23, the terminal device 40 performs 2ULCA in the first and third frequency bands.

As described above, the terminal device 40 performs the UL Tx switching between 2ULCA by switching the frequencies used for the first and second transmissions in the four bands.

Note that, although the terminal device 40 performs the UL Tx switching between 2ULCA, the terminal device 40 can perform the UL Tx switching between 2ULCA and TDD UL-MIMO. For example, at the time t22, the terminal device 40 may perform the second transmission by switching from the fifth frequency band to the first frequency band. In this case, at and after the time t23, the first and second transmissions are performed in the same frequency band. In this manner, the terminal device 40 can perform UL Tx switching between 2ULCA and TDD UL-MIMO.

<3.3. Third Example>

Next, another example in which the two transmission units perform UL Tx switching by switching a frequency between four bands will be described.

FIG. 14 is a diagram illustrating another example of UL Tx switching according to the embodiment of the present disclosure.

Here, it is assumed that the terminal device 40 performs dynamic UL Tx switching in four bands (first to third and seventh frequency bands). In addition, it is assumed that both the first and third frequency bands are TDD bands, and both the second and seventh frequency bands are FDD bands. In this case, the terminal device 40 includes, for example, the wireless unit illustrated in FIG. 10.

The terminal device 40 performs the first reception/first reception in the TDD bands. For example, the terminal device 40 performs the first transmission using the first transmission unit 41T and performs the first reception using the first reception unit 41R.

In the example illustrated in FIG. 14, the first to seventh and eleventh symbols of the first frequency band are allocated to DL reception, and the ninth and tenth symbols are allocated to UL transmission. The first, second, fourth, fifth, and eleventh symbols of the third frequency band are allocated to DL reception, and the seventh to tenth symbols are allocated to UL transmission.

The terminal device 40 performs the second reception/second reception in the FDD bands. For example, the terminal device 40 performs the first transmission using the second transmission unit 42T and performs the second reception using the second reception unit 42R.

Each of the local oscillator 42-T1 (first LO) and the local oscillator 42-T2 (second LO) generates any one of first to third and seventh local signals having carrier frequencies $f_{T1}$, $f_{T2}$, $f_{T3}$, and $f_{F7}$ of the first to third and seventh frequency bands. That is, the terminal device 40 performs the first transmission and the second transmission by switching the carrier frequency to one of $f_{T1}$, $f_{F2}$, $f_{T3}$, and $f_{F7}$ (4-band 2Tx switching) .

In the example illustrated in FIG. 14, the terminal device 40 performs the DL reception (first reception) in the third frequency band and performs the DL reception/UL transmission (second reception/second reception) in the second frequency band from time t30 to time t31. In this period, the first LO generates a local signal having the frequency $f_{T3}$, and the second LO generates a local signal having the frequency $f_{F2}$.

In this manner, the terminal device 40 performs 2ULCA in the second and third frequency bands from the time t30 to the time t31.

Here, at the time t31, the terminal device 40 performs the second transmission by switching from the second frequency band to the third frequency band.

The terminal device 40 performs the UL transmission (second transmission) in the third frequency band at and after time t32 after a switching gap (SG) elapses from the time t31. In addition, the terminal device 40 continuously performs the UL transmission (first transmission) in the third frequency band at and after the time t31. In this case, both the first LO and the second LO generate local signals having the frequency $f_{T3}$.

In this manner, at and after the time t32, the terminal device 40 performs TDD UL-MIMO in the third frequency band.

Here, at the time t33, the terminal device 40 performs the second transmission by switching from the third frequency band to the second frequency band.

The terminal device 40 performs the UL transmission (second transmission) in the second frequency band at and after time t34 after a switching gap (SG) elapses from the time t33. In addition, the terminal device 40 continuously performs the UL transmission (first transmission) in the third frequency band at and after the time t33. In this case, the first LO generates a local signal having the frequency $f_{T3}$, and the second LO generates a local signal having the frequency $f_{F2}$.

In this manner, at and after the time t34, the terminal device 40 performs 2ULCA in the second and third frequency bands.

Here, at time t35, the terminal device 40 performs the first transmission by switching from the third frequency band to the seventh frequency band. In addition, the terminal device 40 performs the second transmission by switching from the second frequency band to the seventh frequency band.

The terminal device 40 performs the UL transmission (first transmission) in the seventh frequency band at and after time t36 after a switching gap (SG) elapses from the time t35. In this case, both the first LO and the second LO generate local signals having the frequency $f_{F7}$.

In this manner, at and after time t36, the terminal device 40 performs FDD UL-MIMO in the seventh frequency band.

At time t37, the terminal device 40 performs the first transmission and the second transmission by switching from the second frequency band to the first frequency band.

The terminal device 40 performs the UL transmission (first transmission) in the first frequency band at and after time t38 after a switching gap (SG) elapses from the time t37. In this case, both the first LO and the second LO generate local signals having a frequency $f_{D1}$.

In this manner, at and after the time t38, the terminal device 40 performs TDD UL-MIMO in the first frequency band.

Here, at time t39, the terminal device 40 performs the second transmission by switching from the first frequency band to the seventh frequency band.

The terminal device 40 performs the UL transmission (second transmission) in the seventh frequency band at and after time t40 after a switching gap (SG) elapses from the time t39. In addition, the terminal device 40 continuously performs the UL transmission (first transmission) in the first frequency band at and after the time t39. In this case, the first LO generates a local signal having the frequency $f_{T1}$, and the second LO generates a local signal having the frequency $f_{F7}$.

In this manner, at and after the time t40, the terminal device 40 performs 2ULCA in the first and seventh frequency bands.

As described above, the terminal device 40 performs the UL Tx switching between 2ULCA and UL-MIMO by dynamically switching the frequencies used for the first and second transmissions in the four bands.

<3.4. Fourth Example>

In the third example described above, while FDD-MIMO is performed, the second reception can be continuously performed, but the first reception cannot be continuously performed. For example, during a period from the time t36 to the time t37 in FIG. 14, the terminal device 40 performs the second reception in the seventh frequency band, but does not perform the first reception in the first frequency band.

This is because the second transmission unit 42T and the second reception unit 42R include the local oscillators 42-T2 and 42-R2, respectively, whereas the first transmission unit 41T and the first reception unit 41R share the local oscillator 42-1.

Therefore, in the fourth example, an example of the UL Tx switching in which the first and second reception can be continuously performed while FDD-MIMO is performed will be described. Here, in order to simplify the description, a case where the first transmission (1Tx) is switched in two bands will be described as an example.

FIG. 15 is a diagram illustrating another example of the UL Tx switching according to the embodiment of the present disclosure.

Here, it is assumed that the terminal device 40 performs the UL Tx switching in two bands (first and second frequency bands). In addition, it is assumed that the first frequency band is a TDD band and that the second frequency band is an FDD band.

Here, an example of a configuration of a wireless unit in a case where the terminal device 40 performs the UL Tx switching while continuing DL reception in the TDD band will be described with reference to FIG. 16.

FIG. 16 is a diagram illustrating another example of the configuration of the wireless unit according to the embodiment of the present disclosure. The wireless unit illustrated in FIG. 16 includes a second wireless unit and a fourth wireless unit. The fourth wireless unit includes a fourth transmission unit 44T, a first reception unit 41R, and a switch 45-1. The second wireless unit includes a second transmission unit 42T, a second reception unit 42R, and a duplexer (DUP) 45-2. The configuration of the second wireless unit is the same as that illustrated in FIG. 10.

The fourth transmission unit 44T further includes a DAC 41-T4, a local oscillator 42-T4, a mixer 43-T4, an amplifier 44-T4, and switches 45-4 to 45-6 in addition to the configuration of the first transmission unit 41T illustrated in FIG. 10. Components that are included in the fourth transmission unit 44T and are the same as those of the first transmission unit 41T are denoted by the same reference signs, and description thereof is omitted.

The DAC 41-T4 converts a digital fourth input signal into an analog fourth input signal. The local oscillator 42-4 generates one of a plurality of local signals having different frequencies f.

The mixer 43-T4 mixes the analog fourth input signal and the local signal to generate a fourth transmission signal. The amplifier 44-T4 amplifies the fourth transmission signal and transmits the amplified fourth transmission signal from an antenna 413-4.

The switch 45-4 inputs a local signal generated by the local oscillator 42-T1 to the mixer 43-T1 at the time of TDD transmission. The switch 45-4 inputs a local signal generated by the local oscillator 42-T1 to the mixer 43-T4 at the time of FDD transmission. The switch 45-4 is a switching circuit that switches the output destination of the local oscillator 42-T1 according to either TDD or FDD.

The switches 45-5 and 45-6 connect the antenna 413-1 and the fourth transmission unit 44T at the time of TDD transmission. As a result, the terminal device 40 transmits the first transmission signal from the antenna 413-1. The switches 45-5 and 45-6 connect the antenna 413-4 and the fourth transmission unit 44T at the time of FDD transmission. As a result, the terminal device 40 transmits the fourth transmission signal from the antenna 413-4. The switches 45-5 and 45-6 are selection circuits that switch between TDD and FDD at the time of transmission, that is, select one of TDD and FDD.

In the fourth wireless unit illustrated in FIG. 16, the fourth transmission unit 44T and the first reception unit 41R include the local oscillators 42-T4 and 42-1, respectively. As described above, the fourth transmission unit 44T and the first reception unit 41R do not share the local oscillators. Therefore, while the fourth transmission unit 44T transmits the fourth transmission signal from the antenna 413-4, the first reception unit 41R can receive the first reception signal via the antenna 413-1.

Returning to FIG. 15, the terminal device 40 performs the first transmission/first reception in the TDD band (first frequency band). The terminal device 40 performs the first transmission using, for example, the fourth transmission unit 44T. Furthermore, the terminal device 40 performs the first reception using, for example, the first reception unit 41R.

The terminal device 40 performs the second transmission/second reception in the FDD band (second frequency band). The terminal device 40 performs the second transmission using, for example, the second transmission unit 42T. Furthermore, the terminal device 40 performs the second reception using, for example, the second reception unit 42R.

In the example illustrated in FIG. 15, the first to third and seventh to eleventh symbols of the first frequency band are allocated to DL reception, and the fifth and sixth symbols are allocated to UL transmission.

The local oscillator 42-T1 (first LO) generates any one of first and second local signals having the carrier frequencies $f_{T1}$ and $f_{F2}$ of the respective first and second frequency bands. That is, the terminal device 40 performs the first transmission by switching the carrier frequency to either $f_{T1}$ or $f_{F2}$ (2-band 1Tx switching).

In the example illustrated in FIG. 15, the terminal device 40 performs the DL reception/UL transmission (first reception/first reception) in the first frequency band and performs the DL reception/UL transmission (second reception/-second reception) in the second frequency band from time t41 to time t42. In this period, the first LO generates a local signal having the frequency $f_{T1}$, and the second LO generates a local signal having the frequency $f_{F2}$.

In this manner, the terminal device 40 performs 2ULCA in the first and second frequency bands from the time t41 to the time t42.

Here, at the time t42, the terminal device 40 performs the first transmission by switching from the first frequency band to the second frequency band. Note that the terminal device 40 continuously performs the second transmission in the second frequency band.

The terminal device 40 performs the UL transmission (first transmission) in the second frequency band at and after time t43 after a switching gap (SG) elapses from the time t42. In addition, the terminal device 40 continuously performs the DL reception/UL transmission (second reception/second transmission) in the second frequency band at and after the time t42. In this case, the first LO and the second LO generate local signals having the frequency $f_{F2}$.

In this manner, at and after the time t43, the terminal device 40 performs FDD UL-MIMO in the second frequency band.

Here, in FIG. 15, the terminal device 40 continuously performs the TDD reception (first reception) in the first frequency band at and after the time t42. This is because, as described above, the first reception unit 41R does not share the local oscillator 42-T4 (first LO) with the fourth transmission unit 44T.

Therefore, the local oscillator 42-1 of the first reception unit 41R can generate a local signal having the frequency $f_{T1}$ even while the local oscillator 42-T4 (first LO) generates a local signal having the frequency $f_{F2}$ (from the time t42 to the time t44).

As a result, the terminal device 40 can continue the first reception in the first frequency band using the first reception unit 41R even while the local oscillator 42-T4 (first LO) generates the local signal having the frequency $f_{F2}$ (from the time t42 to the time t44).

As described above, the dynamic UL Tx switching performed by the terminal device 40 according to the present embodiment is an operation of switching between the transmission before the switching and the transmission after the switching. The transmission before the switching is either 2ULCA or UL-MIMO. The transmission after the switching is either 2ULCA or UL-MIMO. One of the two bands used for the transmission before the switching is different from one of the two bands used for the transmission after the switching. The other of the two bands used for the transmission before the switching may be the same as or different from the other of the two bands used for the transmission after the switching.

## <<4. Example of Switching Settings>>

A specific setting example of the dynamic UL Tx switching across three or more bands will be described.

Note that, similarly to the related art, the terminal device 40 also supports UL Tx switching in which any value of 35 us, 140 us, and 210 us is set as a switching gap for each band pair (2 bands).

Furthermore, the terminal device 40 according to the present embodiment sets a UE capability indicating that any value of 35 us, 140 us, and 210 us is set as a switching gap for any band candidates for two and more bands.

The arbitrary band candidates for two and more bands include, for example, any two band candidates, three band candidates, and four band candidates. The band candidates for two and more bands may include, for example, any band candidates for five or more bands.

In a case where the UE capability indicating that any value of 35 us, 140 us, and 210 us is set as a switching gap is set for two band candidates among the arbitrary band candidates for two and more bands, the terminal device 40 can perform the setting similarly to the conventional system (3GPP Rel. 16 and Rel. 17).

In addition to conventional inter-band CA in which TDD and FDD are combined, the terminal device 40 sets inter-band CA in which TDD and TDD are combined as a Tx switching allocation group. For example, the terminal device 40 also supports 2Tx switching of specific four band candidates (see FIG. 14). This 2Tx switching can be performed, for example, in an area where one cell capacity of the base station device 20 is desired to be reduced in a densely populated area such as an urban center.

The base station device 20 selects one of systems for the two options (Option 1 (Switched UL) and Option 2 (dual UL)) of the conventional inter-band CA in which TDD and FDD are combined, and assigns the selected system to the terminal device 40. For example, the base station device 20 selects one of the above-described systems according to a signal level of a sounding reference signal (SRS) and/or a reference signal received power (RSRP) level transmitted by the terminal device 40 in a TDD band.

Here, as arrangement and deployment of cells for 5GNR, a "heterogeneous network (HetNet)" in which a macrocell of a 2.1 GHz band and a small cell of a 3.5 GHz band are overlaid is common.

However, for the 3.5 GHz band (n77) and the 4.5 GHz band (n79), in order to prevent interference by satellite communication and a radio altimeter of an aircraft, there are areas in the whole world where the arrangement and deployment of cells in the Hetnet described above cannot be legally carried out.

As described above, in the area where the arrangement and deployment of cells by the Hetnet cannot be carried out, the base station device 20 may not include an ultra hi-band in band candidates. That is, the base station device 20 sets three or more bands excluding an ultra hi-band as band candidates.

In the following description, in order to simplify the description, it is assumed that the terminal device 40 performs dynamic UL Tx switching in 4-band 2Tx. Hereinafter, dynamic UL Tx switching in 4-band 2Tx is also simply referred to as 4-band 2Tx-SW.

For example, in 4-band 2Tx-SW, a switching gap (UL Tx switching period) is set to any value of 35 us, 140 us, and 210 us as in the conventional case. That is, the terminal device 40 supports any switching gap of 35 us, 140 us, and 210 us in 4-band 2Tx-SW.

Furthermore, for example, the terminal device 40 can set the UE capability such that a switching gap (an example of a first capability setting value) of 4-band 2Tx-SW is longer than a switching gap (an example of a second capability setting value) of 2-band dynamic UL Tx switching. Specifically, in a case where the switching gap of dynamic UL Tx switching of two band pairs is 35 us, the terminal device 40 may set the switching gap of 4-band 2Tx-SW to 140 us or 210 us.

For example, in 4-band 2Tx-SW, it is assumed that the terminal device 40 can operate with the minimum switching gap (for example, 35 us). In this case, ideally, the base station device 20 can dynamically allocate a UL resource optimum at the time of performing 4-band 2Tx-SW to the terminal device 40 (see, for example, FIG. 14).

The terminal device 40 notifies the base station device 20 of the switching gap (any of 35 us, 140 us, and 210 us) by using the UE capability. For example, when camping on the serving cell of the base station device 20, the terminal device 40 reports the UE capability corresponding to the set value of the switching gap to the network side (base station device 20) in advance.

When the terminal device 40 transitions to a "connected mode" state in the serving cell, the base station device 20 allocates a band group optimal for the terminal device 40 at the time of the transition in the real field. The base station device 20 performs the allocation, for example, with reference to a report of the UE capability of the terminal device 40. For example, the base station device 20 allocates any one of band groups of any four band candidates, three band candidates, and two band candidates to the terminal device 40.

Subsequently, the base station device 20 allocates UL resources in which an optimal band pair (two bands) at that time is "default" from among the band groups of any four band candidates, three band candidates, and two band candidates. This band pair is a combination of bands for performing inter-band CA of FDD and TDD and/or inter-band CA of TDD and TDD. This is because, in a densely populated area such as a large city, cell arrangement and deployment may be performed in a micro-cell (or a spot cell) having a small cell radius in terms of cell capacity. In a densely populated area, a more comfortable service can be provided to end users by arrangement and deployment of micro-cells (or spot cells) having a small cell radius. As described above, in a micro-cell (or spot cell) having a small cell radius, for example, a band pair for performing the above-described inter-band CA of TDD and TDD can be set.

For example, the base station device 20 sets a band pair in which the throughput of UL transmission increases as an optimum band pair.

In addition, the base station device 20 performs triggering of 4-band 2Tx-SW on the terminal device 40 at the same time as allocation of a band group and the setting of the band pair. Examples of a method for the triggering include the following three examples.

- The first method using RRC signaling
- The second method using the DCI (PDCCH)
- The third method using MAC CE

The base station device 20 performs setting of a band pair optimal at the time of setting and setting of triggering for dynamic switching by using any one of the first to third methods. For example, the base station device 20 selects the most optimal method from the first to third methods according to the real field environment at the time of setting of the base station device 20 and the terminal device 40.

For example, the terminal device 40 may recognize the third method the earliest. This is because only 8 bits of data are set in MAC CA. On the other hand, in the first method, although the amount of data that can be set is large, recognition by the terminal device 40 is the slowest.

As described above, the base station device 20 can perform triggering or the like using any of the first to third methods according to an actual feel and an environment. However, in a case where the number of bands corresponding to a band group of four bands is large, it is desirable that the base station device 20 use the first method (method using RRC signaling) as a method of setting a band pair. As described above, in a case where the amount of data to be set is large, the base station device 20 cannot perform quick exchange as in the third method, but can notify the terminal device 40 of information regarding the band pair by using the first method which is a more reliable method.

Note that as the number of band candidates that can be supported by the terminal device 40 increases, the number of frequencies f of local signals generated by the local oscillator increases. That is, as the number of band candidates that can be supported by the terminal device 40 increases, a large memory capacity is required to hold setting data of the local oscillator. Therefore, it is assumed that the terminal device 40 is equipped with hardware (memory) having a memory capacity of an appropriate size according to the number of bands that can be supported.

As described above, in a case where the base station device 20 sets a combination of bands for inter-band CA of FDD and TDD, the bands can be set to satisfy the following setting conditions in band groups of any four band candidates, three band candidates, and two band candidates.

For example, as the TDD band, the base station device 20 sets a band (for example, CA_n78 or the like) in which a wide UL band in which an aggregation BW is 200 MHz at the time of intra-band CA is secured. On the other hand, as the FDD band, the base station device 20 sets a band in which UL-MIMO can be performed according to the specifications or on a real network and a set band of a single-band CBW is wide.

By setting the bands in this manner, the base station device 20 can further improve the UL throughput.

Note that, even in a case where the bands are configured under the above-described setting conditions, in a case where the switching gap specified by the UE capability is 120 us or 210 us, it is desirable that the base station device 20 do not perform Tx switching as dynamically and frequently as possible.

That is, when the switching gap specified by the UE capability is 120 us or 210 us, it is desirable that the base station device 20 do not set triggering of dynamic 2Tx switching in the terminal device 40.

This is because UL transmission is not performed in the switching gap. In a case where the switching gap is long, if the terminal device 40 frequently performs the Tx switching, a period during which UL transmission is not performed becomes long, and there is a possibility that the UL throughput decreases.

In particular, when the switching gap is 210 us, it is desirable that the terminal device 40 do not perform the dynamic Tx switching across three or more bands. In this case, the base station device 20 can configure, for example, conventional Tx switching in two bands (band pair) in the terminal device 40.

The number of switching operations (or the upper limit of the number of switching operations) per predetermined period may be limited regardless of the length of the switching gap or in accordance with the length of the switching gap. In this case, the terminal device 40 notifies the base station device 20 of at least one of the predetermined period and the number of switching operations by using the UE capability. Examples of the predetermined period include the number of slots (for example, an X slot (X is an integer of 1 or more)) and time (a half frame (0.5 ms) or a subframe (1 ms)).

In addition, in some embodiments described above or below, it has been described that any value of 35 us, 140 us, and 210 us is associated with a band group of three or more band candidates, but the present invention is not limited thereto. For example, a plurality of values among 35 us, 140 us, and 210 us may be associated with a band group of three or more band candidates. That is, in one band group, any value among 35 us, 140 us, and 210 us may be associated with each predetermined band pair.

In 3GPP TS38.101-1 ver. 17.6.0, a band in which "intra-band UL contiguous CA" and "UL-MIMO" can be simultaneously configured in a TDD band is defined. Here, as this band, two TDD bands "CA_n78C" and "CA_n41C" are defined. Table 2 is a table indicating UE power classes of intra-band UL contiguous CA in UL-MIMO in a closed loop spatial multiplexing system.

(Table 2) UE Power Class for intra-band UL contiguous CA for UL MIMO in closed loop spatial multiplexing scheme

| NR CA Configuration | Class1 (dBm) | Tolerance (dB) | Class2 (dBm) | Tolerance (dB) | Class3 (dBm) | Tolerance (dB) | Class4 (dBm) | Tolerance (dB) |
|---|---|---|---|---|---|---|---|---|
| CA_n41C | | | | | 23 | +2/-3[1] | | |
| CA_n78C | | | | | 23 | +2/-3 | | |
| NOTE1: If all transmitted resource blocks over all component carriers are confined within $F_{UL_low}$ and $F_{UL_low}$+4 MHz or/and $F_{UL_high}$-4 MHz and $F_{UL_high}$,the maximum output power requirement is relaxed by reducing the lower tolerance limit by 1.5 dB<br>NOTEZ2: $P_{PowerClass}$ is maximum UE power specified without taking into account the tolerance | | | | | | | | |

In addition to the band setting conditions described above, it is assumed that the following second setting condition can be set although there is a regional use restriction (restriction depending on an operator) worldwide. In this case, the base station device 20 can configure "intra-band UL contiguous CA" and "UL-MIMO" simultaneously at the time of UL transmission.

In a TDD band, the aggregation BW is 200 MHz at the time of intra-band CA, and "CA_n78C" or "CA_n41C" in which UL-MIMO can also be configured is configured. In an FDD band, UL-MIMO can be performed according to the specifications or on a real network, and a band having a wide set CBW is set.

By setting the bands in this manner, the base station device 20 can further improve the UL throughput.

Furthermore, the base station device 20 may select at least one band belonging to FR1 and at least one band belonging to FR2 as four bands to be candidates for switching.

In the current 5GNR specifications, when UL Tx switching is newly performed from the FR1 band to the FR2 band, the interruption time of Tx is required to be 52 ms or more even in simple calculation. This interruption time is a time for associating a synchronization condition with the UL-DL slot time for the base station device 20 supporting FR2.

However, there is a possibility that the above-described interruption time can be shortened by exchanging UL-DL slot timing information between the base station device 20 supporting FR1 and the base station device 20 supporting FR2. Furthermore, there is a possibility that the above-described interruption time can be further shortened by implementing the topic themes of Rel-19 such as "grasping of surrounding communication situations in integrated sensing and communication" and "analogy of communication environment by AI/ML model".

As a result, there is a possibility that the terminal device 40 at an arbitrary location on the real field can implement the UL Tx switching from FR1 to FR2 (or FR2 to FR1) with a specified switching gap (35 us, 120 us, or 210 us).

As described above, by adding the FR2 band to an FR1 band group of the dynamic UL Tx switching across three or more bands, the base station device 20 can dramatically improve the UL throughput.

<<5. Setting Processing>>

FIG. 17 is a sequence diagram illustrating an example of a procedure of setting processing according to the embodiment of the present disclosure. The setting processing illustrated in FIG. 17 is performed between the terminal device 40 and the base station device 20 when the terminal device 40 performs the UL Tx switching across three or more bands.

The terminal device 40 transmits the UE capability information to the base station device 20 (step S101). This information includes information regarding the switching gap of the UL Tx switching across three or more bands.

Upon receiving the UE capability information, the base station device 20 transmits the setting information to the terminal device 40 (step S102). The setting information includes information regarding the UL Tx switching across three or more bands. For example, the setting information includes pair information regarding a band pair in which the UL Tx switching is performed across three or more bands.

As described above, the switching is triggered by RRC signaling (RRC Config) or the DCI. FIG. 17 illustrates an example in which the switching is triggered by the DCI.

When the switching is triggered by the DCI (step S103), the terminal device 40 performs the UL-Tx switching across three or more bands (step S104). At this time, the terminal device 40 does not perform UL transmission in the period defined by the switching gap. Note that the switching gap takes any value of 35 us, 120 us, or 210 us associated with three or more bands.

<<6. Local Oscillator>>

[VCO (Voltage Controlled Oscillator)]

As described above, in order to improve the UL throughput by the UL Tx switching across three or more bands, it is important to shorten the switching period (switching gap) of the UL Tx switching. Thus, it is desired to shorten the switching period of the UL Tx switching.

A switching time during broadband band switching depends on the architecture structure of a local oscillator in an RF chip. The local oscillator in the RF chip generally includes an on-chip VCO and a phase locked loop (PLL) circuit.

FIG. 18 is a diagram illustrating an example of the VCO. $C_V$ illustrated in FIG. 18 indicates a varactor diode, and an oscillation frequency changes according to a change in the capacitance of the varactor diode. Therefore, when switching is performed between broadband bands, a rate of change in the capacitance of the varactor diode is required to be higher than a rate of change in the capacitance of a normal diode.

FIG. 19 is a diagram illustrating an example of a PLL circuit 1000. The PLL circuit 1000 illustrated in FIG. 19 includes a phase frequency detector (PFD) 1100, a low pass filter 1200, an oscillation circuit 1400, and a frequency divider (DIV) 1300. The oscillation circuit 1400 is, for example, a VCO illustrated in FIG. 18.

The phase frequency detector 1100 compares the phase of a reference signal with the phase of a frequency divided signal output from the frequency divider 1300, and outputs a control signal corresponding to the difference between the phases. The low pass filter 1200 smooths the control signal output from the phase frequency detector 1100 and converts the signal into a voltage signal. The voltage signal is input to the oscillation circuit 1400.

The oscillation circuit 1400 generates an oscillation signal having a frequency corresponding to the voltage signal. The frequency divider 1300 outputs a divided frequency signal obtained by dividing the oscillation signal generated by the oscillation circuit 1400 to the phase frequency detector 1100.

FIG. 20 is a diagram illustrating an example of the low pass filter 1200. The low pass filter 1200 illustrated in FIG. 20 is a third-order passive loop filter.

Next, equations for deriving a circuit topology of the VCO and a lock-up time of the general PLL circuit 1000 will be described below.

$$\omega n = \sqrt{\frac{K\phi \cdot Kvco}{N \cdot (C1 + C2 + C3)}} \quad \cdots (1)$$

$$\zeta = \frac{R2 \cdot C2}{2} \cdot \omega n \quad \cdots (2)$$

As described above, in a case where the PLL circuit 1000 includes a third-order loop filter (an example of the low pass filter 1200), the damping factor $\zeta$ and the ringing frequency $\omega$n are derived from the transfer function of the basic PLL circuit as in Equations (1) and (2).

FIG. 21 is a graph illustrating a relationship between the damping factor and the ringing frequency. As illustrated in FIG. 21, an output frequency of the PLL circuit 1000 finally converges to a desired frequency (final frequency) while fluctuating.

The lock-up time (lock time) of the PLL circuit 1000 is derived from a theoretical calculation equation shown in the following Equation (3). Here, tol in Equation (3) means an allowable frequency that is considered to be locked to a desired frequency in the PLL circuit 1000.

$$LockTime = \frac{-In\left(\frac{tol}{f2 - f1} \cdot \sqrt{1 - \zeta^2}\right)}{\zeta \cdot \omega n} \quad \cdots (3)$$

In order to shorten the switching period (switching gap) of the UL Tx switching, it is required to shorten the lock-up time of the PLL circuit 1000. In order to shorten the lock-up time, the damping factor $\zeta$ (ringing frequency $\omega$n) may be increased.

When $K_{VCO}$ in the above Equation (2) is linear and steep from the damping factor $\zeta$ and the ringing frequency $\omega$n derived from the transfer function of the PLL circuit 1000, quick switching of an LO frequency (carrier frequency) is possible even in a wide band.

On the other hand, the varactor diode $C_V$ used in the on-chip VCO (see FIG. 18) is saturated in the broadband characteristics.

FIG. 22 is a graph illustrating the $K_{VCO}$ characteristic of the VCO using the varactor diode $C_V$. A rate ($K_V = \Delta F/\Delta V$) of change in the $K_{VCO}$ ($K_V$) characteristic becomes steeper as the output frequency of the VCO is lower. A varactor diode in an actual complementary metal-oxide-semiconductor (CMOS) circuit does not have a linear and steep frequency characteristic ($K_{VCO}$ ($K_V$) characteristic) in broadband characteristics.

For this reason, when switching can be performed in the 4.9 GHz band and the 700 MHz band in addition to the switching in the 2.6 GHz band and the 2.3 GHz band defined in 3GPP Rel. 16 and Rel. 17, it is necessary to consider a longer switching period. That is, when the UL Tx switching is performed in the 2.6 GHz band, the 2.3 GHz band, the 4.9 GHz band, and the 700 MHz band, a switching period longer than that in the related art is required.

Therefore, the VCO 1400 includes the varactor diode $C_V$ having a linear and steep $K_{VCO}$ ($K_V$) characteristic at the output frequency of the VCO 1400. As described above, the switching period can be shortened by using the architecture configuration of the local oscillator in the RF chip for each band in which the $K_{VCO}$ ($K_V$) of the varactor diode $C_V$ is linear and steep.

FIG. 23 is a diagram illustrating an example of a VCO circuit 1500 according to the present embodiment. The VCO circuit 1500 illustrated in FIG. 23 includes a first VCO 1510, a second VCO 1520, a third VCO 1530, a fourth VCO 1540, and a multiplexer (MUX) 1550. The VCO circuit 1500 is used for, for example, the local oscillators 42-1 and 42-T2 (see FIG. 10).

The first VCO 1510 is a VCO that outputs a signal of a first frequency in low-band (for example, a band from 600 MHz to 700 MHz). The first VCO 1510 includes a varactor diode $C_V$ having a linear and steep $K_{VCO}$ ($K_V$) characteristic in low-band.

The second VCO 1520 is a VCO that outputs a signal of a second frequency in mid-band (for example, a band from 800 MHz to 2000 MHz). The second VCO 1520 includes a varactor diode $C_V$ having a linear and steep $K_{VCO}$ ($K_V$) characteristic in mid-band.

The third VCO 1530 is a VCO that outputs a signal of a third frequency of hi-band (for example, a band from 2.5 GHz to 2.8 GHz). The third VCO 1530 includes a varactor diode $C_V$ having a linear and steep $K_{VCO}$ ($K_V$) characteristic in hi-band.

The fourth VCO 1540 is a VCO that outputs a signal of a fourth frequency in ultra hi-band (for example, a band from 6.6 GHz to 9.0 GHz). The fourth VCO 1540 has a varactor diode $C_V$ having a linear and steep $K_{VCO}$ ($K_V$) characteristic in ultra hi-band.

The multiplexer 1550 inputs, to any one of the first VCO 1510, the second VCO 1520, the third VCO 1530 and the fourth VCO 1540, a control signal (control voltage) for controlling the output of the VCO, and inputs a predetermined voltage (a ground voltage in FIG. 23) to the other VCOs.

In the example illustrated in FIG. 23, the multiplexer 1550 inputs the control signal to the fourth VCO 1540. As a result, the fourth VCO 1540 is selected, and the VCO circuit 1500 outputs a signal of the fourth frequency in ultra hi-band (for example, a 4.9 GHz band).

On the other hand, the predetermined voltage is input to the first VCO 1510, the second VCO 1520, and the third VCO 1530. Since no control signal is input to these VCOs, the output is in an unavailable (N/A) state. However, since these VCOs are in a "power on" (powered on) state, it is possible to shorten the time to activate any of the VCOs when the Tx switching is performed.

As described above, the VCO circuit 1500 according to the present embodiment includes the first VCO 1510, the second VCO 1520, the third VCO 1530, and the fourth VCO 1540 for each band for performing switching. The first VCO 1510, the second VCO 1520, the third VCO 1530, and the fourth VCO 1540 have the varactor diodes $C_V$ having the $K_{VCO}$ ($K_V$) characteristics corresponding to the respective bands.

As a result, the VCO circuit 1500 can shorten a convergence time (switching time) when the output frequencies of the first VCO 1510, the second VCO 1520, the third VCO 1530, and the fourth VCO 1540 are switched.

The VCO circuit 1500 includes the multiplexer 1550, inputs, to any one of the first VCO 1510, the second VCO 1520, the third VCO 1530 and the fourth VCO 1540, a control signal (control voltage) for controlling the output of the VCO, and inputs the predetermined voltage to the other VCOs.

As a result, the VCO circuit 1500 can also maintain the VCOs that do not generate a signal of an output frequency according to the control signal in a powered on state. Therefore, the VCO circuit 1500 can further shorten the convergence time (switching time) when the output frequencies of the first VCO 1510, the second VCO 1520, the third VCO 1530, and the fourth VCO 1540 are switched.

The terminal device 40 on which the VCO circuit 1500 is mounted can implement, for example, Tx switching within 35 us which is the shortest switching period (switching gap).

Note that the VCO circuit 1500 has the four VCOs (first VCO 1510, second VCO 1520, third VCO 1530, and fourth VCO 1540), but the number of VCOs included in the VCO circuit 1500 is not limited to four. For example, the number of VCOs included in the VCO circuit 1500 may be two, three, or five or more. The VCO circuit 1500 includes VCOs corresponding to the number of band candidates to be subjected to the UL Tx switching to be performed by the terminal device 40.

In addition, when the UL Tx switching is performed using the VCO circuit 1500, since the first VCO 1510, the second VCO 1520, the third VCO 1530, and the fourth VCO 1540 are always "powered on", the current consumption of the VCO circuit 1500 may increase.

However, even on-chip VCOs for the previous 0.35 um CMOS process each consume less than or equal to 8 mA. On the other hand, in the UL 2Tx state, the two amplifiers 44-T1 and 44-T2 (see FIG. 10) are always "powered on".

Therefore, in the present embodiment, by optimizing the current consumption of the two amplifiers 44-T1 and 44-T2 by an envelope tracking (ET) system, the current consumption of the two amplifiers 44-T1 and 44-T2 is reduced.

FIG. 24 is a diagram for explaining a method of reducing power consumption of an amplifier 1600. FIG. 24 illustrates a battery direct system, an average power tracking (APT) system, and an ET system as systems for supplying power to the amplifier 1600.

The battery direct system is a system for supplying a constant power supply voltage to the amplifier 1600 regardless of an amplitude by which the amplifier 1600 performs amplification. In the battery direct system, the amplifier 1600 is directly connected to a battery (power supply), and a constant power supply voltage Vdd is supplied.

Therefore, for example, when the amplitude of a signal waveform transmitted from the RF circuit (for example, the first and second transmission units 41T and 42T) of the terminal device 40 is small, the current consumption is wasted.

As described above, in the battery direct system, current consumption in the amplifier 1600 is large, and from the viewpoint of reducing the current consumption, the current consumption is the lowest among the three systems.

The APT system is a system in which three-stage power supply voltages Vdd (Vdd = {Vdd1, Vdd2, Vdd3}) are supplied to the amplifier 1600 according to the amplitude by which the amplifier 1600 performs amplification. In the APT system, the power supply voltages Vdd are supplied to the amplifier 1600 via a switching circuit 1610.

Therefore, in the APT system, the three-stage high, middle, and low power supply voltages Vdd are supplied according to the amplitude of the signal waveform transmitted from the RF circuit of the terminal device 40. In this manner, the APT system reduces current consumption in the amplifier 1600.

The ET system is a system for supplying, to the amplifier 1600, a power supply voltage corresponding to the amplitude by which the amplifier 1600 performs amplification. In the ET system, a power supply generation circuit 1620 generates a power supply voltage Vdd following the signal waveform output from the RF circuit. The power supply generation circuit 1620 supplies the generated power supply voltage Vdd to the amplifier 1600.

The power supply generation circuit 1620 acquires envelope amplitude information of a transmission signal from, for example, a BB modem (for example, the transmission processing unit 412). The power supply generation circuit 1620 generates a power supply voltage Vdd on the basis of the envelope amplitude information.

Therefore, in the ET system, the power supply voltage Vdd following the amplitude of the signal waveform transmitted from the RF circuit of the terminal device 40 is supplied to the amplifier 1600. As a result, in the ET system, the current consumption of the amplifier 1600 can be reduced the most among the three systems.

In the present embodiment, the current consumption of the two amplifiers 44-T1 and 44-T2 is optimized using the ET system which is highly effective in reducing the current consumption. As a result, even if the power consumption of the local oscillators 42-1 and 42-T2 increases, an increase in the power consumption of the entire first and second transmission units 41T and 42T can be suppressed. That is, it is possible to suppress an increase in the power consumption of the first and second transmission units 41T and 42T while shortening the switching period of the UL Tx switching.

[Auto-Tune Circuit]

As indicated by Moore's Law, in order to meet further demands for higher integration, lower power consumption, and lower cost of digital circuits, CMOS miniaturization manufacturing process technology has progressed.

In recent years, with the miniaturization of a CMOS, a transition frequency fT, which is an index indicating high-frequency characteristics of the device, exceeds several 100 GHz. Here, the transition frequency fT is a limit frequency at which a current amplification factor $h_{FE}$ becomes "1", that is, the gain becomes "0".

There is a manufacturing problem of "variations in CMOS-FET characteristics (Vth)" in a CMOS miniaturization manufacturing process. Here, Vth is a threshold voltage of a CMOS-FET. The CMOS-FET needs to be operated at a voltage equal to or higher than the threshold voltage Vth at which a drain current flows through the CMOS-FET.

However, there is a problem that the threshold voltage Vth varies more as the gate area is miniaturized, that is, as the CMOS miniaturization manufacturing process technology progresses.

This variation occurs in the process of manufacturing the CMOS-FET. For example, the manufacturing process includes, for example, an oxidation process, an ion implantation process, an impurity diffusion process, a deposition process, a photolithography process, an etching process, and the like. Among them, in the ion implantation process and the impurity diffusion process, variations in distribution of donor and acceptor ions occur. In addition, in the photolithography process and the etching process, variations in masking and dimensions of the CMOS-FET occur.

Therefore, even in the same wafer, the threshold voltage Vth of the CMOS-FET greatly varies. As a result, there is a problem that the characteristics of a design circuit including the CMOS-FET vary even in the same wafer.

In order to derive the theoretical calculation equation for the PLL lock time (Lock Time) from the PLL transfer function by taking the basic PLL circuit configuration illustrated in FIG. 19 as an example, the damping factor and the ringing frequency were theoretically calculated. The PLL transfer function in this case is in the most basic PLL circuit configuration of the integer frequency division type, but there is no large difference from the integer frequency division type from the viewpoint of deriving the damping factor and the ringing frequency which are essential components even in the decimal point frequency division type.

FIG. 25 is a diagram illustrating an example of a configuration of an on-chip VCO 1800 according to the embodiment of the present disclosure. A core circuit of the actual on-chip VCO 1800 using the CMOS process has a switch configuration that repeats on and off so that the oscillation frequency is around the center frequency of a band that is desired to be used within a range in which the temperature characteristics (-15°C to +85°C) in an actual environment are satisfied. This switch configuration includes a plurality of MOS capacitors (MOS capacitor group) .

The contents of the above-described switch configuration using the MOS capacitors will be further described. It is assumed that a set voltage value of Vtune which is a control voltage of a varactor diode CV illustrated in FIG. 25 is set to a center value of Vtune which is the control voltage. In this case, ON (0) or OFF (1) of the MOS capacitor group is set such that the value of a frequency at which the on-chip VCO 1800 operates is close to the center frequency of a desired oscillation frequency range. At this time, ON (0) or OFF (1) of the MOS capacitor group is set such that a device (device on which the on-chip VCO 1800 is mounted, here, for example, the terminal device 40) body correctly responds to the ambient temperature of the current location. A DAC (not illustrated) that performs ON/OFF adjustment of each MOS capacitor group illustrated in FIG. 25 with 0 bits or 1 bit is referred to as "FcDAC".

The on-chip VCO 1800 is used as, for example, the first VCO 1510, the second VCO 1520, the third VCO 1530, and the fourth VCO 1540 (see FIG. 23) described above.

FIG. 26 is a graph illustrating relationships between the oscillation frequency of the on-chip VCO 1800 and the control voltage of the varactor diode according to the embodiment of the present disclosure. FIG. 26 illustrates actual measurement values of the relationship between the oscillation frequency of the on-chip VCO 1800 mounted on a radio frequency integrated circuit (RFIC) and the control voltage of the varactor diode when a value of an "FcDAC" is changed at room temperature (25°C). FIG. 26 illustrates the relationships between the oscillation frequency of the on-chip VCO 1800 and the control voltage of the varactor diode when the value of the "FcDAC" is changed from "0" to "15".

The left diagram in FIG. 26 illustrates the relationship in a case where the center frequency of the band desired to be used for the on-chip VCO 1800 is 4224 MHz. The right diagram in FIG. 26 illustrates the relationship in a case where the center frequency of the band desired to be used for the on-chip VCO 1800 is 3960 MHz.

The vertical axis in FIG. 26 indicates the oscillation frequency of the on-chip VCO 1800. The horizontal axis in FIG. 26 indicates the control voltage Vtune of the varactor diode $C_V$.

In order to mount the on-chip VCO 1800 on the RFIC, the oscillation frequency of the on-chip VCO 1800 needs to correspond to all frequencies in a band to be used by using the control voltage Vtune of the varactor diode $C_V$.

For this purpose, as illustrated in FIG. 26, it is necessary to set an on/off changeover switch of the "FcDAC" so that the oscillation frequency is around the center frequency of the band to be used even at room temperature (25°C).

In addition, in the on-chip VCO 1800 mounted on the terminal device 40, at all temperatures of temperature characteristics (between -15°C and +85°C) in the actual environment in which the on-chip VCO 1800 is used ("powered on"), the oscillation frequency needs to correspond to all the frequencies in the band to be used.

Therefore, it is assumed that the on-chip VCO 1800 includes an auto-tune circuit (not illustrated) for determining an optimal value of the "FcDAC" in accordance with the environmental temperature at the time of operation.

The auto-tune circuit uses, as a reference frequency, the oscillation frequency of the on-chip VCO 1800 in a state where Vtune that is the control voltage of the varactor diode $C_V$ is set to a constant value. The auto-tune circuit determines the value of the "FcDAC" that is optimal in terms of the environmental temperature at the time of operation such that the number of counts when the frequency of a TCXO for the PLL circuit is counted at the reference frequency becomes close to a theoretical value in design. The auto-tune circuit repeatedly compares the counted number with the theoretical value using, for example, a digital theoretical circuit (not illustrated) included in the auto-tune circuit, and determines the optimal value of the "FcDAC".

FIG. 27 is a diagram illustrating an example of the theoretical value of the FcDAC. FIG. 27 illustrates an image diagram in a "theoretically optimal" "value" of the FcDAC that serves as an operation index of the auto-tune circuit.

The auto-tune circuit operates after a power circuit (not illustrated) of the on-chip VCO 1800 is "powered on", that is, after the on-chip VCO 1800 is powered on. The auto-tune circuit operates such that the oscillation frequency of the on-chip VCO 1800 is around the center frequency of the band to be used at the environmental temperature during the operation.

The auto-tune circuit sequentially compares all bits of the "FcDAC" corresponding to "periodic switching on and off" of the MOS capacitor used for the core circuit of the on-chip VCO 1800, and selects an "FcDAC" optimal at the environmental temperature at the time of operation.

In the selection of the optimal "FcDAC" by the auto-tune circuit, a certain execution time is required, depending on the number of MOS capacitors mounted on the actual on-chip VCO 1800 using the CMOS process. That is, a period until the auto-tune circuit of the on-chip VCO 1800 is stabilized is a certain length.

For example, in a case where an RF chip is produced by an RFCMOS process, a period until the auto-tune circuit is stabilized may take up to 90 us.

FIG. 28 is a table illustrating examples of the "FcDAC" selected by the auto-tune circuit according to the present embodiment. The left diagram in FIG. 28 illustrates an "FcDAC" in a case where the center frequency of the band that the on-chip VCO 1800 desires to use is 4224 MHz. The right diagram in FIG. 28 illustrates an "FcDAC" in a case where the center frequency of the band that the on-chip VCO 1800 desires to use is 3960 MHz.

In FIG. 28, for each temperature, "circles" are added to "FcDACs" locked by the PLL circuit, and a value of an "FcDAC" selected by the auto-tune circuit is hatched.

As can be seen from FIG. 28, in order to satisfy the oscillation frequency of the on-chip VCO 1800 in all the temperature characteristics (between -15°C and +85°C) in the actual environment, it is desirable that the on-chip VCO 1800 be equipped with the auto-tune circuit in order to handle "variations in CMOS-FET characteristics (Vth)".

[Frequency Multiplication/Double Frequency Multiplication Oscillation]

(Phase Jump)

When the VCO circuit 1500 is cold-started, a stable period is about 100 us including a period until power supply device circuits of the first VCO 1510, the second VCO 1520, the third VCO 1530, and the fourth VCO 1540 are stable. Here, the stable period is a period from power-on of the VCO circuit 1500 until the optimum value of the "FcDAC" is determined by the auto-tune circuit and the oscillation frequency output from the VCO circuit 1500 is stabilized.

Therefore, as described above, the VCO circuit 1500 sets the first VCO 1510, the second VCO 1520, the third VCO 1530, and the fourth VCO 1540 to "power on" in advance.

However, as described above, in a state in which the first VCO 1510, the second VCO 1520, the third VCO 1530, and the fourth VCO 1540 are constantly energized, inductors of the first VCO 1510, the second VCO 1520, the third VCO 1530, and the fourth VCO 1540 are electromagnetically coupled to each other on a die of the same chip. As a result, a required specification characteristic of a continuous phase error (CPE) is not satisfied, and throughput characteristics in transmission/reception characteristics subjected to phase modulation degrade.

For example, in a conventional MB-OFDM (wireless USB) RF chip, inductors on a die of the RF chip were coupled to each other, and continuous phase characteristics degraded. In the early 2000s, MB-OFDM was formulated as a standard for IEEE for wireless USB (WiMedia) application in which an ultra wide band (UWB) and OFDM technology were combined. In the RF chip of the local oscillator for MB-OFDM, continuous phase characteristics degraded.

FIGS. 29 and 30 are diagrams illustrating examples of band groups in MB-OFDM. FIGS. 29 and 30 illustrate band groups serving as mandatory band groups for MB-OFDM. FIG. 29 illustrates UWBs allocated to MB-OFDM. FIG. 30 illustrates frequencies of a band group 1 serving as a mandatory band group in a Low-IF system.

FIG. 31 is a block diagram illustrating an example of a local oscillator 1900 mounted on an RF chip for MB-OFDM according to the present embodiment. FIG. 31 illustrates the local oscillator 1900 in an MB-OFDM Low-IF system. The local oscillator 1900 includes a single-sideband (SSB) mixer 1910. In addition, the local oscillator 1900 includes a VCO 1920.

As described above, the local oscillator 1900 includes the SSB mixer 1910. Therefore, in the local oscillator 1900, an LC filter (not illustrated) for removing a spurious component generated in the SSB mixer 1910 is included in the local oscillator 1900. Note that the LC filter is designed to have a resonance frequency centered on 4224 MHz to be a mid-channel (Mch) among three local output signals (3696 MHz, 4224 MHz, and 4752 MHz).

By disposing the LC filter on the on-chip, an effect of reducing the spurious component can be obtained at least a little, but when a frequency band for Low-IF is switched, a phase jump occurs every time frequency hopping is performed to 4224 MHz of the Mch. This phase jump occurs due to mutual coupling of inductors of the on-chip VCO 1920 disposed on the RF chip and the LC filter.

FIG. 32 is a diagram illustrating an example of a phase jump that occurs in the local oscillator 1900 according to the present embodiment. The upper diagram in FIG. 32 illustrates the frequency (oscillation frequency) of an output signal output from the local oscillator 1900. The lower diagram in FIG. 32 illustrates the phase of the output signal output from the local oscillator 1900.

A phase jump occurs in regions surrounded by ellipses in the lower diagram in FIG. 32. This is because the oscillation frequency of the VCO 1920 and the center frequency of the LC filter are designed to be close to each other. As a result, every time the frequency hopping is performed to 4224 MHz at which the oscillation frequency of the local oscillator 1900 is the mid-channel (Mch), a phase jump occurs due to electromagnetic mutual coupling of the inductors of the VCO 1920 and the LC filter described above.

(Collateral Radiation Characteristics)

The legal characteristics of the RF chip include spurious emission power on the reception side. This spurious emission power is a "receiving-side collateral radiation level" that appears at an antenna connector end of the terminal device 40 when the receiving-side is operated ("powered-on"). The spurious emission power is generated mainly by leakage of an output signal of a local oscillator used for reception.

The "collateral radiation level" of a continuous wave (CW) is defined in 3GPP TS38.521-1. Table 3 is a table indicating spurious emission requirements of a receiver.

(Table 3) General receiver spurious emission requirements

| Frequencyrange | Measurement bandwidth | Maximum level | NOTE |
|---|---|---|---|
| 30MHz≤f≤1GHz | 100kHz | -57dBm | |
| 1GHz≤f≤12.75GHz | 1MHz | -47dBm | |
| 12.75GHz≤f≤5$^{th}$ harmonic of the upper frequency edge of the DL operating band in GHz | 1MHz | -47dBm | 2 |
| 12.75GHz-26GHz | 1MHz | -47dBm | 3 |

As illustrated in Table 3, spurious emission power that the terminal device 40 should not exceed is defined in 3GPP TS38.521-1. That is, the terminal device 40 needs to prevent the "receiving-side collateral radiation level" from exceeding the maximum levels illustrated in Table 3.

On the other hand, in the above-described MB-OFDM RF chip (RF circuit), a "collateral radiation level" that does not satisfy the specifications of the "receiving-side collateral radiation level" as described above occurs at the antenna connector end of the terminal device 40. This is because mutual coupling of electromagnetic fields occurs between a wide-band collector load inductor of a low noise amplifier (LNA) and the inductor of the on-chip VCO 1900 of Rx.

(Architecture by Frequency Multiplication Oscillation)

Also in the transmission processing unit 412 (see FIG. 9) according to the present embodiment, in order to suppress the degradation of the continuous phase characteristics described above and the "collateral radiation level" that does not satisfy the specifications, in the present embodiment, the frequency is set such that mutual coupling does not occur in the first VCO 1510, the second VCO 1520, the third VCO 1530, and the fourth VCO 1540.

It is considered that the degradation of the continuous phase characteristics in the transmission processing unit 412 and the "collateral radiation level" that does not satisfy the specifications and occurs at the antenna connector end of the terminal device 40 occur due to mutual coupling of the inductors of the first VCO 1510, the second VCO 1520, the third VCO 1530, and the fourth VCO 1540.

For example, it is assumed that the oscillation frequencies of the first VCO 1510, the second VCO 1520, the third VCO 1530, and the fourth VCO 1540 are set as they are in accordance with bands (hereinafter, also referred to as transmission available bands) that are available for transmission of the terminal device 40. In this case, in a case where the first VCO 1510, the second VCO 1520, the third VCO 1530, and the fourth VCO 1540 are disposed on the same chip, the inductors of the first VCO 1510, the second VCO 1520, the third VCO 1530, and the fourth VCO 1540 may be mutually coupled.

Therefore, in the VCO circuit 1500 according to the present embodiment, frequencies at which the inductors are not mutually coupled are set as the oscillation frequencies of the first VCO 1510, the second VCO 1520, the third VCO 1530, and the fourth VCO 1540.

Specifically, the oscillation frequencies of the first VCO 1510, the second VCO 1520, the third VCO 1530, and the fourth VCO 1540 according to the present embodiment are set such that the first VCO 1510, the second VCO 1520, the third VCO 1530, and the fourth VCO 1540 oscillate at frequencies four to two times frequencies (hereinafter, also referred to as transmission available frequencies) used for transmission in the transmission available bands.

Note that each of the oscillation frequencies of the first VCO 1510, the second VCO 1520, the third VCO 1530, and the fourth VCO 1540 is divided by a frequency divider (not illustrated) before being input to a mixer (for example, mixer 43-T1 or the like) and is converted into a transmission available frequency. Specifically, when the oscillation frequencies of the first VCO 1510, the second VCO 1520, the third VCO 1530, and the fourth VCO 1540 are multiplied by n (n is an integer of 1 or more) with respect to the transmission available frequencies, each of the oscillation frequencies is divided by 1/n and input to the mixer.

FIG. 33 is a diagram for explaining an example of a frequency set in the VCO circuit 1500 according to the embodiment of the present disclosure.

In FIG. 33, 2.4 to 2.8 GHz, which is four times a transmission available band (600 to 700 MHz), is set as the oscillation frequency of the first VCO 1510. That is, the first VCO 1510 oscillates at a frequency four times the transmission available band. Therefore, an output signal of the first VCO 1510 is divided by 1/4.

As the oscillation frequency of the second VCO 1520, 1.6 to 4.0 GHz, which is two times a transmission available band (800 to 2000 MHz), is set. That is, the second VCO 1520 oscillates at a frequency two times the transmission available band. Therefore, an output signal of the second VCO 1520 is divided by 1/2.

As the oscillation frequency of the third VCO 1530, 5.0 to 5.6 GHz, which is two times a transmission available band (2.5 to 2.8 GHz), is set. That is, the third VCO 1530 oscillates at a frequency two times the transmission available band. Therefore, an output signal of the third VCO 1530 is divided by 1/2.

As the oscillation frequency of the fourth VCO 1540, 6.6 to 9.0 GHz, which is two times a transmission available band (3.3 to 4.5 GHz), is set. That is, the fourth VCO 1540 oscillates at a frequency two times the transmission available band. Therefore, an output signal of the fourth VCO 1540 is divided by 1/2.

As described above, the oscillation frequencies of the first VCO 1510, the second VCO 1520, the third VCO 1530, and the fourth VCO 1540 are set such that the first VCO 1510, the second VCO 1520, the third VCO 1530, and the fourth VCO 1540 oscillate at the frequencies four to two times the transmission available frequencies. As a result, the VCO circuit 1500 can suppress mutual coupling of the inductors of the first VCO 1510, the second VCO 1520, the third VCO 1530, and the fourth VCO 1540. Therefore, the VCO circuit 1500 can suppress degradation of the continuous phase characteristics and the "collateral radiation level" that occurs at the antenna connector end of the terminal device 40.

As described above, in the VCO circuit 1500, the oscillation frequency of each of the first VCO 1510, the second VCO 1520, the third VCO 1530, and the fourth VCO 1540 is multiplied by a value from four to two, and thus a frequency divider is required for each of the first VCO 1510, the second VCO 1520, the third VCO 1530, and the fourth VCO 1540.

As described above, when the number of circuit elements increases, the current consumption of the VCO circuit 1500 may increase. However, a current consumed per frequency divider is about 5.5 mA in the 0.35 um CMOS process. In the example illustrated in FIG. 33, five frequency dividers that perform 1/2 frequency division are required, but the total current consumed by the five frequency dividers is about 27.5 mA or less. This value is not so large compared to the current consumed by the entire first transmission unit 41T (see FIG. 10).

The VCO circuit 1500 according to the present embodiment can suppress degradation of the continuous phase characteristics and the "collateral radiation level" that occurs at the antenna connector end of the terminal device 40 while suppressing an increase in current consumption.

(Arrangement of Guard Ring)

As another method of suppressing the degradation of the continuous phase characteristics and the "collateral radiation level" that occurs at the antenna connector end of the terminal device 40, a method of arranging a guard ring around the inductors is considered. This guard ring can suppress mutual coupling of the inductors.

FIG. 34 is a diagram illustrating an example of an inductor 2000 according to the embodiment of the present disclosure. The inductor 2000 illustrated in FIG. 34 is used as, for example, an inductor of the VCO circuit 1500.

For example, the inductor 2000 has a guard ring 2200 around a resonance inductor 2100 in a layout on the RF chip. The guard ring 2200 has a plurality of through vias 2300 driven across a wiring layer including a plurality of layers of a CMOS process.

In this manner, the "guard ring" for which the GND is strengthened by driving the through vias 2300 is disposed around the resonance inductor 2100. By using the inductor 2000, the VCO circuit 1500 can lower a level of electromagnetic mutual coupling of the inductors.

Generally, in development of an RFIC chip, a developer uses an inductor part having an L value to be used from among inductor options prepared in a design kit prepared by a CMOS process vendor.

As described above, when a plurality of inductors are disposed on the same chip, various problems with performance may occur due to electromagnetic mutual coupling. In addition, since a phenomenon as this problem occurs due to electromagnetic field mutual coupling on the layout, it is difficult to reflect the phenomenon on a simulation.

Therefore, in the present embodiment, it is assumed that the VCO circuit 1500 has the inductors around which the "guard ring" is disposed. As a result, the VCO circuit 1500 can lower the level of electromagnetic mutual coupling between the inductors.

(Arrangement of Inductors)

In addition, mutual coupling of the inductors may be suppressed by devising the arrangement of the inductors. For example, in the VCO circuit 1500 according to the present embodiment, in the layout on the RF chip, the plurality of resonance inductors are arranged apart from each other (at a predetermined distance) so as to further reduce the effect of electromagnetic mutual coupling on the layout.

As a result, the VCO circuit 1500 can lower the level of electromagnetic mutual coupling between the inductors.

<<7. Other Embodiments>>

The processing according to each embodiment described above may be performed in various different modes other than each embodiment described above.

For example, in each of the above-described embodiments, the UL Tx switching in a band pair (two band candidates) and/or four band candidates has been mainly described, but the number of band candidates to be subjected to the UL Tx switching is not limited to two and/or three. The number of band candidates may be three or five or more.

A control device that controls the base station device 20 and the terminal device 40 in the present embodiment may be implemented by a dedicated computer system or may be implemented by a general-purpose computer system.

For example, a communication program for performing the above-described operations is stored in a computer-readable recording medium such as an optical disc, a semiconductor memory, a magnetic tape, or a flexible disk, and distributed. Then, for example, the program is installed in a computer, and the control device is configured by performing the above-described processing. At this time, the control device may be a device (for example, a personal computer) outside the base station device 20 and the terminal device 40. Furthermore, the control device may be a device (for example, the control units 24 and 450) inside the base station device 20 and the terminal device 40.

In addition, the above communication program may be stored in a disk device included in a server on a network such as the Internet so that the communication program can be downloaded to a computer. In addition, the above-described functions may be implemented by cooperation of an operating system (OS) and application software. In this case, a portion other than the OS may be stored in a medium and distributed, or a portion other than the OS may be stored in a server and downloaded to a computer.

Among the processes described in the above embodiments, all or a part of the processes described as being performed automatically can be performed manually, or all or a part of the processes described as being performed manually can be performed automatically by a known method. In addition, the processing procedures, specific names, and information including various data and parameters described above in the document and illustrated in the drawings can be arbitrarily changed unless otherwise specified. For example, the various types of information illustrated in each drawing are not limited to the illustrated information.

In addition, each component of each device illustrated in the drawings is functionally conceptual, and is not necessarily physically configured as illustrated in the drawings. That is, a specific form of distribution and integration of each device is not limited to the illustrated form, and all or a part thereof can be functionally or physically distributed and integrated in an arbitrary unit according to various loads, usage conditions, and the like. Note that the distribution and integration may be performed dynamically.

In addition, the above-described embodiments can be appropriately combined within a region in which the processing contents do not contradict each other. Furthermore, the order of each step illustrated in the flowchart of the above-described embodiment can be appropriately changed.

Furthermore, for example, the present embodiment can be implemented as any configuration constituting a device or a system, for example, a processor as a system large scale integration (LSI) or the like, a module using a plurality of processors or the like, a unit using a plurality of modules or the like, a set obtained by further adding other functions to a unit, or the like (that is, a configuration of a part of the device).

Note that, in the present embodiment, the system means a set of a plurality of components (devices, modules (parts), or the like), and it does not matter whether or not all the components are in the same housing. Therefore, a plurality of devices housed in separate housings and connected via a network and one device in which a plurality of modules is housed in one housing are both systems.

Furthermore, for example, the present embodiment can take a configuration of cloud computing in which one function is shared and processed by a plurality of devices in cooperation via a network.

<<8. Conclusion>>

Although the embodiments of the present disclosure have been described above, the technical scope of the present disclosure is not limited to the above-described embodiments as it is, and various modifications can be made without departing from the gist of the present disclosure. In addition, components of different embodiments and modifications may be appropriately combined. That is, at least a part of the one or more embodiments described above may be implemented in combination with at least another part of the one or more embodiments described above.

Furthermore, the effects in each embodiment described in the present specification are merely examples and are not limited, and other effects may be provided.

Note that the present technology can also include the following configurations.

(1) A terminal device comprising:

a wireless transceiver; and
a processor that transmits and receives a signal via the wireless transceiver, wherein
the processor
transmits UE capability information including a capability indicating a period of a switching gap of dynamic uplink (UL) transmission switching across three or more bands,
receives setting information regarding the dynamic UL transmission switching, and
performs the dynamic UL transmission switching on a basis of the setting information,
the capability is set for each of band groups including the three or more bands, and
when the processor performs the dynamic UL transmission switching, the processor does not perform UL transmission on any carrier in the period indicated by the capability.

(2) The terminal device according to (1), wherein

the wireless transceiver includes a first transmission unit and a second transmission unit,
the dynamic UL transmission switching is switching between first transmission and second transmission,
the first transmission is any one of
transmission of the signal by the first transmission unit and the second transmission unit using a first UL carrier included in a first band among the three or more bands, and
a first carrier aggregation in which the first transmission unit transmits the signal using a second UL carrier included in a second band among the three or more bands and the second transmission unit transmits the signal using a third UL carrier included in a third band among the three or more bands and different from the second UL carrier,
the second transmission is any one of
transmission of the signal by the first transmission unit and the second transmission unit using a fourth UL carrier included in a fourth band among the three or more bands, and
a second carrier aggregation in which the first transmission unit transmits the signal using a fifth UL carrier included in a fifth band among the three or more bands and the second transmission unit transmits the signal using a sixth UL carrier included in a sixth band among the three or more bands and different from the fifth UL carrier, and
at least one of the first to third bands and the first to third UL carriers before the switching is different from at least one of the fourth to sixth bands and the fourth to sixth UL carriers after the switching.

(3) The terminal device according to (2), wherein
the period indicated by the capability is applied as a period in which UL transmission is not performed while the switching is performed from the first transmission to the second transmission between two bands among the three or more bands associated with the capability or between two of the UL carriers.
(4) The terminal device according to any one of (1) to (3), wherein

a first capability setting value indicating the period of the switching gap of the dynamic UL transmission switching across the three or more bands is
a value longer than a second capability setting value indicating the period of the switching gap of the dynamic UL transmission switching in two band pairs.

(5) The terminal device according to (4), wherein the first capability setting value is any one value of 35 us, 140 us, and 210 us, and the first capability setting value is set for each of the band groups.
(6) The terminal device according to (2) or (3), wherein

one of the second band and the third band is a TDD band and other of the second band and the third band is an FDD band, or both of the second band and the third band are TDD bands, and
one of the fifth band and the sixth band is a TDD band and other of the fifth band and the sixth band is an FDD band, or both of the fifth band and the sixth band are TDD bands.

(7) The terminal device according to any one of (1) to (6), wherein

the setting information includes pair information regarding two band pairs in which the dynamic UL transmission switching is performed, and
the dynamic UL transmission switching is indicated by DCI transmitted from a base station device.

(8) The terminal device according to any one of (1) to (7), wherein
at least one of the three or more bands belongs to FR1, and at least one of the other bands belongs to FR2.
(9) The terminal device according to any one of (1) to (8), wherein the three or more bands do not include an ultra-high band.
(10) The terminal device according to (2), wherein

the wireless transceiver further includes a TDD reception circuit that receives the signal in a TDD band,
at least one of the first transmission unit and the second transmission unit includes a TDD transmission circuit that transmits the signal in the TDD band and an FDD transmission circuit that transmits the signal in an FDD band, and
the wireless transceiver continues the reception by the TDD reception circuit while performing the first transmission or the second transmission using the FDD transmission circuit.

(11) The terminal device according to (10), wherein
the wireless transceiver further includes:

a first local oscillator that generates a first local signal to be used for frequency modulation in the TDD transmission circuit and a second local signal to be used for frequency modulation in the FDD transmission circuit;
a second local oscillator that generates a third local signal to be used for frequency demodulation in the TDD reception circuit and is different from the first local oscillator; and
a selection circuit that selects which of the signals generated by the TDD transmission circuit and the FDD transmission circuit is to be transmitted.

(12) The terminal device according to any one of (1) to (11), wherein the processor performs the dynamic UL transmission switching a predetermined number of times per predetermined period.
(13) The terminal device according to (12), wherein the processor transmits UE capability information including at least one of the predetermined period and the predetermined number of times.
(14) A base station device comprising:

a wireless transceiver; and
a processor that transmits and receives a signal via the wireless transceiver, wherein
the processor
receives, from a terminal device, UE capability information including a capability indicating a period of a switching gap of dynamic uplink (UL) transmission switching across three or more bands, and
transmits setting information regarding the dynamic UL transmission switching to the terminal device,
the setting information is used to perform the dynamic UL transmission switching by the terminal device,
the capability is set for each of band groups including the three or more bands, and
when the dynamic UL transmission switching is performed, UL transmission is not performed on any carrier in the period indicated by the capability.

(15) A communication method of a terminal device including a wireless transceiver and a processor that transmits and receives a signal via the wireless transceiver, the communication method comprising:

transmitting UE capability information including a capability indicating a period of a switching gap of dynamic UL transmission switching across three or more bands;
receiving setting information regarding the dynamic UL transmission switching; and
performing the dynamic UL transmission switching on a basis of the setting information, wherein
the capability is set for each of band groups including the three or more bands, and
when the dynamic UL transmission switching is performed, UL transmission is not performed on any carrier in the period indicated by the capability.

(16) A communication method of a base station device including a wireless transceiver and a processor that transmits and receives a signal via the wireless transceiver, the communication method comprising:

receiving, from a terminal device, UE capability information including a capability indicating a period of a switching gap of dynamic UL transmission switching across three or more bands; and
transmitting setting information regarding the dynamic UL transmission switching to the terminal device, wherein
the setting information is used to perform the dynamic UL transmission switching by the terminal device,

the capability is set for each of band groups including the three or more bands, and
when the dynamic UL transmission switching is performed, UL transmission is not performed on any carrier in the period indicated by the capability.

Reference Signs List

1 COMMUNICATION SYSTEM
20 BASE STATION DEVICE
21, 410 SIGNAL PROCESSING UNIT
22, 420 STORAGE UNIT
23 NETWORK COMMUNICATION UNIT
24, 450 CONTROL UNIT
40 TERMINAL DEVICE
211, 411 RECEPTION PROCESSING UNIT
313, 413 ANTENNA
412-1 FIRST TRANSMISSION PROCESSING UNIT
412-2 SECOND TRANSMISSION PROCESSING UNIT
440 INPUT/OUTPUT UNIT

## Claims

**1.** A terminal device comprising:

a wireless transceiver; and
a processor that transmits and receives a signal via the wireless transceiver, wherein
the processor
transmits UE capability information including a capability indicating a period of a switching gap of dynamic uplink (UL) transmission switching across three or more bands,
receives setting information regarding the dynamic UL transmission switching, and
performs the dynamic UL transmission switching on a basis of the setting information,
the capability is set for each of band groups including the three or more bands, and
when the processor performs the dynamic UL transmission switching, the processor does not perform UL transmission on any carrier in the period indicated by the capability.

**2.** The terminal device according to claim 1, wherein

the wireless transceiver includes a first transmission unit and a second transmission unit,
the dynamic UL transmission switching is switching between first transmission and second transmission,
the first transmission is any one of
transmission of the signal by the first transmission unit and the second transmission unit using a first UL carrier included in a first band among the three or more bands, and
a first carrier aggregation in which the first transmission unit transmits the signal using a second UL carrier included in a second band among the three or more bands and the second transmission unit transmits the signal using a third UL carrier included in a third band among the three or more bands and different from the second UL carrier,
the second transmission is any one of
transmission of the signal by the first transmission unit and the second transmission unit using a fourth UL carrier included in a fourth band among the three or more bands, and
a second carrier aggregation in which the first transmission unit transmits the signal using a fifth UL carrier included in a fifth band among the three or more bands and the second transmission unit transmits the signal using a sixth UL carrier included in a sixth band among the three or more bands and different from the fifth UL carrier, and
at least one of the first to third bands and the first to third UL carriers before the switching is different from at least one of the fourth to sixth bands and the fourth to sixth UL carriers after the switching.

**3.** The terminal device according to claim 2, wherein

the period indicated by the capability is applied as a period in which UL transmission is not performed while the switching is performed from the first transmission to the second transmission between two bands among the three or more bands associated with the capability or between two of the UL carriers.

**4.** The terminal device according to claim 1, wherein

a first capability setting value indicating the period of the switching gap of the dynamic UL transmission switching across the three or more bands is
a value longer than a second capability setting value indicating the period of the switching gap of the dynamic UL transmission switching in two band pairs.

**5.** The terminal device according to claim 4, wherein the first capability setting value is any one value of 35 us, 140 us, and 210 us, and the first capability setting value is set for each of the band groups.

**6.** The terminal device according to claim 2, wherein

one of the second band and the third band is a TDD band and other of the second band and the third band is an FDD band, or both of the second band and the third band are TDD bands, and
one of the fifth band and the sixth band is a TDD band and other of the fifth band and the sixth band is an FDD band, or both of the fifth band and the sixth band are TDD bands.

**7.** The terminal device according to claim 1, wherein

the setting information includes pair information regarding two band pairs in which the dynamic UL transmission switching is performed, and
the dynamic UL transmission switching is indicated by DCI transmitted from a base station device.

**8.** The terminal device according to claim 1, wherein
at least one of the three or more bands belongs to FR1, and at least one of the other bands belongs to FR2.

**9.** **.** The terminal device according to claim 1, wherein the three or more bands do not include an ultra-high band.

**10.** The terminal device according to claim 2, wherein

the wireless transceiver further includes a TDD reception circuit that receives the signal in a TDD band,
at least one of the first transmission unit and the second transmission unit includes a TDD transmission circuit that transmits the signal in the TDD band and an FDD transmission circuit that transmits the signal in an FDD band, and
the wireless transceiver continues the reception by the TDD reception circuit while performing the first transmission or the second transmission using the FDD transmission circuit.

**11.** The terminal device according to claim 10, wherein
the wireless transceiver further includes:

a first local oscillator that generates a first local signal to be used for frequency modulation in the TDD transmission circuit and a second local signal to be used for frequency modulation in the FDD transmission circuit;
a second local oscillator that generates a third local signal to be used for frequency demodulation in the TDD reception circuit and is different from the first local oscillator; and
a selection circuit that selects which of the signals generated by the TDD transmission circuit and the FDD transmission circuit is to be transmitted.

**12.** The terminal device according to claim 1, wherein the processor performs the dynamic UL transmission switching a predetermined number of times per predetermined period.

**13.** The terminal device according to claim 12,
wherein the processor transmits UE capability information including at least one of the predetermined period and the predetermined number of times.

**14.** A base station device comprising:

a wireless transceiver; and
a processor that transmits and receives a signal via the wireless transceiver, wherein
the processor
receives, from a terminal device, UE capability information including a capability indicating a period of a switching gap of dynamic uplink (UL) transmission switching across three or more bands, and
transmits setting information regarding the dynamic UL transmission switching to the terminal device,
the setting information is used to perform the dynamic UL transmission switching by the terminal device,
the capability is set for each of band groups including the three or more bands, and
when the dynamic UL transmission switching is performed, UL transmission is not performed on any carrier in the period indicated by the capability.

**15.** A communication method of a terminal device including a wireless transceiver and a processor that transmits and receives a signal via the wireless transceiver, the communication method comprising:

transmitting UE capability information including a capability indicating a period of a switching gap of dynamic UL transmission switching across three or more bands;
receiving setting information regarding the dynamic UL transmission switching; and
performing the dynamic UL transmission switching on a basis of the setting information, wherein
the capability is set for each of band groups including the three or more bands, and
when the dynamic UL transmission switching is performed, UL transmission is not performed on any carrier in the period indicated by the capability.

**16.** A communication method of a base station device including a wireless transceiver and a processor that transmits and receives a signal via the wireless transceiver, the communication method comprising:

receiving, from a terminal device, UE capability information including a capability indicating a period of a switching gap of dynamic UL transmission switching across three or more bands; and
transmitting setting information regarding the dynamic UL transmission switching to the terminal device, wherein
the setting information is used to perform the dynamic UL transmission switching by the terminal device,
the capability is set for each of band groups including the three or more bands, and
when the dynamic UL transmission switching is performed, UL transmission is not performed on any carrier in the period indicated by the capability.

FIG.1

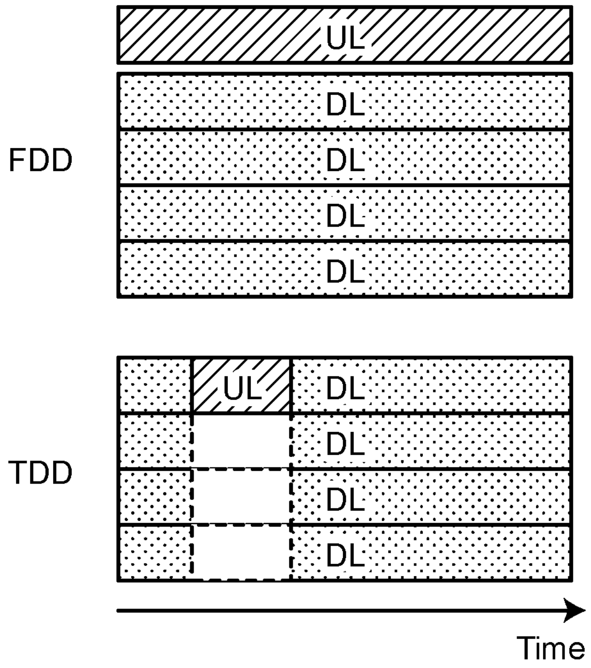
UL
DL
DL
DL
DL
FDD
UL
DL
DL
DL
DL
TDD
Time

FIG.2

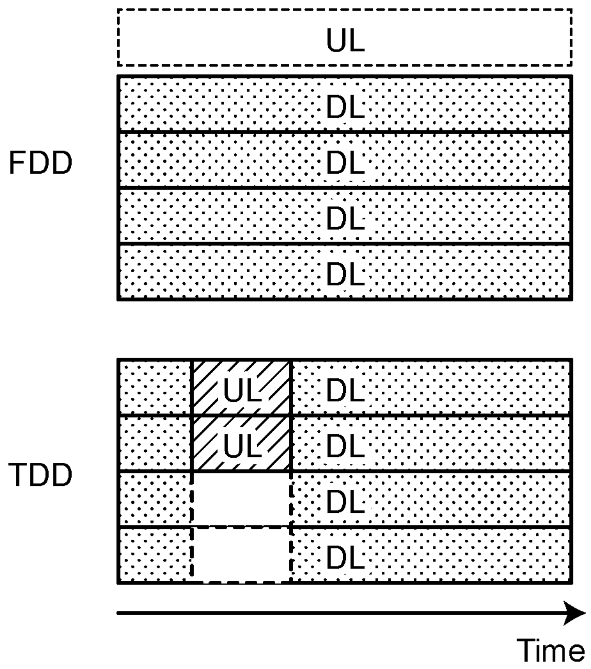
UL
DL
DL
DL
DL
FDD
UL
DL
UL
DL
DL
DL
TDD
Time

FIG.3

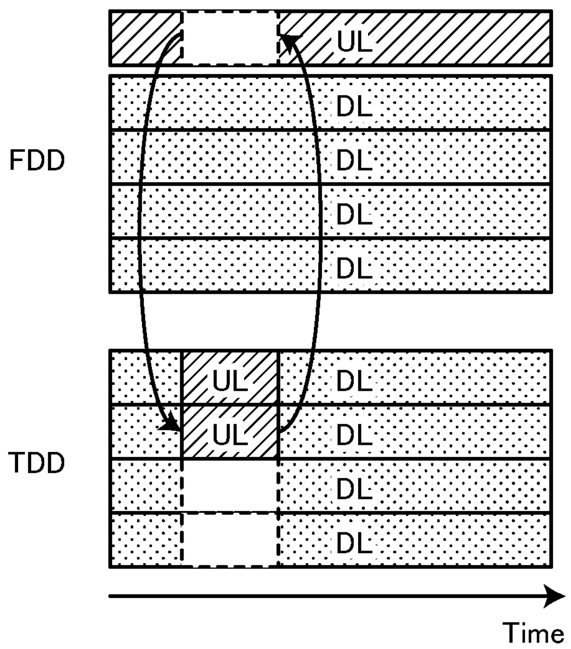
UL
DL
DL
DL
DL
FDD
UL
DL
UL
DL
TDD
DL
DL
Time

FIG.4

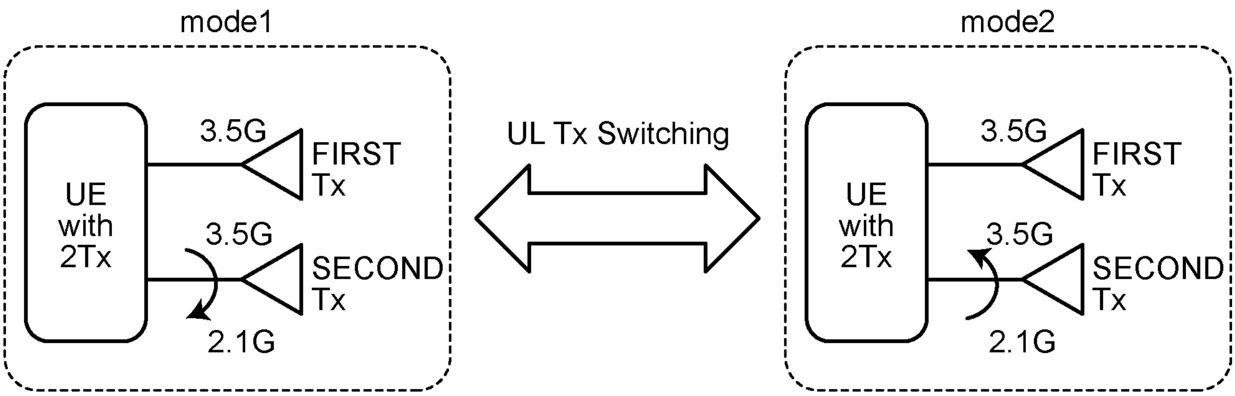
mode1
UE
with
2Tx
3.5G
FIRST
Tx
3.5G
SECOND
Tx
2.1G
UL Tx Switching
mode2
UE
with
2Tx
3.5G
FIRST
Tx
3.5G
SECOND
Tx
2.1G

FIG.5

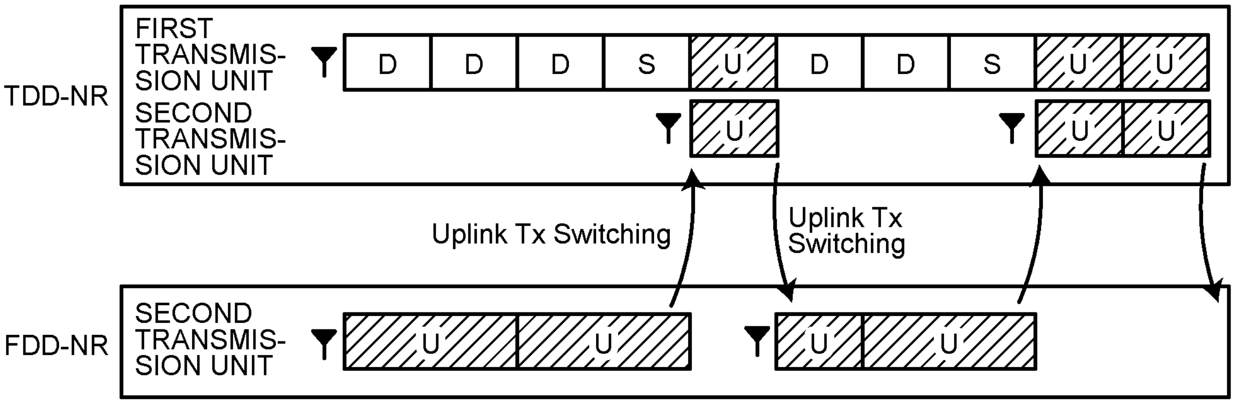
TDD-NR
FIRST TRANSMISSION UNIT
D D D S U D D S U U
SECOND TRANSMISSION UNIT
U U U
Uplink Tx Switching
Uplink Tx Switching
FDD-NR
SECOND TRANSMISSION UNIT
U U U U

FIG.6

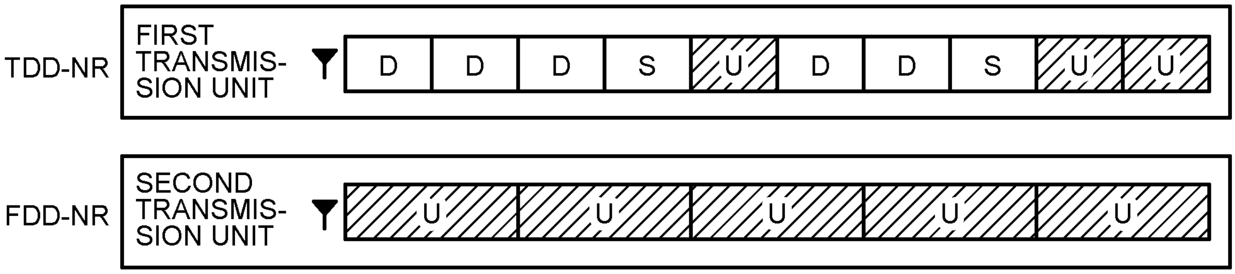
TDD-NR
FIRST TRANSMISSION UNIT
D D D S U D D S U U
FDD-NR
SECOND TRANSMISSION UNIT
U U U U U

FIG.7

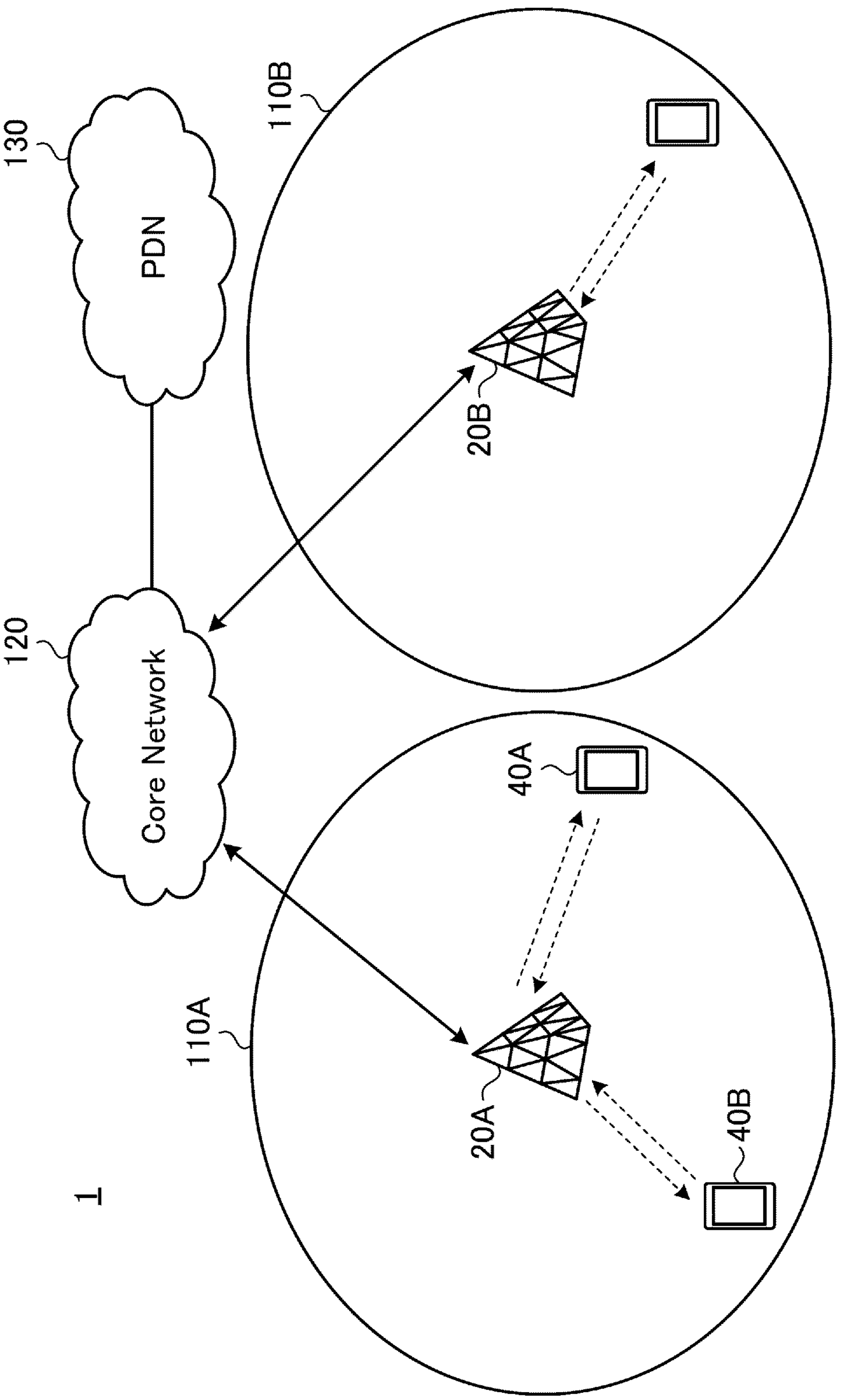

FIG.8

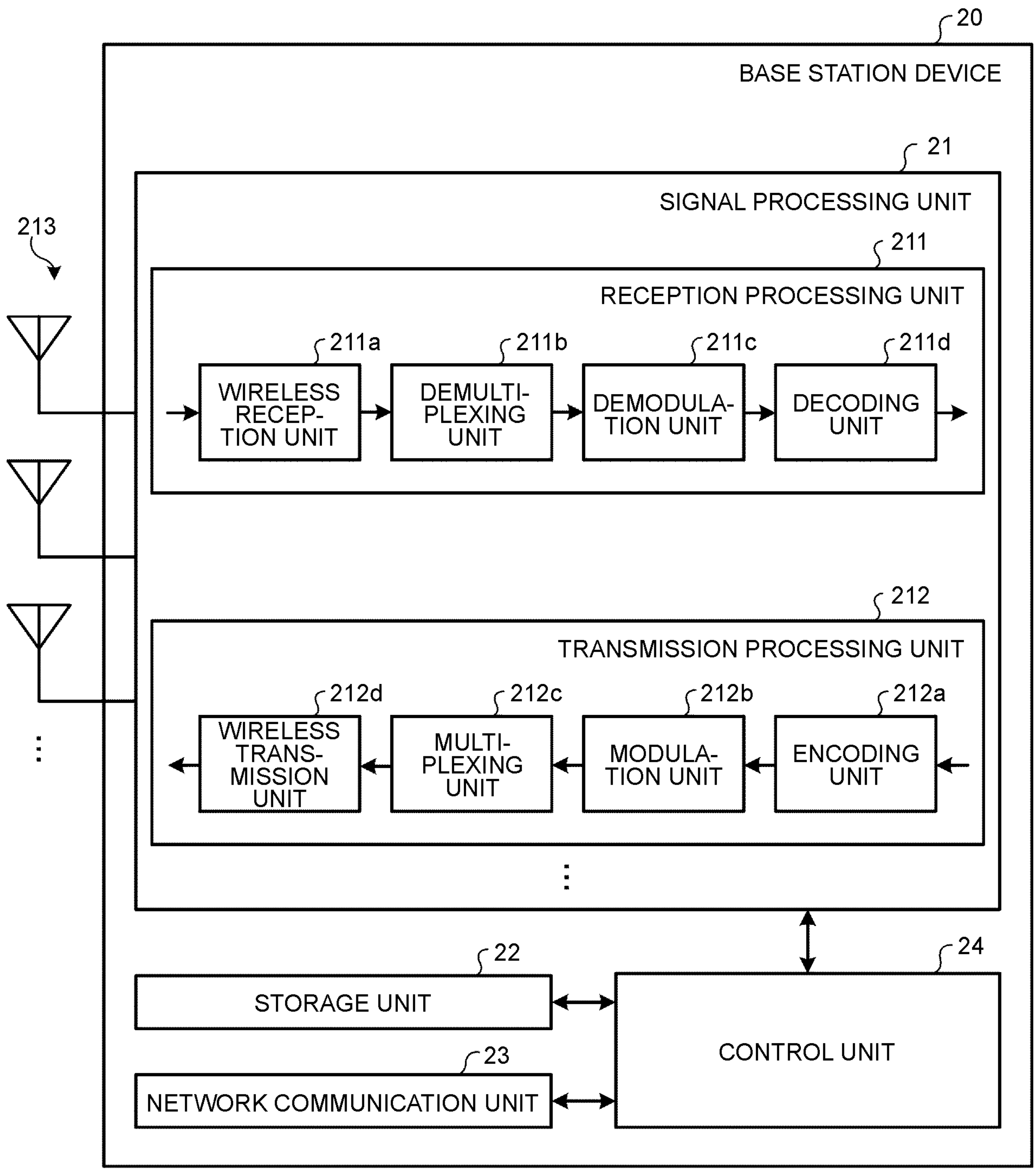
20
BASE STATION DEVICE
21
SIGNAL PROCESSING UNIT
211
RECEPTION PROCESSING UNIT
213
211a
WIRELESS RECEP-TION UNIT
211b
DEMULTI-PLEXING UNIT
211c
DEMODULA-TION UNIT
211d
DECODING UNIT
212
TRANSMISSION PROCESSING UNIT
212d
WIRELESS TRANS-MISSION UNIT
212c
MULTI-PLEXING UNIT
212b
MODULA-TION UNIT
212a
ENCODING UNIT
22
STORAGE UNIT
23
NETWORK COMMUNICATION UNIT
24
CONTROL UNIT

FIG.9

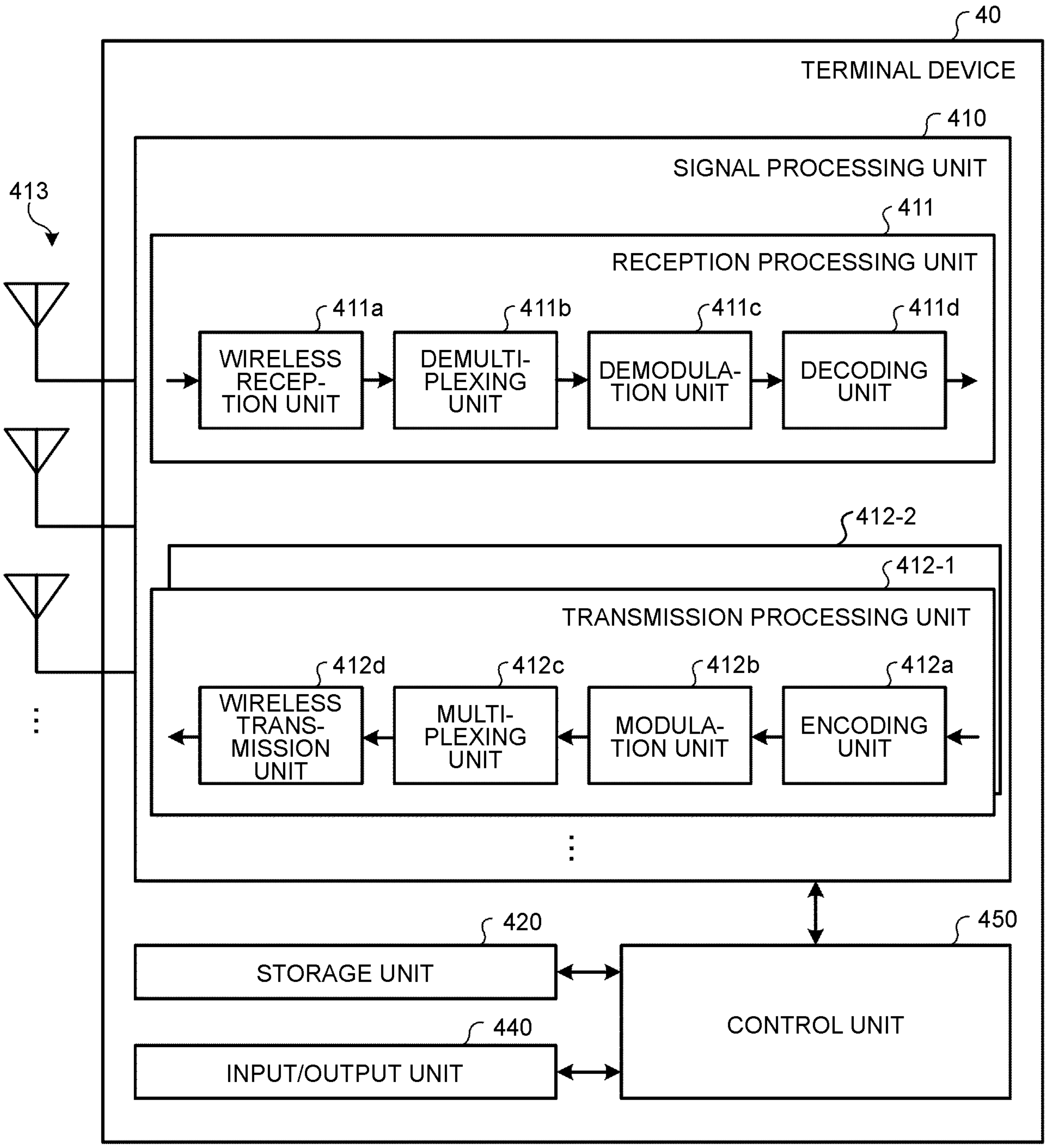
40
TERMINAL DEVICE
410
SIGNAL PROCESSING UNIT
413
411
RECEPTION PROCESSING UNIT
411a
411b
411c
411d
WIRELESS RECEPTION UNIT
DEMULTIPLEXING UNIT
DEMODULATION UNIT
DECODING UNIT
412-2
412-1
TRANSMISSION PROCESSING UNIT
412d
412c
412b
412a
WIRELESS TRANSMISSION UNIT
MULTIPLEXING UNIT
MODULATION UNIT
ENCODING UNIT
420
450
STORAGE UNIT
CONTROL UNIT
440
INPUT/OUTPUT UNIT

FIG.10

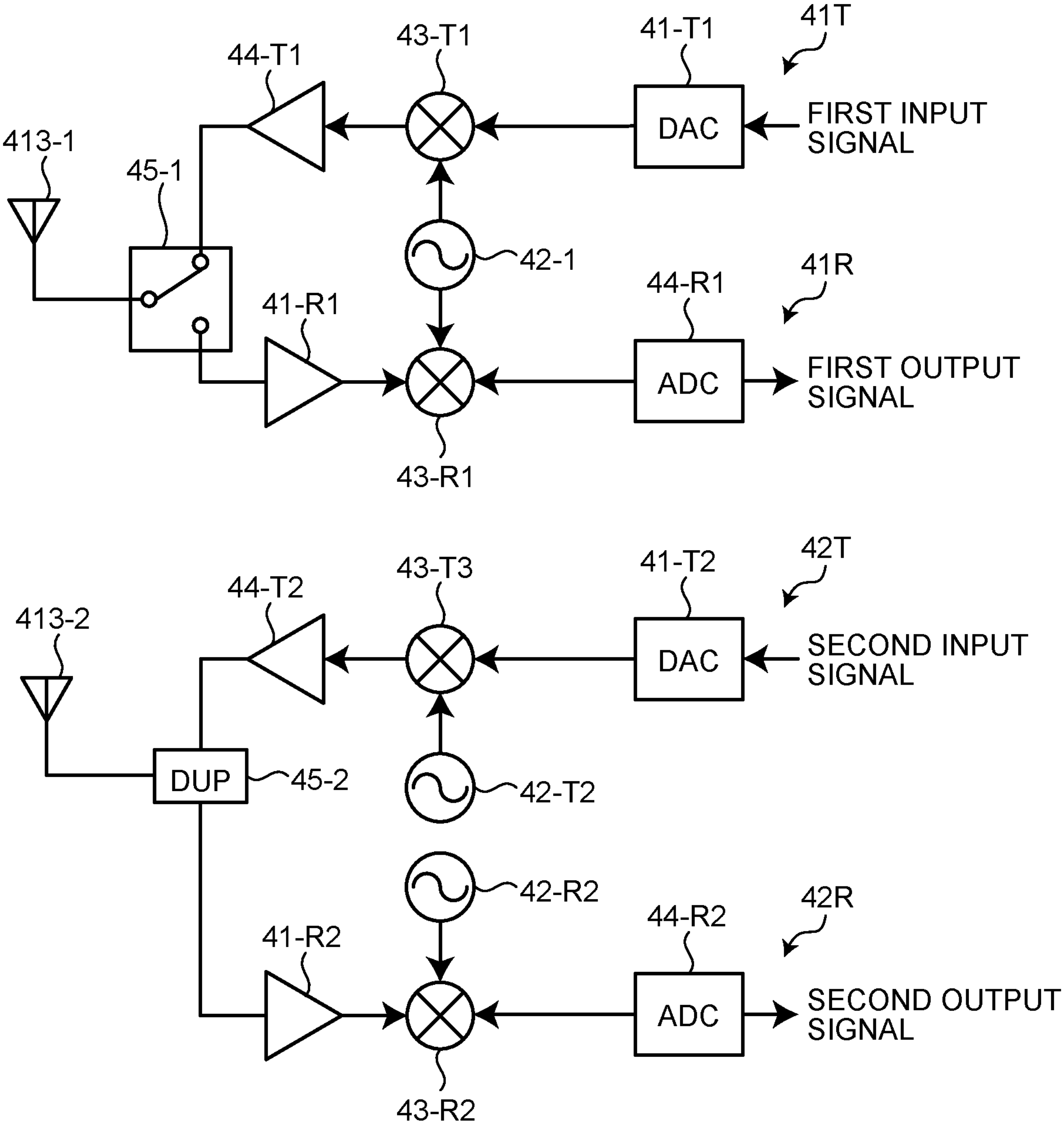
41T
41-T1
43-T1
44-T1
DAC
FIRST INPUT SIGNAL
413-1
45-1
42-1
41R
44-R1
41-R1
ADC
FIRST OUTPUT SIGNAL
43-R1
42T
41-T2
43-T3
44-T2
DAC
SECOND INPUT SIGNAL
413-2
DUP
45-2
42-T2
42-R2
42R
44-R2
41-R2
ADC
SECOND OUTPUT SIGNAL
43-R2

FIG.11

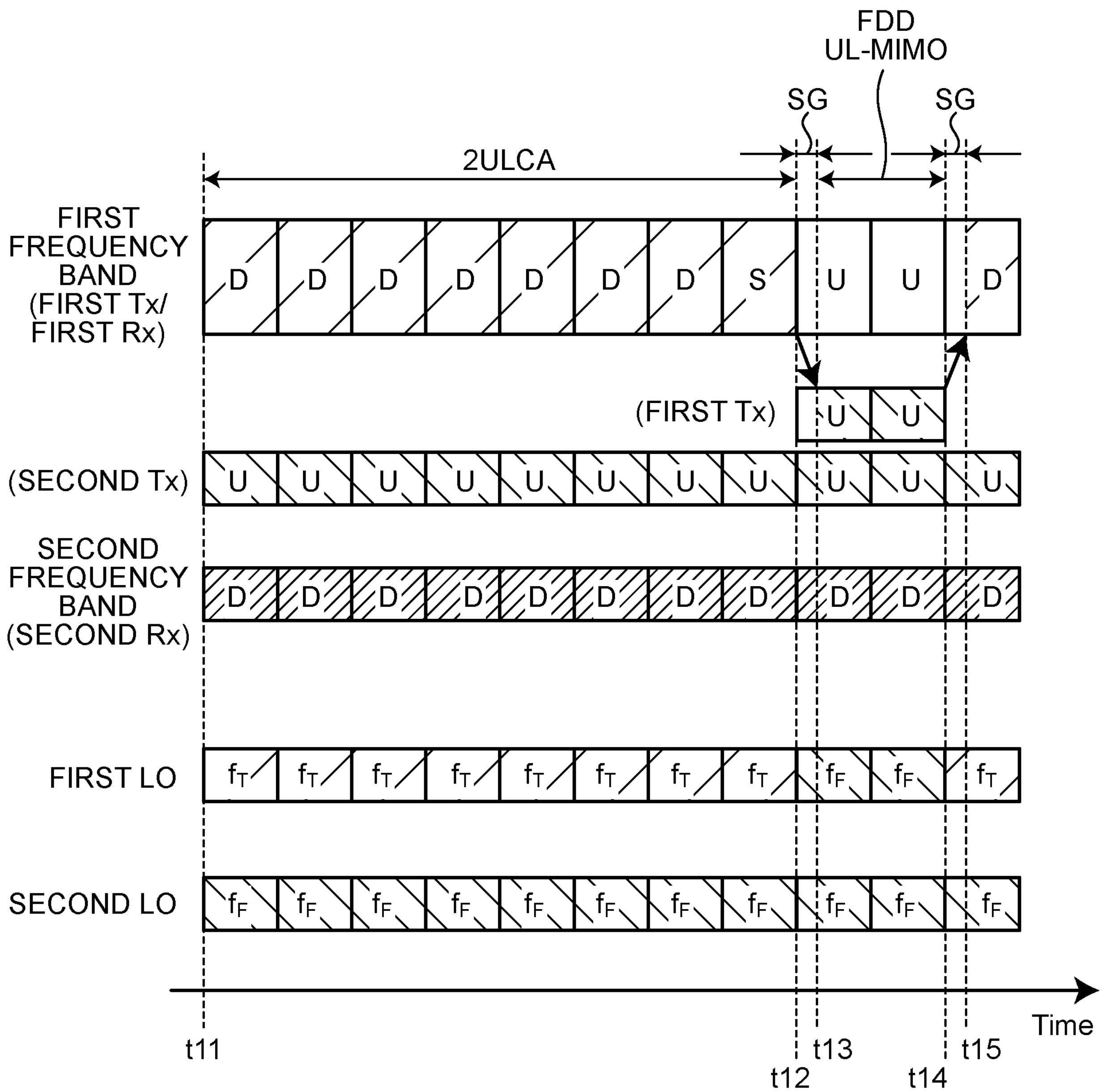

FDD
UL-MIMO
SG
SG
2ULCA
FIRST FREQUENCY BAND (FIRST Tx/ FIRST Rx)
D D D D D D D S U U D
(FIRST Tx)
U U
(SECOND Tx)
U U U U U U U U U U U
SECOND FREQUENCY BAND (SECOND Rx)
D D D D D D D D D D D
FIRST LO
$f_T$ $f_T$ $f_T$ $f_T$ $f_T$ $f_T$ $f_T$ $f_T$ $f_F$ $f_F$ $f_T$
SECOND LO
$f_F$ $f_F$ $f_F$ $f_F$ $f_F$ $f_F$ $f_F$ $f_F$ $f_F$ $f_F$ $f_F$
Time
t11
t12
t13
t14
t15

FIG.12

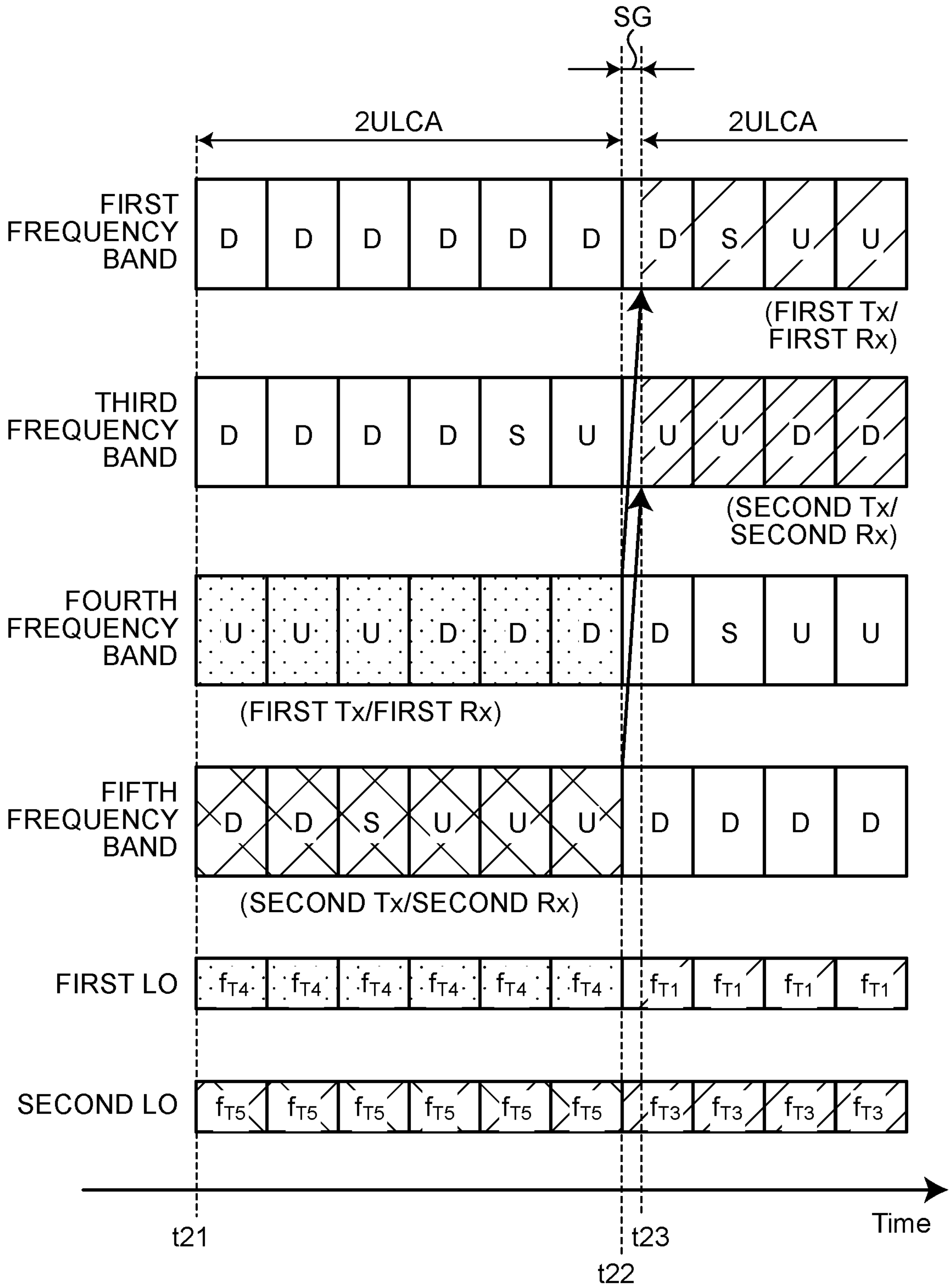
SG
2ULCA
2ULCA
FIRST FREQUENCY BAND
D D D D D D D S U U
(FIRST Tx/ FIRST Rx)
THIRD FREQUENCY BAND
D D D D S U U U D D
(SECOND Tx/ SECOND Rx)
FOURTH FREQUENCY BAND
U U U D D D D S U U
(FIRST Tx/FIRST Rx)
FIFTH FREQUENCY BAND
D D S U U U D D D D
(SECOND Tx/SECOND Rx)
FIRST LO
$f_{T4}$ $f_{T4}$ $f_{T4}$ $f_{T4}$ $f_{T4}$ $f_{T4}$ $f_{T1}$ $f_{T1}$ $f_{T1}$ $f_{T1}$
SECOND LO
$f_{T5}$ $f_{T5}$ $f_{T5}$ $f_{T5}$ $f_{T5}$ $f_{T5}$ $f_{T3}$ $f_{T3}$ $f_{T3}$ $f_{T3}$
Time
t21
t22
t23

FIG.13

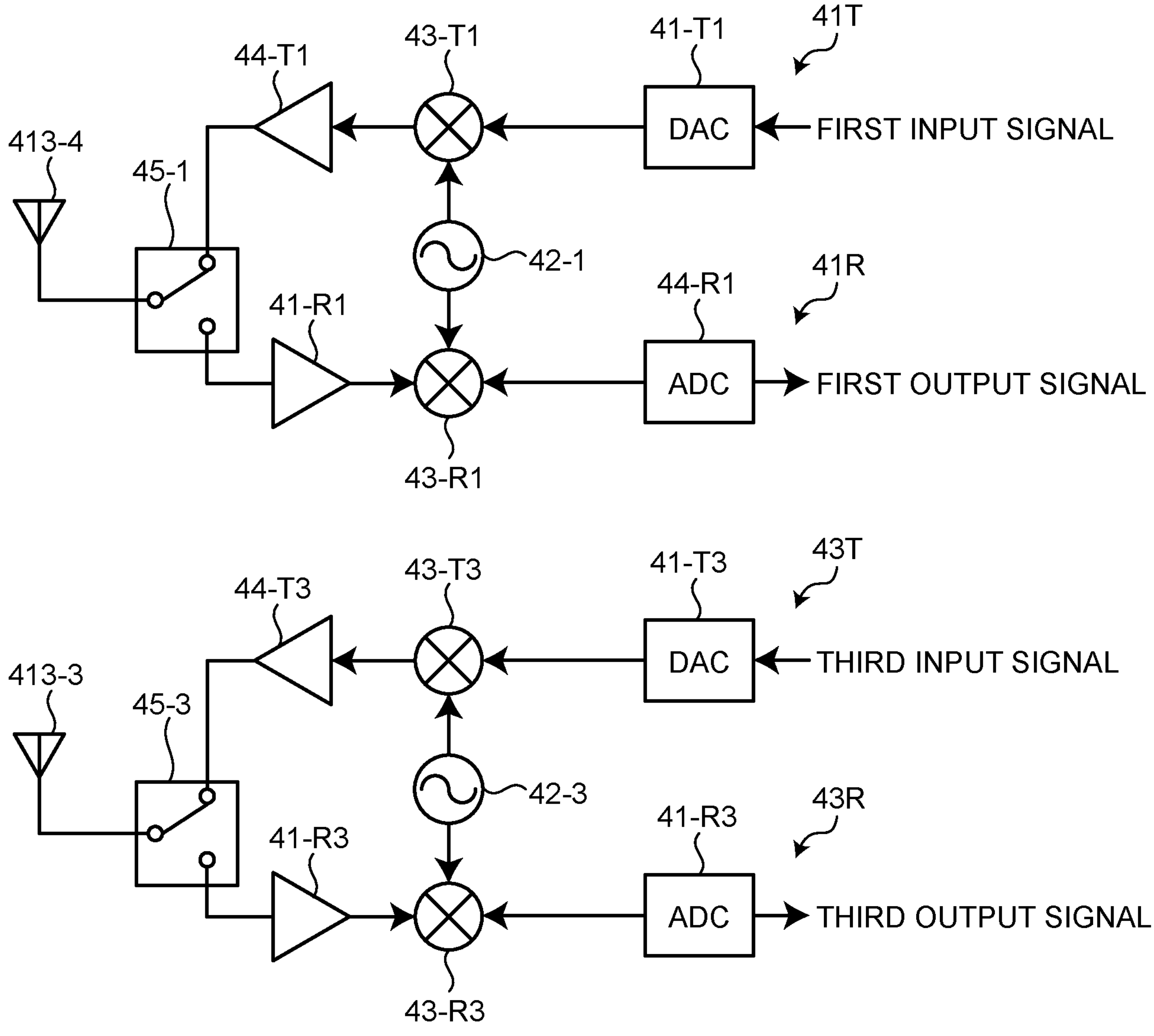
41T
41-T1
43-T1
44-T1
413-4
45-1
DAC
FIRST INPUT SIGNAL
42-1
41R
44-R1
41-R1
ADC
FIRST OUTPUT SIGNAL
43-R1
43T
41-T3
43-T3
44-T3
413-3
45-3
DAC
THIRD INPUT SIGNAL
42-3
43R
41-R3
41-R3
ADC
THIRD OUTPUT SIGNAL
43-R3

FIG.14

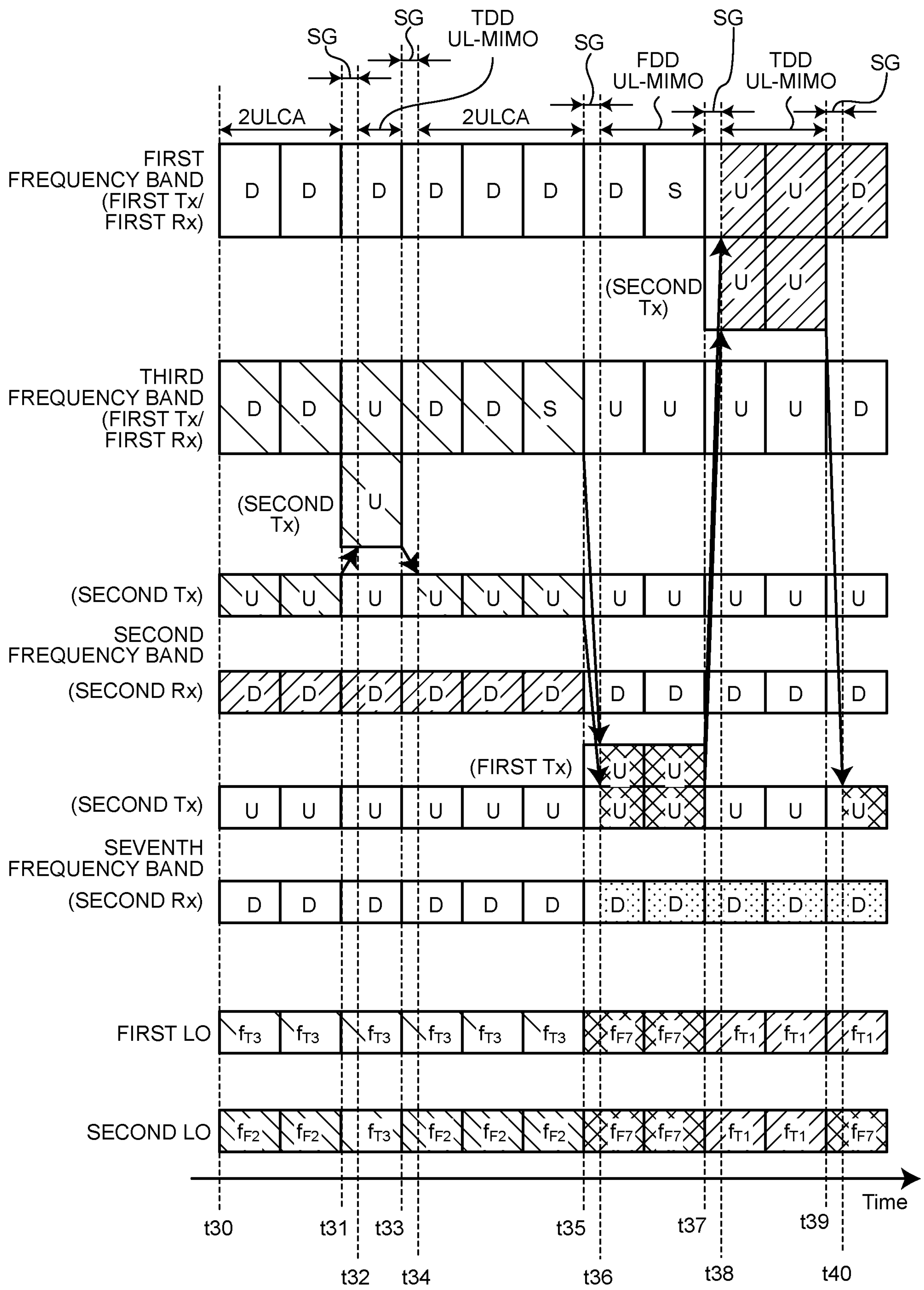
SG
SG
TDD UL-MIMO
SG
FDD UL-MIMO
SG
TDD UL-MIMO
SG
2ULCA
2ULCA
FIRST FREQUENCY BAND (FIRST Tx/ FIRST Rx)
(SECOND Tx)
THIRD FREQUENCY BAND (FIRST Tx/ FIRST Rx)
(SECOND Tx)
(SECOND Tx)
SECOND FREQUENCY BAND
(SECOND Rx)
(FIRST Tx)
(SECOND Tx)
SEVENTH FREQUENCY BAND
(SECOND Rx)
FIRST LO
SECOND LO
D
S
U
Time
t30
t31
t32
t33
t34
t35
t36
t37
t38
t39
t40

FIG.15

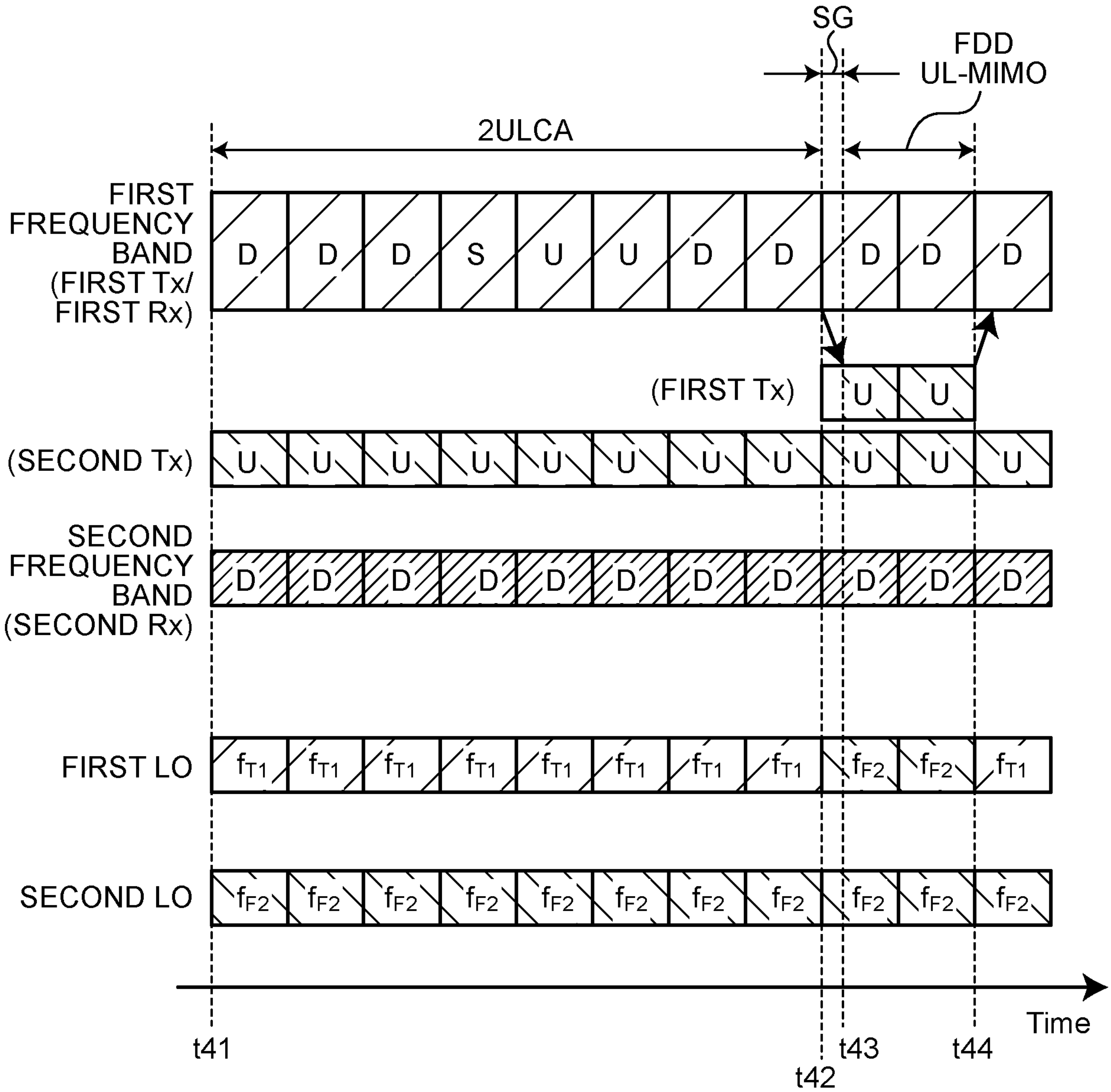
SG
FDD UL-MIMO
2ULCA
FIRST FREQUENCY BAND (FIRST Tx/ FIRST Rx)
D D D S U U D D D D D
(FIRST Tx)
U U
(SECOND Tx)
U U U U U U U U U U U
SECOND FREQUENCY BAND (SECOND Rx)
D D D D D D D D D D D
FIRST LO
$f_{T1}$ $f_{T1}$ $f_{T1}$ $f_{T1}$ $f_{T1}$ $f_{T1}$ $f_{T1}$ $f_{T1}$ $f_{F2}$ $f_{F2}$ $f_{T1}$
SECOND LO
$f_{F2}$ $f_{F2}$ $f_{F2}$ $f_{F2}$ $f_{F2}$ $f_{F2}$ $f_{F2}$ $f_{F2}$ $f_{F2}$ $f_{F2}$ $f_{F2}$
Time
t41
t42
t43
t44

FIG.16

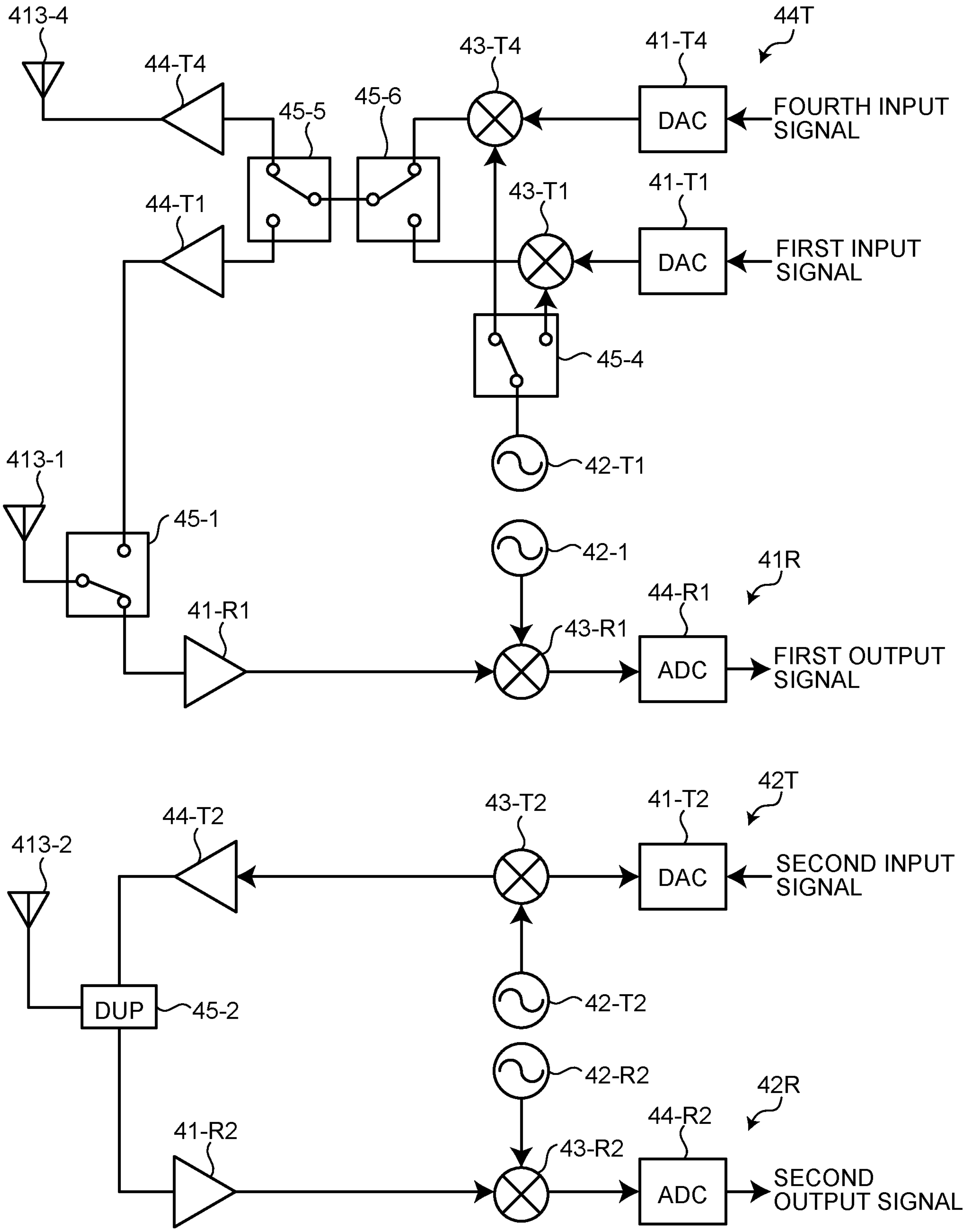
413-4
44T
43-T4
41-T4
44-T4
45-5
45-6
DAC
FOURTH INPUT SIGNAL
41-T1
43-T1
44-T1
DAC
FIRST INPUT SIGNAL
45-4
42-T1
413-1
45-1
42-1
41R
44-R1
41-R1
43-R1
ADC
FIRST OUTPUT SIGNAL
42T
43-T2
41-T2
44-T2
413-2
DAC
SECOND INPUT SIGNAL
DUP
45-2
42-T2
42-R2
42R
44-R2
41-R2
43-R2
ADC
SECOND OUTPUT SIGNAL

FIG.17

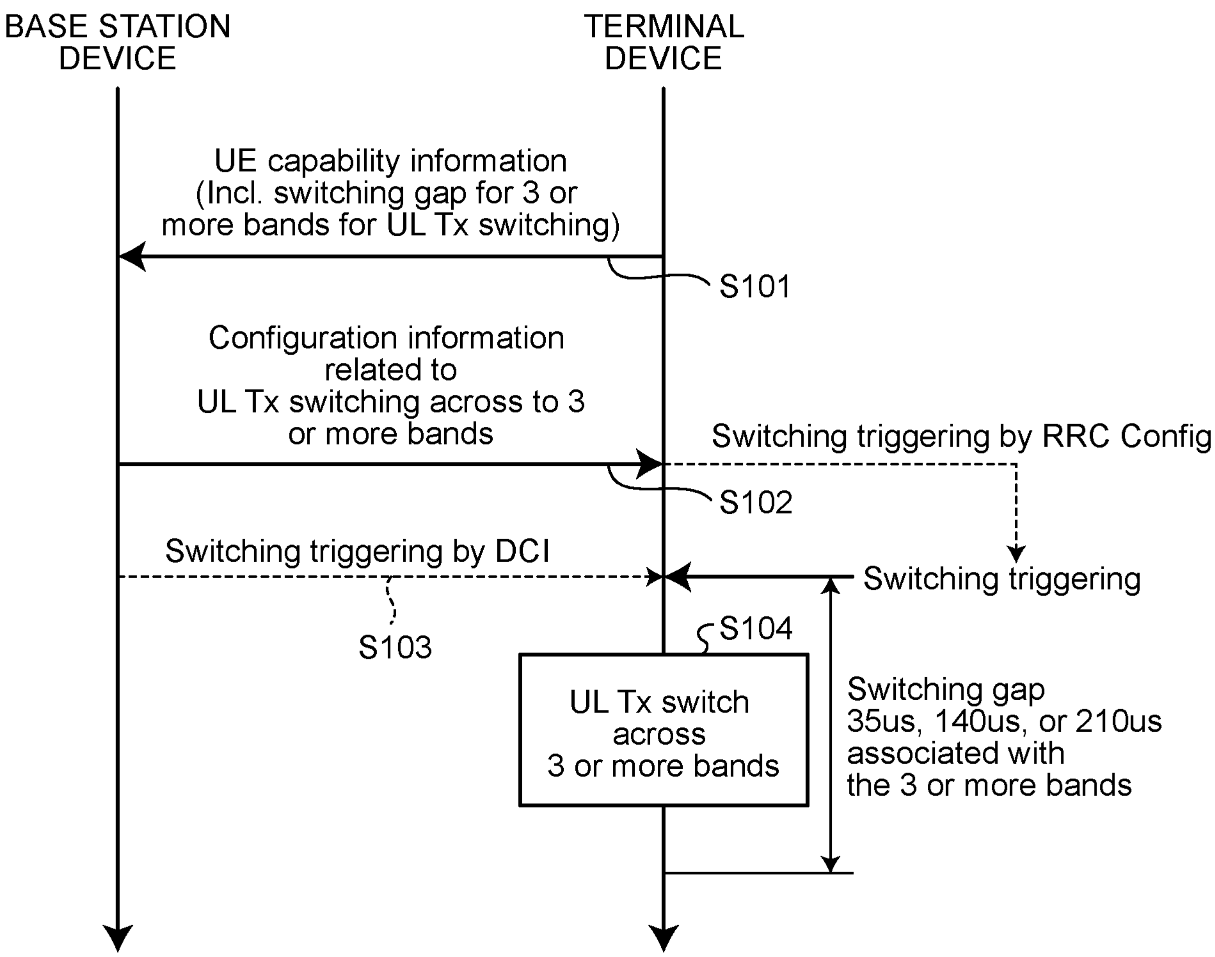
BASE STATION DEVICE
TERMINAL DEVICE
UE capability information (Incl. switching gap for 3 or more bands for UL Tx switching)
S101
Configuration information related to UL Tx switching across to 3 or more bands
Switching triggering by RRC Config
S102
Switching triggering by DCI
S103
Switching triggering
S104
UL Tx switch across 3 or more bands
Switching gap 35us, 140us, or 210us associated with the 3 or more bands

FIG.18

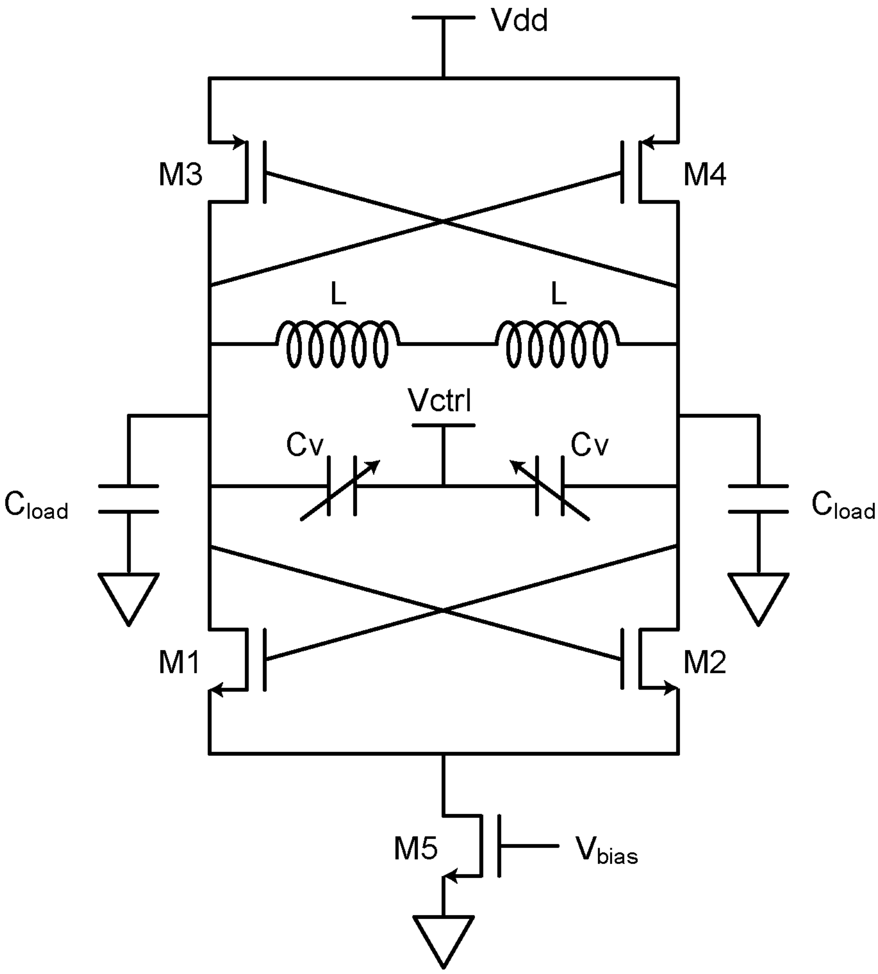
Vdd
M3
M4
L
L
Vctrl
Cv
Cv
$C_{load}$
$C_{load}$
M1
M2
M5
$V_{bias}$

FIG.19

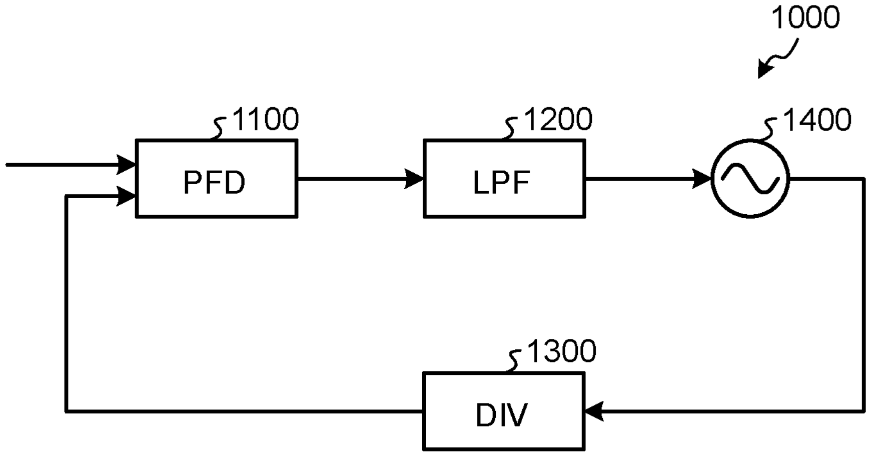
1000
1100
1200
1400
PFD
LPF
1300
DIV

FIG.20

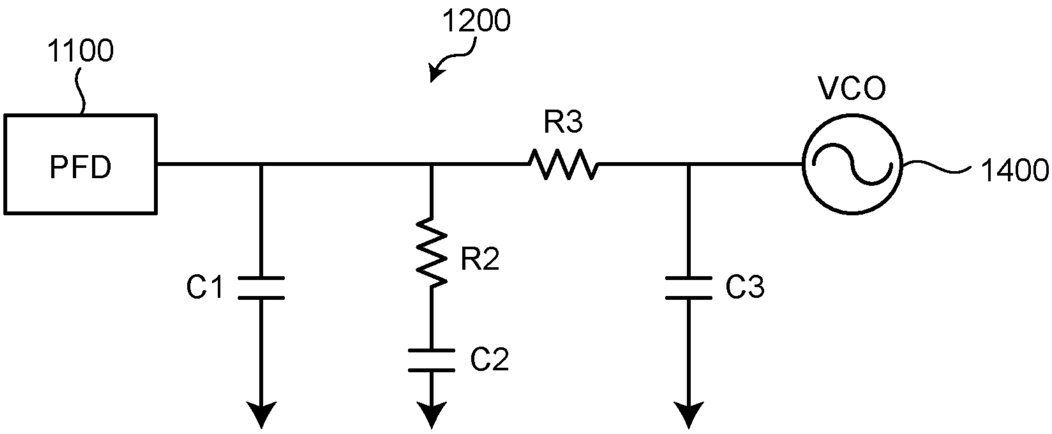

FIG.21

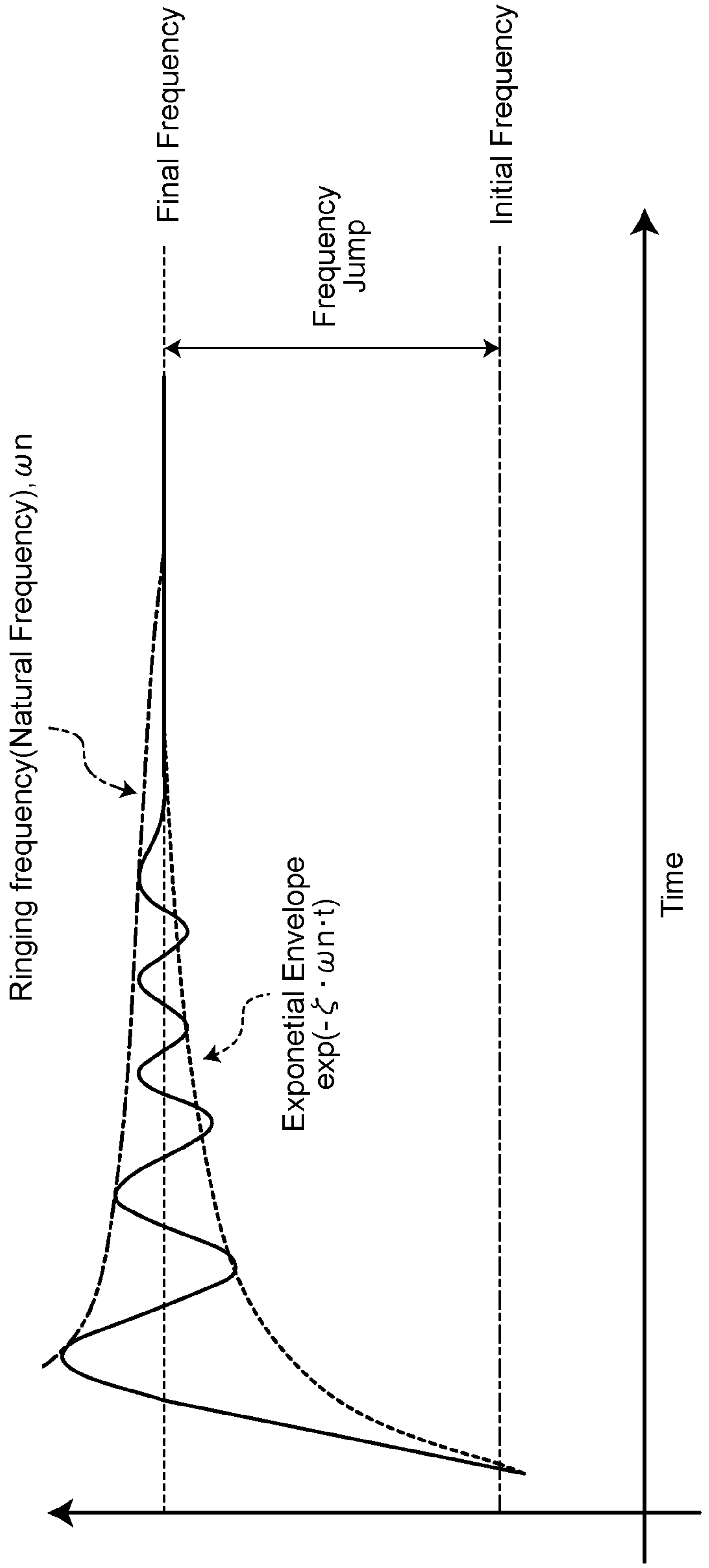
Ringing frequency(Natural Frequency), ωn
Final Frequency
Frequency Jump
Initial Frequency
Exponetial Envelope
exp(-ζ·ωn·t)
Time

FIG.22

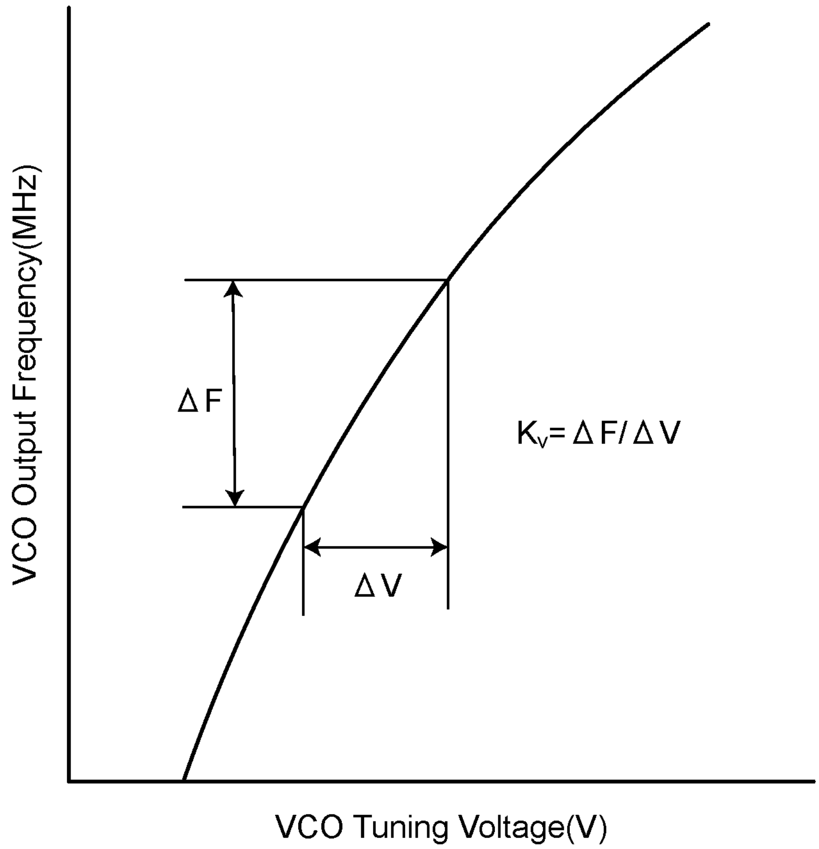

FIG.23

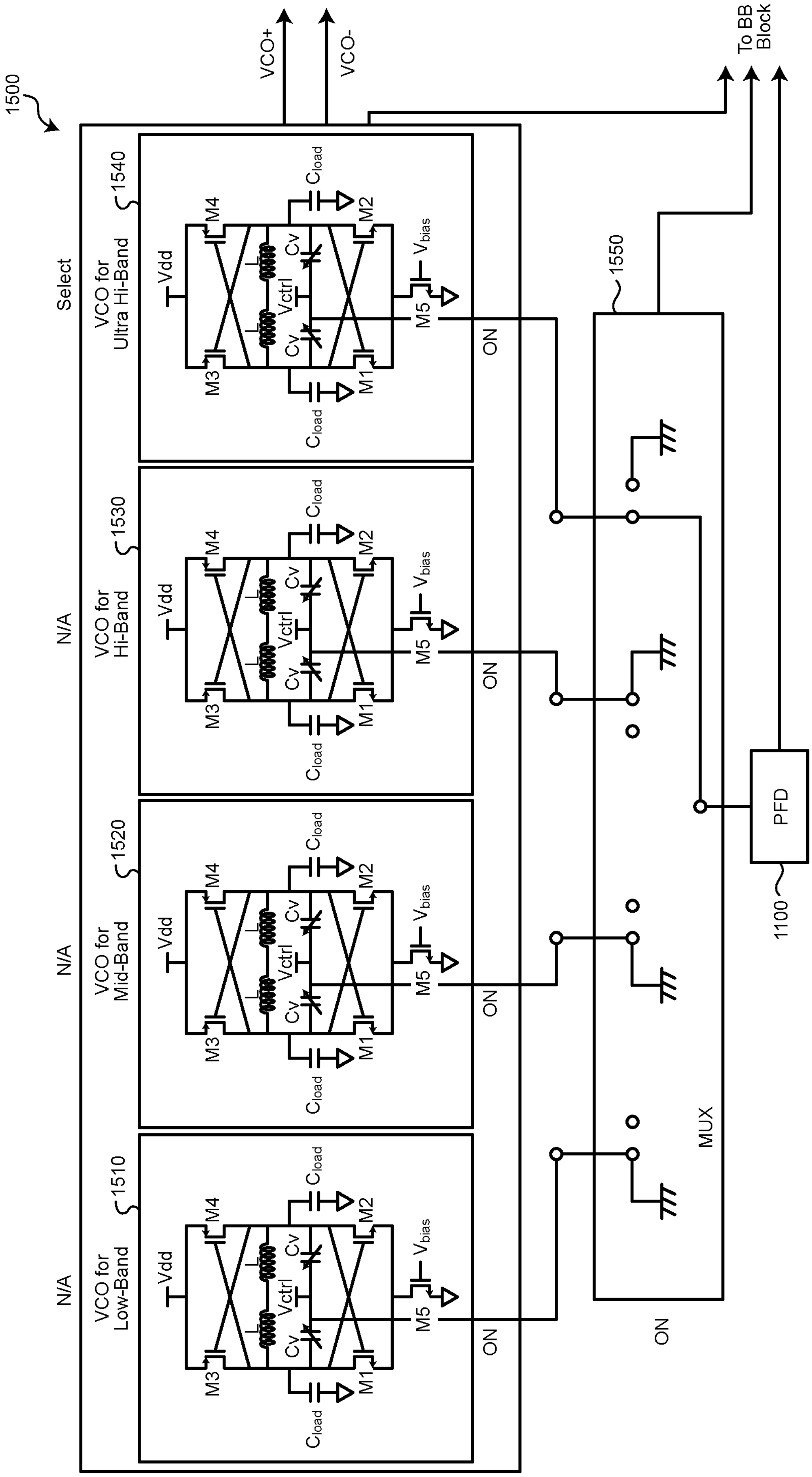
1500
VCO+
VCO-
To BB Block
Select
N/A
N/A
N/A
VCO for Ultra Hi-Band
VCO for Hi-Band
VCO for Mid-Band
VCO for Low-Band
1540
1530
1520
1510
Vdd
Vctrl
Cv
$C_{load}$
$V_{bias}$
M1
M2
M3
M4
M5
ON
1550
MUX
PFD
1100

FIG.24

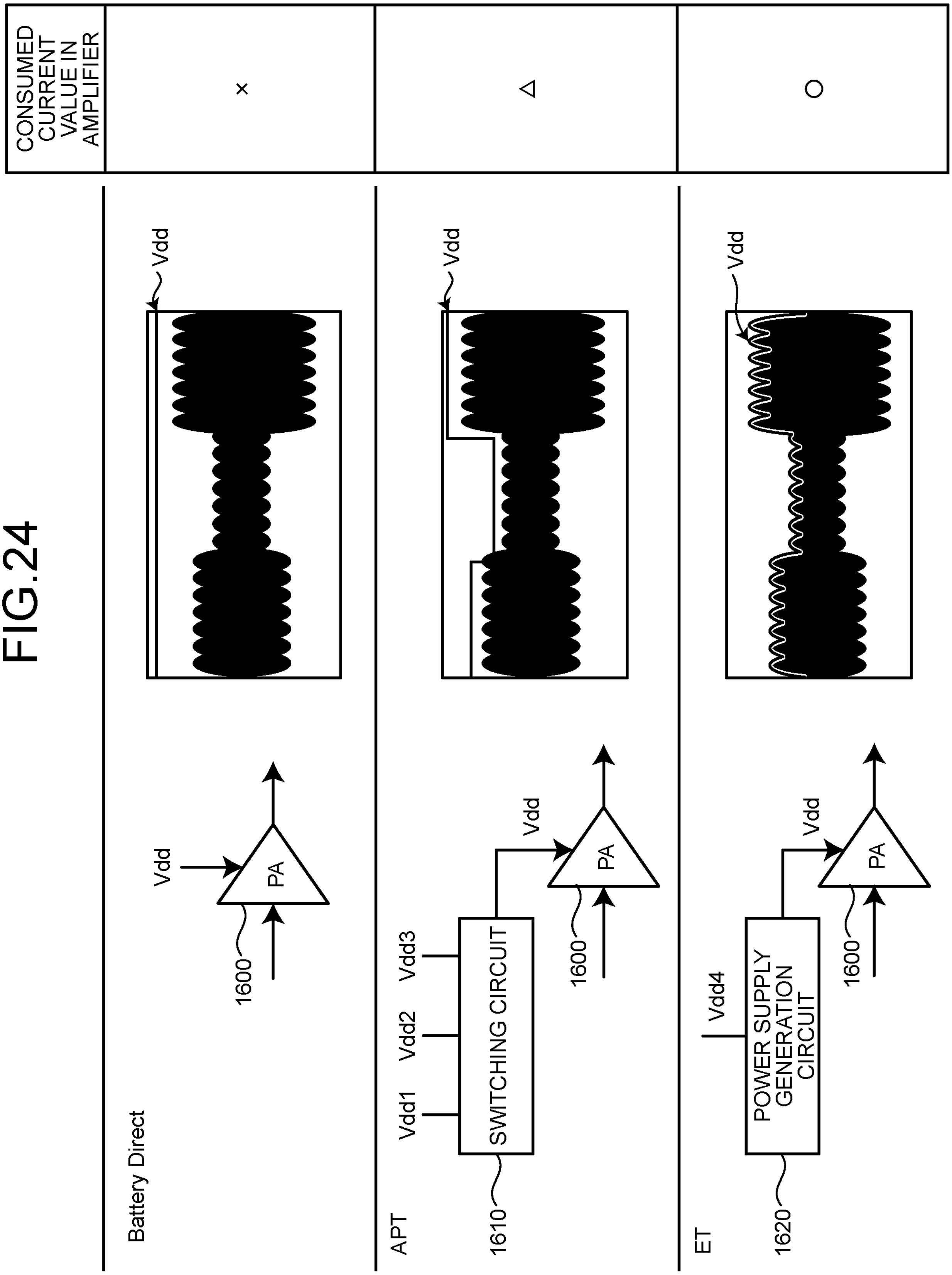
CONSUMED CURRENT VALUE IN AMPLIFIER
×
△
○
Battery Direct
Vdd
PA
1600
Vdd
APT
1610
SWITCHING CIRCUIT
Vdd1
Vdd2
Vdd3
Vdd
PA
1600
Vdd
ET
1620
POWER SUPPLY GENERATION CIRCUIT
Vdd4
Vdd
PA
1600
Vdd

FIG.25

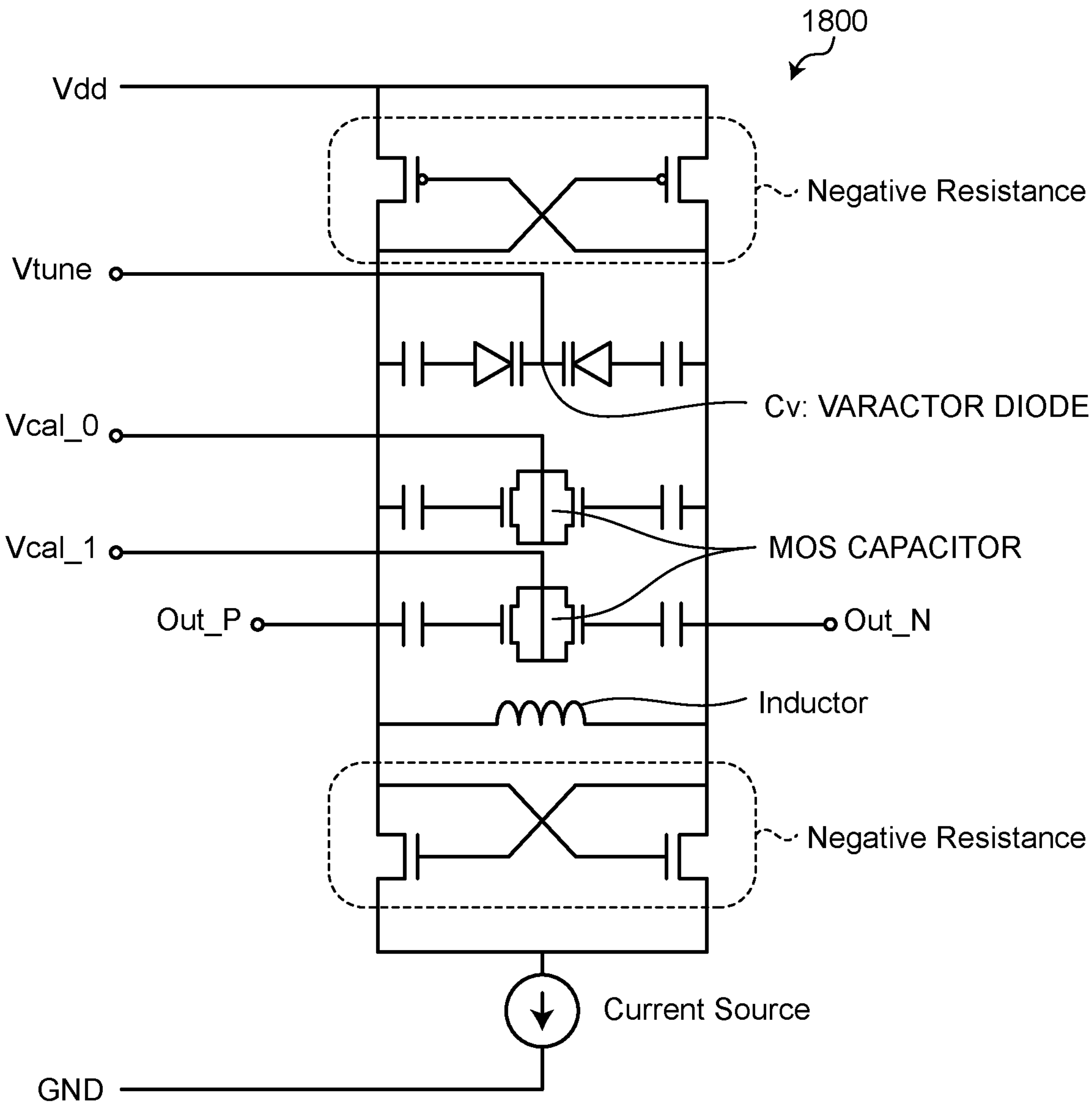
1800
Vdd
Negative Resistance
Vtune
Cv: VARACTOR DIODE
Vcal_0
MOS CAPACITOR
Vcal_1
Out_P
Out_N
Inductor
Negative Resistance
Current Source
GND

FIG.26

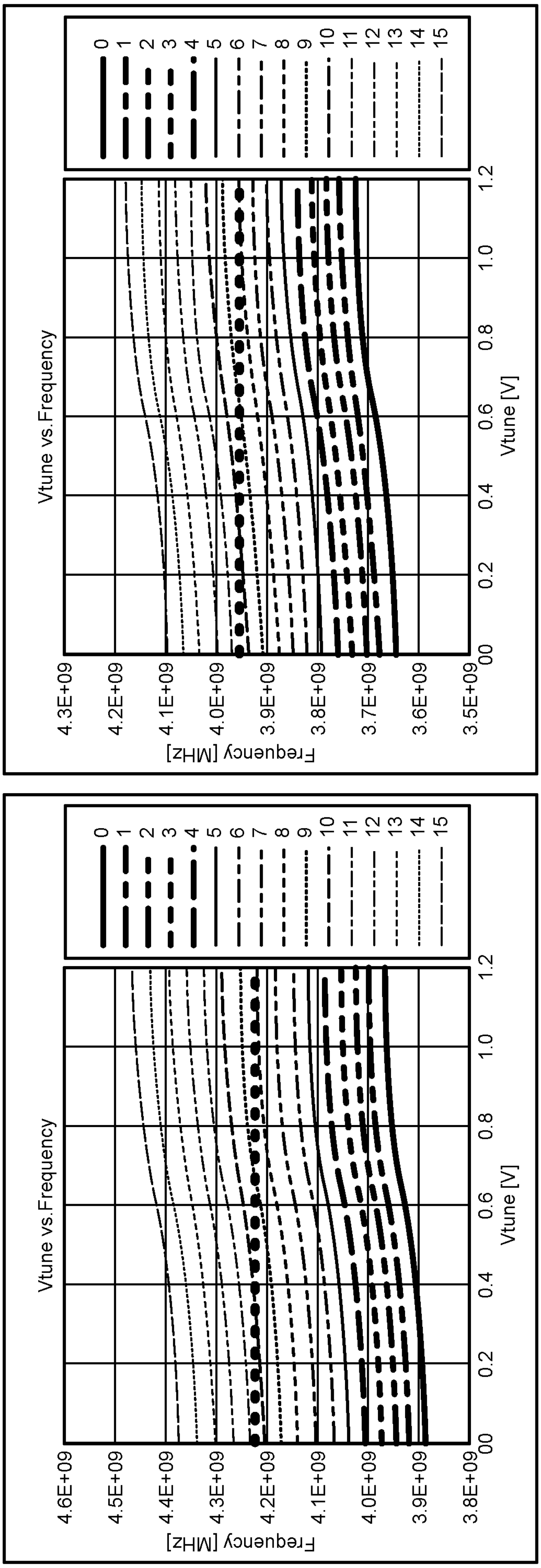
VCO1(4224M)
Vtune vs.Frequency
Frequency [MHz]
4.6E+09
4.5E+09
4.4E+09
4.3E+09
4.2E+09
4.1E+09
4.0E+09
3.9E+09
3.8E+09
00
0.2
0.4
0.6
0.8
1.0
1.2
Vtune [V]
0
1
2
3
4
5
6
7
8
9
10
11
12
13
14
15
VCO2(3960M)
Vtune vs.Frequency
Frequency [MHz]
4.3E+09
4.2E+09
4.1E+09
4.0E+09
3.9E+09
3.8E+09
3.7E+09
3.6E+09
3.5E+09
00
0.2
0.4
0.6
0.8
1.0
1.2
Vtune [V]
0
1
2
3
4
5
6
7
8
9
10
11
12
13
14
15

FIG.27

$$\mathrm{D.AC}(x,y) = 15 \cdot \left(1 + \frac{y^2 - x^2 \cdot y^2}{1 - x^2 \cdot y^2}\right)$$

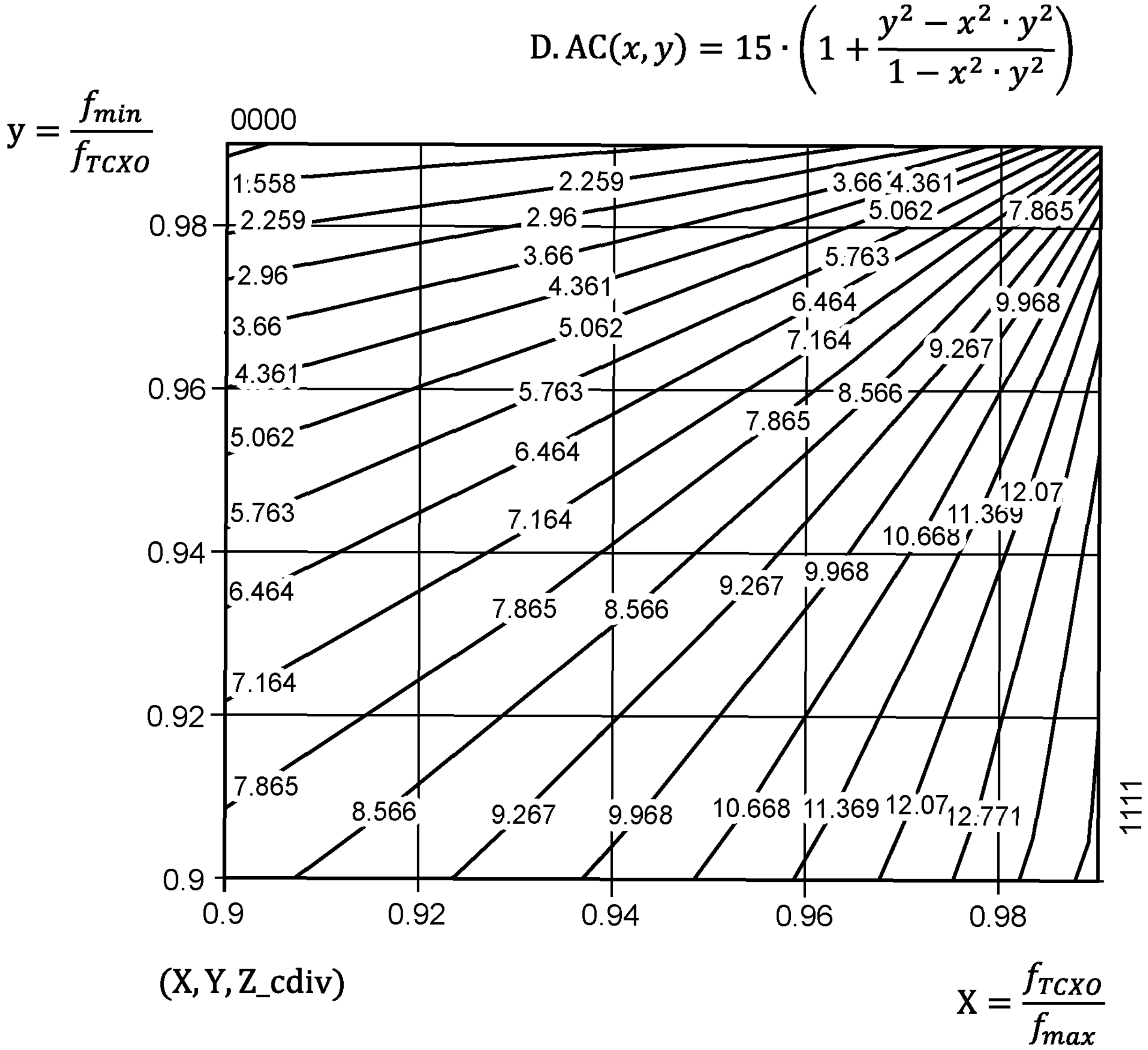

# FIG.28

Auto Tune Measurement Results

VCO1(4224M)

| FcDAC | Temperature[deg.] | | | | | |
|---|---|---|---|---|---|---|
| | -15 | 5 | 25 | 45 | 65 | 85 |
| 1100 | | | | | | |
| 1011 | | | | ○ | ○ | ○ |
| 1010 | | ○ | ○ | ○ | ▨○ | ▨○ |
| 1001 | ○ | ○ | ▨○ | ▨○ | ○ | ○ |
| 1000 | ○ | ▨○ | ○ | | | |
| 0111 | ▨○ | | | | | |
| 0110 | | | | | | |

VCO2(3960M)

| FcDAC | Temperature[deg.] | | | | | |
|---|---|---|---|---|---|---|
| | -15 | 5 | 25 | 45 | 65 | 85 |
| 1100 | | | | | ○ | ○ |
| 1011 | | | ○ | ○ | ▨○ | ▨○ |
| 1010 | | ○ | ○ | ▨○ | ○ | ○ |
| 1001 | ○ | ○ | ▨○ | ○ | | |
| 1000 | ○ | ▨○ | | | | |
| 0111 | ▨○ | | | | | |
| 0110 | | | | | | |

○ PLL locked

▨ Auto tuned value

FIG.29

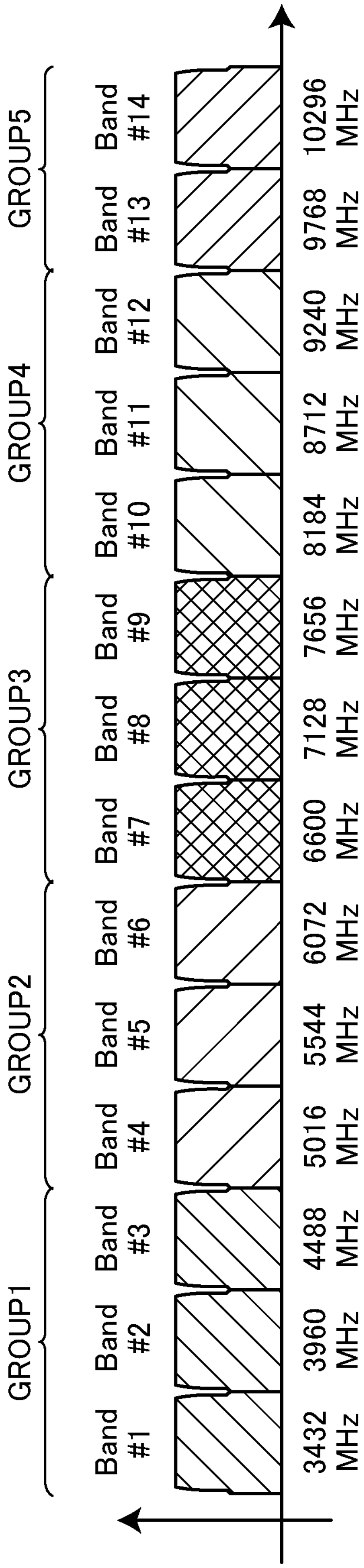
GROUP1
GROUP2
GROUP3
GROUP4
GROUP5
Band #1
Band #2
Band #3
Band #4
Band #5
Band #6
Band #7
Band #8
Band #9
Band #10
Band #11
Band #12
Band #13
Band #14
3432 MHz
3960 MHz
4488 MHz
5016 MHz
5544 MHz
6072 MHz
6600 MHz
7128 MHz
7656 MHz
8184 MHz
8712 MHz
9240 MHz
9768 MHz
10296 MHz

FIG.30

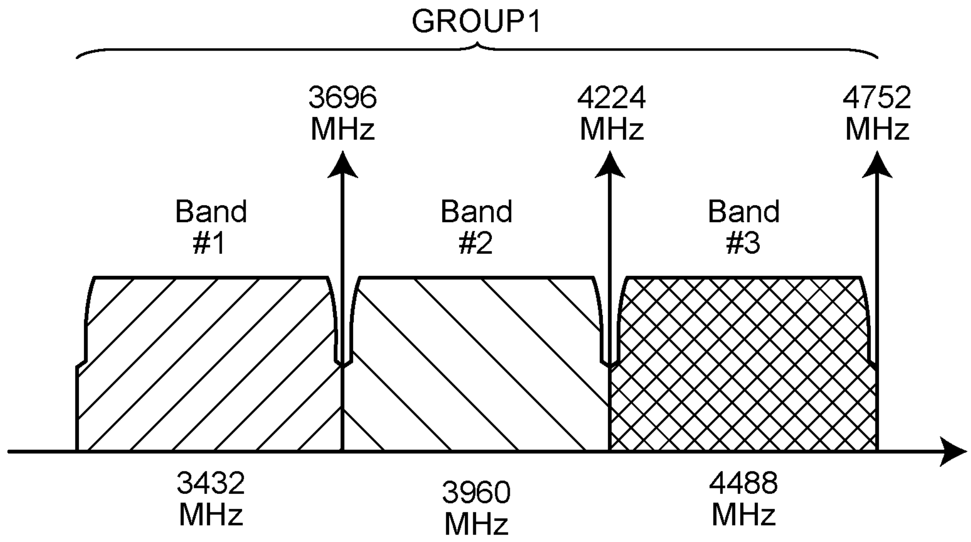
GROUP1
3696
MHz
4224
MHz
4752
MHz
Band
#1
Band
#2
Band
#3
3432
MHz
3960
MHz
4488
MHz

FIG.31

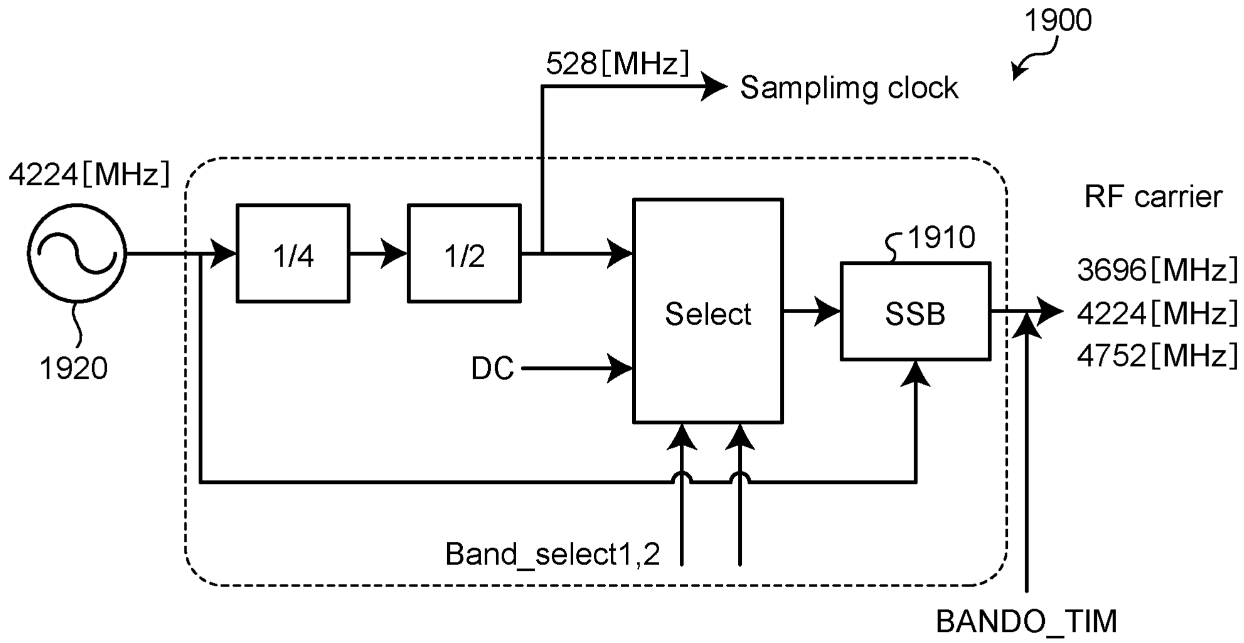
1900
528[MHz]
Samplimg clock
4224[MHz]
RF carrier
1/4
1/2
Select
1910
SSB
3696[MHz]
4224[MHz]
4752[MHz]
1920
DC
Band_select1,2
BANDO_TIM

FIG.32

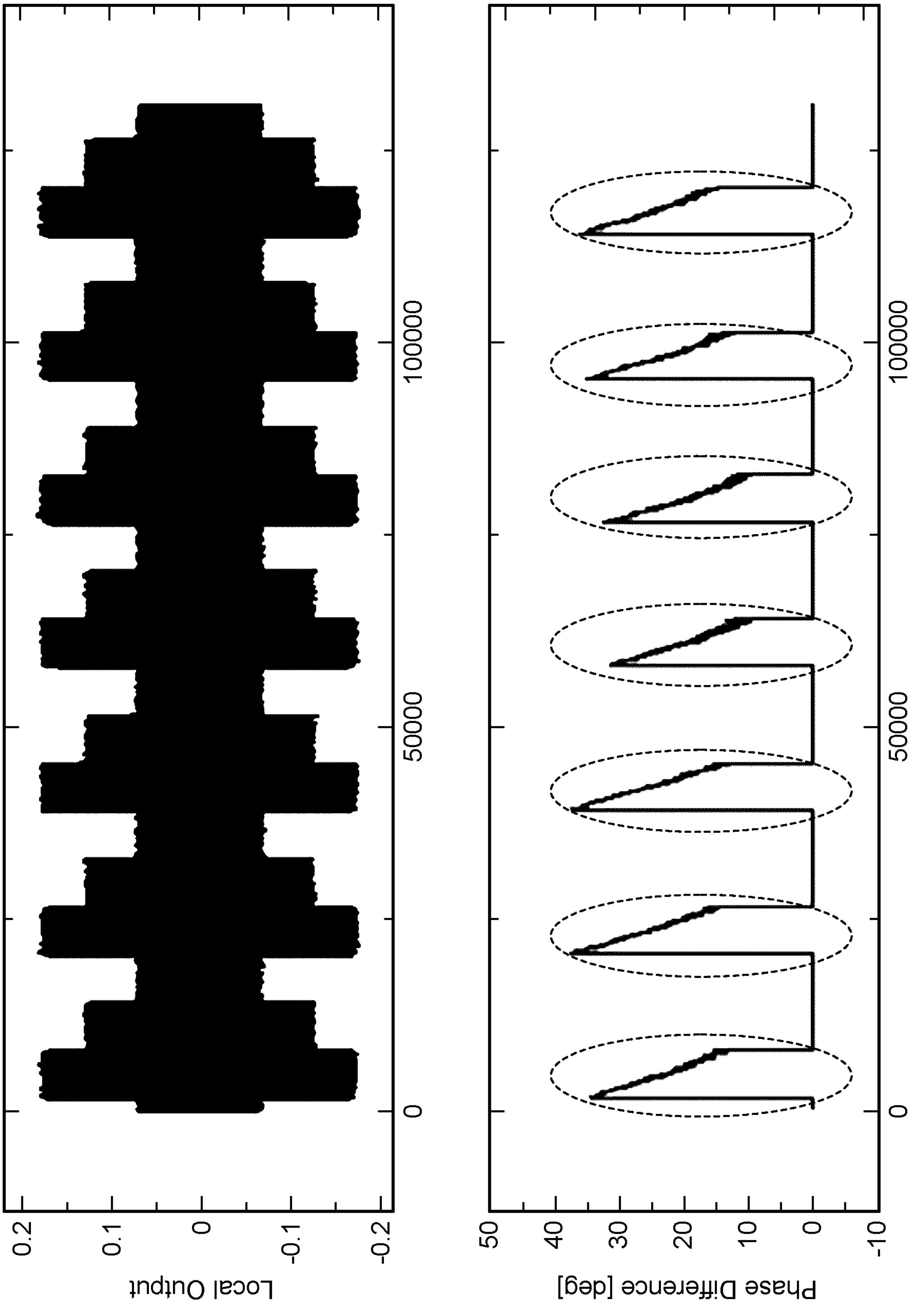
Local Output
0.2
0.1
0
-0.1
-0.2
0
50000
100000
Phase Difference [deg]
50
40
30
20
10
0
-10
0
50000
100000

FIG.33

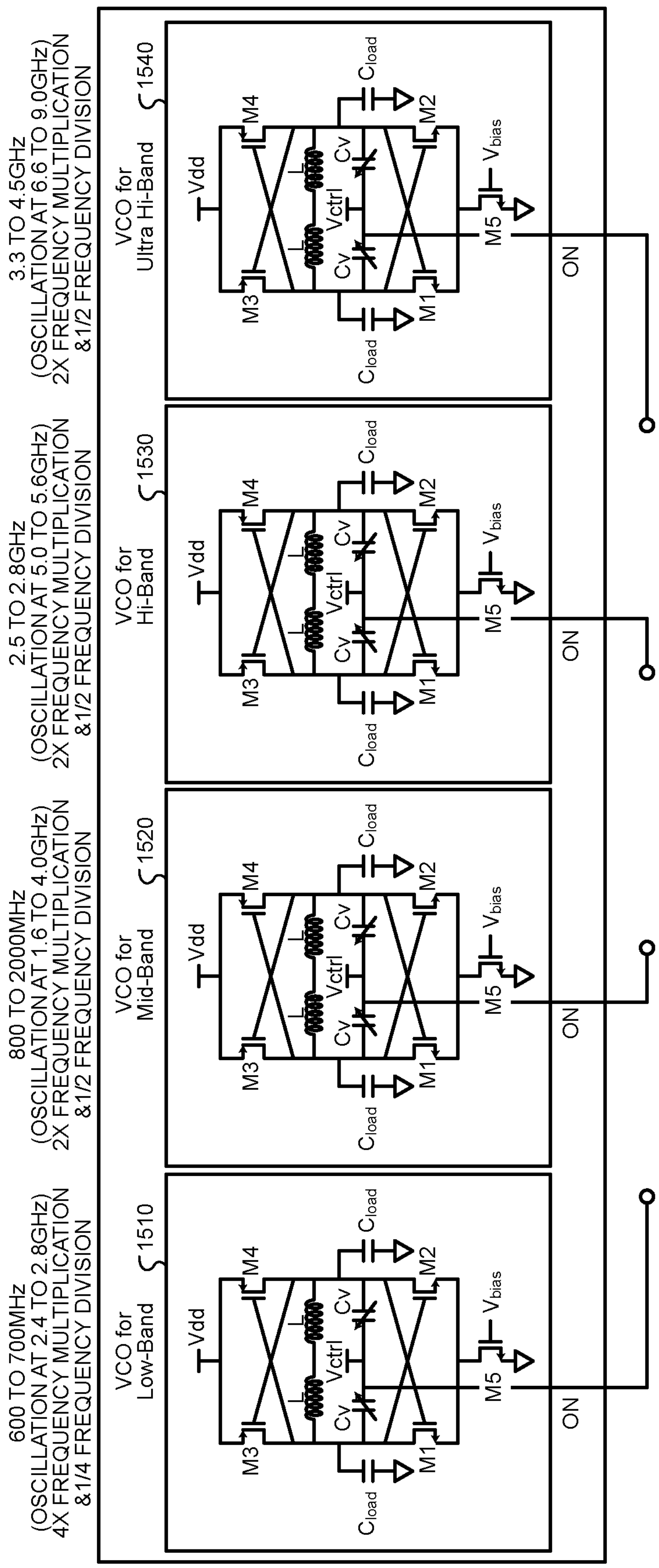
600 TO 700MHz
(OSCILLATION AT 2.4 TO 2.8GHz)
4X FREQUENCY MULTIPLICATION
&1/4 FREQUENCY DIVISION
800 TO 2000MHz
(OSCILLATION AT 1.6 TO 4.0GHz)
2X FREQUENCY MULTIPLICATION
&1/2 FREQUENCY DIVISION
2.5 TO 2.8GHz
(OSCILLATION AT 5.0 TO 5.6GHz)
2X FREQUENCY MULTIPLICATION
&1/2 FREQUENCY DIVISION
3.3 TO 4.5GHz
(OSCILLATION AT 6.6 TO 9.0GHz)
2X FREQUENCY MULTIPLICATION
&1/2 FREQUENCY DIVISION
1510
VCO for Low-Band
1520
VCO for Mid-Band
1530
VCO for Hi-Band
1540
VCO for Ultra Hi-Band
Vdd
M1
M2
M3
M4
M5
Cv
Vctrl
Cload
Vbias
ON

FIG.34

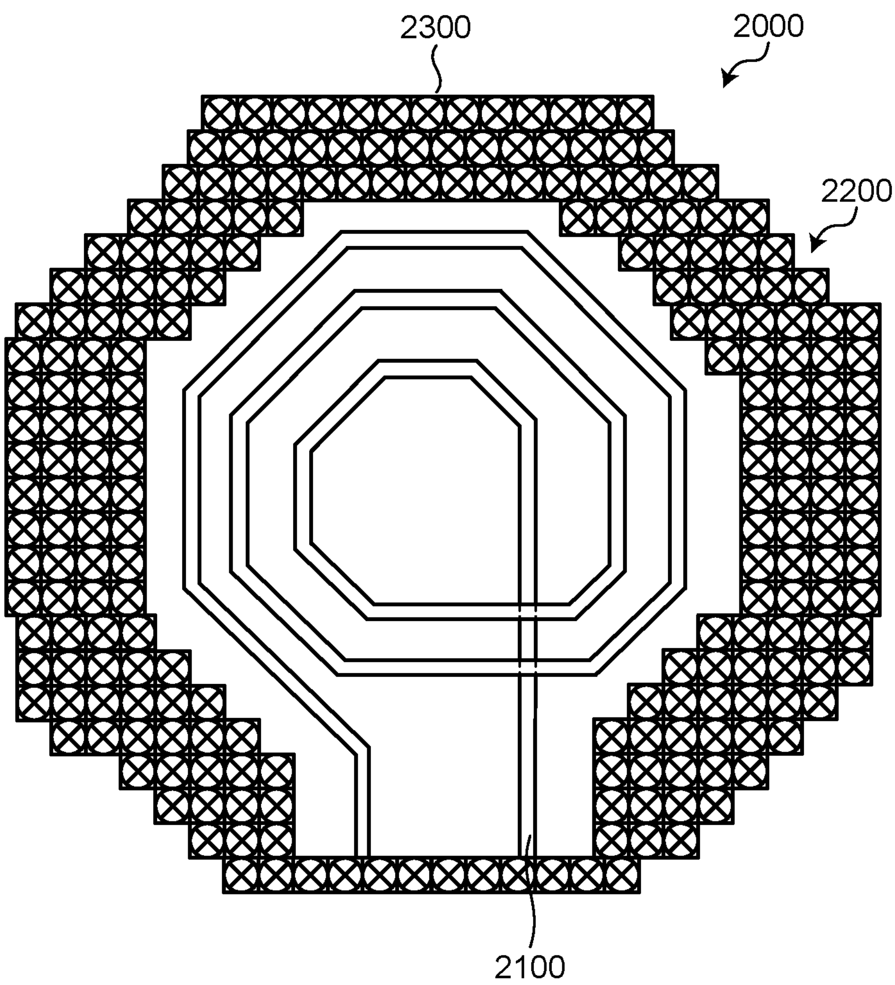

INTERNATIONAL SEARCH REPORT

International application No. **PCT/JP2023/034392**

**A. CLASSIFICATION OF SUBJECT MATTER**

***H04W 72/0457***(2023.01)i; ***H04W 8/24***(2009.01)i; ***H04W 16/28***(2009.01)i; ***H04W 72/0446***(2023.01)i
FI: H04W72/0457 110; H04W8/24; H04W16/28 130; H04W72/0446

According to International Patent Classification (IPC) or to both national classification and IPC

**B. FIELDS SEARCHED**

Minimum documentation searched (classification system followed by classification symbols)

H04W72/0457; H04W8/24; H04W16/28; H04W72/0446

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | ZTE CORPORATION. Consideration on Rel-18 UL Tx switching capability. 3GPP TSG RAN WG2 #119-e R2-2208107. 10 August 2022<br>in particular, 2.3 | 1-16 |
| Y | 3GPP TS 38.214 V17.3.0. 3rd Generation Partnership Project; Technical Specification Group Radio Access Network; NR; Physical layer procedures for data (Release 17). 21 September 2022, p. 172<br>in particular, 6.1.6 | 1-16 |
| Y | CATT. Discussion on Multi-carrier UL Tx switching scheme. 3GPP TSG RAN WG1 #110 R1-2206383. 12 August 2022<br>in particular, 2.1.2 | 1-16 |
| Y | QUALCOMM INCORPORATED. UL TX switching schemes for multiple TAGs. 3GPP TSG RAN WG4 #104-e R4-2214043. 10 August 2022<br>in particular, 3.2 | 4, 5 |
| Y | NOKIA. NOKIA SHANGHAI BELL. RRM core requirements for multi-carrier enhancements. 3GPP TSG RAN WG4 #104bis-e R4-2215788. 30 September 2022<br>in particular, 2 | 5 |

☑ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 November 2023** | **28 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**

International application No.
**PCT/JP2023/034392**

**C. DOCUMENTS CONSIDERED TO BE RELEVANT**

| Category* | Citation of document, with indication, where appropriate, of the relevant passages | Relevant to claim No. |
|---|---|---|
| Y | APPLE INC. On the support of multi-carrier UL Tx switching scheme. 3GPP TSG RAN WG1 #109-e R1- 2204263. 29 April 2022<br>in particular, 2.1 | 6, 10, 11 |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- *Draft Report of 3GPP TSG RAN WG1 #110 v0.2.0*, 22 October 2022